(19) Europäisches Patentamt
European Patent Office
Office européen des brevets

(11) **EP 3 403 393 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **17701278.8**

(22) Anmeldetag: **11.01.2017**

(51) Int Cl.:
*H04N 5/225* (2006.01)    *H04N 5/341* (2011.01)
*G02B 13/00* (2006.01)    *G02B 27/10* (2006.01)
*G02B 7/00* (2006.01)

(86) Internationale Anmeldenummer:
**PCT/EP2017/050490**

(87) Internationale Veröffentlichungsnummer:
**WO 2017/121762 (20.07.2017 Gazette 2017/29)**

(54) **MULTIAPERTURABBILDUNGSVORRICHTUNGEN, VERFAHREN ZUM HERSTELLEN DERSELBEN UND ABBILDUNGSSYSTEM**

MULTI-APERTURE IMAGING DEVICES, METHOD FOR PRODUCING SAME, AND IMAGING SYSTEM

DISPOSITIFS IMAGEURS À PLUSIEURS OUVERTURES, LEUR PROCÉDÉ DE FABRICATION ET SYSTÈME IMAGEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2016 DE 102016200287**

(43) Veröffentlichungstag der Anmeldung:
**21.11.2018 Patentblatt 2018/47**

(73) Patentinhaber: **Fraunhofer-Gesellschaft zur Förderung der angewandten Forschung e.V. 80686 München (DE)**

(72) Erfinder:
• **WIPPERMANN, Frank 98617 Meiningen (DE)**
• **BRÜCKNER, Andreas 07743 Jena (DE)**
• **REIMANN, Andreas 99510 Apolda Sulzbach (DE)**
• **BRÄUER, Andreas 07646 Schlöben (DE)**

(74) Vertreter: **König, Andreas Rudolf Schoppe, Zimmermann, Stöckeler Zinkler, Schenk & Partner mbB Patentanwälte Radlkoferstraße 2 81373 München (DE)**

(56) Entgegenhaltungen:
WO-A1-2014/168586    DE-A1-102013 209 819
DE-B3-102014 213 371    JP-A- 2005 109 622
US-A1- 2010 328 471    US-A1- 2014 111 650
US-A1- 2015 109 468

• WIPPERMANN F C ET AL: "Novel multi-aperture approach for miniaturized imaging systems", SPIE - INTERNATIONAL SOCIETY FOR OPTICAL ENGINEERING. PROCEEDINGS, S P I E - INTERNATIONAL SOCIETY FOR OPTICAL ENGINEERING, US, Bd. 9760, 15. März 2016 (2016-03-15), Seiten 97600S-97600S, XP060070249, ISSN: 0277-786X, DOI: 10.1117/12.2211698 ISBN: 978-1-5106-0753-8

**Beschreibung**

Die vorliegende Erfindung bezieht sich auf Multiaperturabbildungsvorrichtungen, insbesondere solche, die für mobile Geräte geeignet sind, auf Verfahren zum Herstellen derselben und auf ein Abbildungssystem. Die vorliegende Erfindung bezieht sich ferner auf ein Gehäusekonzept für Multiaperturabbildungssysteme mit linearer Kanalanordnung.

Konventionelle Kameras übertragen in einem Kanal das gesamte Gesichtsfeld und sind in ihrer Miniaturisierung begrenzt. In Smartphones werden zwei Kameras genutzt, die in und entgegen dem Richtungssinn der Flächennormale des Displays orientiert sind. In bekannten Multiaperturabbildungssystemen ist jedem Kanal ein zusammenhängender Teilobjektbereich zugeordnet, der in einen zusammenhängenden Teilbildbereich transformiert wird.

In konventionellen Kameras für Smartphones werden die Gehäuse für die Optiken mittels Spritzguss aus Kunststoff hergestellt. Kunststoffe besitzen hohe thermische Ausdehnungskoeffizienten und einen geringen Elastizitätsmodul, was bei einer thermischen Wechselbeanspruchung zu Deformationen führt. Insbesondere in Stereosystemen unter Nutzung zweier beabstandeter Kameras resultieren aus den Positions- und Lageänderungen Einschränkungen in der Qualität der Tiefeninformation. Bei Array-Kameras, bei denen die einzelnen Kanäle jeweils einen Teil des Gesichtsfelds sehen, kann es bei Dejustierungen zusätzlich zu Fehlern bei der Zusammensetzung der Gesamtbilder kommen.

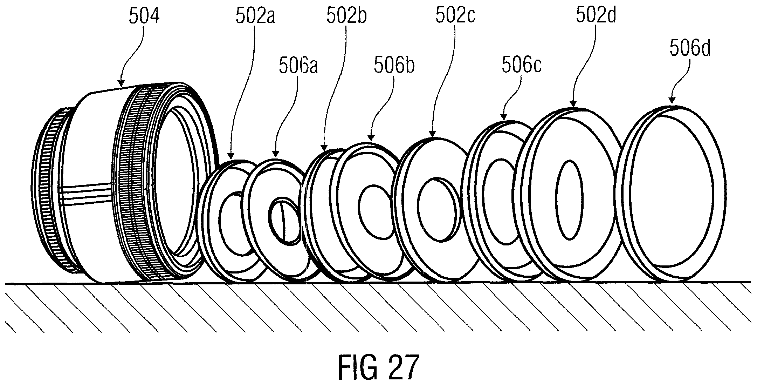

Konventionelle Kameras, wie sie beispielsweise in Fig. 27 dargestellt sind, bestehen aus einem einzigen Abbildungskanal. Die Linsen 502a bis 502d werden zumeist mittels Spritzguss hergestellt und haben eine kreisscheibenförmige Geometrie. Die Gehäuse 504 werden ebenso aus Kunststoffmaterialien mittels Spritzguss hergestellt, die infolgedessen große thermische Ausdehnungskoeffizienten aufweisen. Die Ausrichtung der Linse erfolgt anhand der Durchmesser der Linsen 502a bis 502d und entsprechender Aussparungen im Gehäuse 504 (Zentrierung) sowie den Dicken der einzelnen Linsenelemente unter Nutzung mechanischer Anschläge im Peripheriebereich der Linsen 502a bis 502d, um die optische Funktionsfläche herum. Zwischen den Linsen 502a bis 502d können Abstandshalter 506a bis 506c angeordnet sein. Ebenso kann der Linsenstapel über einen Abstandshalter 506d abgeschlossen werden. Da nur ein zusammenhängendes Bild entsteht, bewirken Temperaturänderungen lediglich eine Änderung der Abbildungsqualität (Bildschärfe), nicht jedoch das Auftreten störender Bildartefakte.

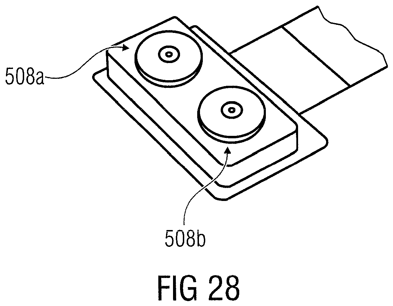

Für 3D-Aufnahmen werden zwei konventionelle Kameras genutzt, die einen Stereoaufbau bilden, wie es beispielsweise in Fig. 28 für Kameras 508a und 508b dargestellt ist. Infolge der hohen Ausdehnung der Kunststoffmaterialien resultieren negative Einflüsse auf die Qualität der 3D-Daten, da sich unkontrollierte Lageänderungen der Kameras 508a und 508b ergeben.

Es existieren weiterhin Array-Kamera-Anordnungen, die auf der Nutzung mehrerer Einzelkameras basieren und in US 2014/0111650 A1 beschrieben sind. Fig. 29 zeigt eine entsprechende Vorrichtung, bei der jeder Kanal 512a bis 512d einen Teil des Gesamtgesichtsfelds überträgt. Die Teilbilder werden nachträglich zum Gesamtgesichtsfeld zusammengesetzt. Änderungen der Temperatur bewirken unkontrollierbare Positionsänderungen der Kameras und damit eine fehlerhafte Bildzusammensetzung, die sich nachteilig auf die Bildqualität infolge Auftretens stark störender Bildartefakte auswirkt.

In JP 2005 109622 A ist ein Mehrfachlinsen-Abbildungsgerät beschrieben, das auf einen Antriebsmechanismus zum Anpassen eines Fokus verzichtet, selbst wenn eine Superteleskopfunktion und eine erhöhte Anzahl von Pixeln verwendet werden.

In WO 2014/168586 A1 bezieht sich darauf, die Auswirkungen der thermischen Ausdehnung / Kontraktion eines Linsenarraymaterials zu verringern oder zu mildern. Solche Merkmale umfassen Spannungsfreisetzungsschnitte in der Oberfläche (den Oberflächen) des Linsenarrays, einen Rahmen mit einer geringen Wärmeausdehnungskonstante (CTE), der in das Linsenarray eingebettet ist, oder Polymerfasern, die um das Linsenarray oder um das Linsenarraygehäuse gewickelt sind.

US 2010/0328471 A1 beschreibt ein Multi-Kanal-Kamerasystem in welchem unterschiedliche Kanäle unterschiedliche Öffnungswinkel aufweisen. Diese können dazu verwendet werden, um einen kontinuierlich digitalen Zoom zu berechnen.

In DE 10 2014 213 371 B3 ist eine Vorrichtung zur Erfassung eines Objektbereichs mit einem flachen Gehäuse mit einer ersten Hauptseite, einer zweiten Hauptseite, einer Randseite und einer Multiaperturvorrichtung mit einer Mehrzahl von lateral nebeneinander angeordneten und der Randseite zugewandten optischen Kanälen.

In US 2014/111650 A1 werden Verfahren und Vorrichtungen beschrieben, die eine Vielzahl von Bildsensoren verwenden, um ein Zielbild einer Szene aufzunehmen.

In US 2015/109468 A1 werden Verfahren und Vorrichtungen zum Steuern des Auslesens von Zeilen von Pixelwerten von Sensoren, die verschiedenen optischen Ketten entsprechen, die zum Erfassen von Teilen desselben Bildbereichs verwendet werden, beschrieben.

In DE 10 2013 209 819 A1 wird eine Vorrichtung mit einer optischen Struktur und Stegen beschrieben, bei der zwischen den Stegen und der tragenden Struktur Kleber angeordnet ist, wobei der Kleber wirksam ist, um nach dessen Ausheilung eine vorbestimmte Ausrichtung der optischen Struktur bezüglich einer Bezugsebene zu bewirken.

In "Novel multi-aperture approach for miniaturized imaging systems" (Wippermann et al., SPIE - International Society for Optical Engineering, Proceedings Bd. 9760, 15. März 2016) wird ein Aufbau einer Multiaperturabbildungsvorrichtung beschrieben.

Wünschenswert wäre demnach ein Konzept, das Multiaperturabbildungsvorrichtungen zum Erfassen eines Gesamtgesichtsfelds unter Gewährleistung einer hohen Bildqualität ermöglicht.

Die Aufgabe der vorliegenden Erfindung besteht deshalb darin, Multiaperturabbildungsvorrichtungen, Verfahren zum Herstellen derselben und ein Abbildungssystem zu schaffen, die im Betrieb eine zuverlässig hohe und gleichbleibende Bildqualität ermöglichen.

Diese Aufgabe wird durch den Gegenstand der unabhängigen Patentansprüche gelöst.

Ein Kerngedanke der vorliegenden Erfindung besteht darin, erkannt zu haben, dass durch eine Fixierung von Optiken der optischen Kanäle gegeneinander, das bedeutet eine Fixierung einer Optik bezüglich weiterer Optiken durch eine Wandstruktur eines Gehäuses eine von einer Temperaturänderung lediglich in einem geringen Umfang beeinflusste Bildqualität erhalten werden kann, so dass bei variierenden Umgebungsbedingungen eine nahezu gleichbleibend hohe Bildqualität der Multiaperturabbildungsvorrichtung erhalten wird. Hierbei wird nicht einfach ein Gehäusematerial ausgetauscht, sondern eine Wandstruktur umfassend Glas, Keramik oder ein kristallines Material angeordnet und/oder das Gehäuse aus aneinandergefügten ebenen oder gekrümmten plattenförmigen Strukturen gebildet und die Optiken gegeneinander an dem Gehäuse fixiert. Dies hat den Vorteil, dass eine Änderung von Abbildungseigenschaften in einem optischen Kanal, beispielsweise durch Temperaturänderungen, eine geringe oder vernachlässigbare Deformation des Gehäuses bewirkt, so dass ein Maß der Querbeeinflussung von Optiken optischer Kanäle untereinander durch eine Verformung derselben reduziert oder verhindert.

Gemäß einem Ausführungsbeispiel umfasst eine Multiaperturabbildungsvorrichtung zumindest einen Bildsensor und ein Array von nebeneinander angeordneten optischen Kanälen, wobei jeder optische Kanal eine Optik zur Abbildung zumindest eines Teilbereichs eines Objektbereichs auf einen Bildsensorbereich des Bildsensors aufweist. Das Array umfasst ein Gehäuse, das eine dem Bildsensor zugewandte oder abgewandte Wandstruktur aufweist, durch die die optischen Kanäle verlaufen. Das Gehäuse weist ferner eine an der Wandstruktur angeordnete Seitenwandstruktur auf, wobei die Wandstruktur oder die Seitenwandstruktur umfassend Glas, Keramik, Glaskeramik oder ein kristallines Material gebildet ist. In dem Gehäuse sind die Optiken der optischen Kanäle angeordnet. Die Wandstruktur ist mit Optiken der optischen Kanäle verbunden und fixiert die Optiken gegeneinander. Die Wandstruktur ist beispielsweise eine in Blickrichtung der optischen Kanäle angeordnete Vorder- oder Rückseite des Gehäuses. Eine Anordnung von Glas, Keramik oder einem kristallinen Material ermöglicht eine geringe temperaturbedingte Verformung des Gehäuses, insbesondere gegenüber Kunststoffmaterialien. Ferner ermöglicht die Fixierung der Optiken der optischen Kanäle gegeneinander an der Wandstruktur geringe Verformungskräfte von optischen Kanälen, die auf andere optische Kanäle einwirken. Neben der Fixierung zeichnet sich die Multiaperturabbildungsvorrichtung unter anderem dadurch aus, dass diese so ausgestaltet ist, dass die Optiken bezüglich einer benachbarten Trennwandstruktur berührungslos angeordnet oder mit einem weichen Material abgestützt sind, und bei der sich die Optiken bei einer thermisch induzierten Verformung entlang einer optischen Länge des optischen Kanals verformen und entlang einer Richtung senkrecht zu der optischen Länge des optischen Kanals verformen, wobei jeder optische Kanal von der Verformung in Richtung senkrecht zu der optischen Länge eines benachbarten optischen Kanals unbeeinflusst ist. Alternativ oder zusätzlich umfasst eine der Optiken eine Mehrzahl seriell angeordneter Optikelemente, die untereinander mechanisch verbunden sind, so dass die Optik entlang einer Richtung senkrecht zu einem Strahlengang durch die Optiken und entlang einer Zeilenerstreckungsrichtung des Arrays in einem Bereich von zumindest 50 % einer Länge des optischen Kanals entlang einer optischen Achse desselben berührungslos gegenüber anderen mechanischen Elementen angeordnet sind.

Gemäß einem weiteren Ausführungsbeispiel umfasst eine Multiaperturabbildungsvorrichtung zumindest einen Bildsensor und ein Array von nebeneinander angeordneten optischen Kanälen, wobei jeder optische Kanal eine Optik zur Abbildung zumindest eines Teilbereichs eines Objektbereichs auf einen Bildsensorbereich des Bildsensors aufweist. Das Array weist ein Gehäuse auf, in dem die Optiken der optischen Kanäle angeordnet und gegeneinander fixiert sind, wobei das Gehäuse aus aneinandergefügten plattenförmigen Strukturen gebildet ist und zumindest eine dem Bildsensor zugewandte oder abgewandte Wandstruktur aufweist und zumindest eine Seitenwandstruktur aufweist. Vorteilhaft an plattenförmigen Strukturen ist eine hohe Reproduzierbarkeit sowie eine hohe Definierbarkeit der Verformung der jeweiligen Strukturen. Ferner lassen sich Gehäuse aus plattenförmigen Strukturen sehr einfach aufbauen. Die Multiaperturabbildungsvorrichtung zeichnet sich unter anderem dadurch aus, dass Optiken bezüglich einer benachbarten Trennwandstruktur berührungslos angeordnet sind oder mit einem weichen Material abgestützt sind, und bei der sich die Optiken bei einer thermisch induzierten Verformung entlang einer optischen Länge des optischen Kanals verformen und entlang einer Richtung senkrecht zu der optischen Länge des optischen Kanals verformen, wobei jeder optische Kanal von der Verformung in Richtung senkrecht zu der optischen Länge eines benachbarten optischen Kanals unbeeinflusst ist. Alternativ oder zusätzlich umfasst eine der Optiken eine Mehrzahl seriell angeordneter Optikelemente, die untereinander mechanisch verbunden sind, so dass die Optik entlang einer Richtung senkrecht zu einem Strahlengang durch die Optiken und entlang einer Zeilenerstreckungsrichtung des Arrays in einem Bereich von zumindest 50 % einer Länge des optischen Kanals entlang einer optischen Achse desselben berührungslos gegenüber anderen mechanischen Elementen angeordnet sind.

Gemäß einem weiteren Ausführungsbeispiel umfasst eine Multiaperturabbildungsvorrichtung ein Gehäuse mit einer Wandstruktur umfassend Glas, Keramik oder einem kristallinen Material, wie oben ausgeführt, und ist so ausgeführt, dass das Gehäuse aus aneinandergefügten plattenförmigen Strukturen gebildet ist. Das bedeutet, die vorangehend beschriebenen Ausführungsbeispiele sind kombinierbar. Dies ermöglicht den Erhalt sämtlicher oben aufgeführter Vorteile, sowie den synergetischen Effekt, dass eine hohe Steifigkeit von Glas, Keramik oder dem kristallinen Material eine durch eine Verformung der Optiken der optischen Kanäle induzierte Verformungskraft in die Wandstruktur nicht oder nur in einem geringen Umfang weitergegeben wird.

Gemäß einem weiteren Ausführungsbeispiel umfasst ein Abbildungssystem, beispielsweise eine Bilderfassungsvorrichtung oder eine Vorrichtung mit einer solchen Bilderfassungsvorrichtung zumindest eine vorangehend beschriebene Multiaperturabbildungsvorrichtung.

Gemäß einem weiteren Ausführungsbeispiel umfasst ein Verfahren zum Herstellen einer Multiaperturabbildungsvorrichtung ein Bereitstellen zumindest eines Bildsensors und ein Anordnen von Optiken von optischen Kanälen, so dass diese ein Array von nebeneinander angeordneten optischen Kanälen bilden, und so dass jeder optische Kanal eine Optik zur Abbildung zumindest eines Teilbereichs eines Objektbereichs auf einen Bildsensorbereich des Bildsensors aufweist. Das Bilden des Arrays umfasst ein Anordnen der Optiken der optischen Kanäle in einem Gehäuse mit einer dem Bildsensor zugewandten oder abgewandten Wandstruktur umfassend Glas, Keramik oder einem kristallinen Material, so dass die Wandstruktur mit den Optiken der optischen Kanäle verbunden ist und die Optiken gegeneinander fixiert. Neben der Fixierung zeichnet sich das Verfahren unter anderem dadurch aus" dass das Anordnen der Optiken so erfolgt, dass die Optiken bezüglich einer benachbarten Trennwandstruktur berührungslos angeordnet oder mit einem weichen Material abgestützt sind, so dass die Optiken bei einer thermisch induzierten Verformung entlang einer optischen Länge des optischen Kanals und entlang einer Richtung senkrecht zu der optischen Länge des optischen Kanals jeder optische Kanal von der Verformung in Richtung senkrecht zu der optischen Länge eines benachbarten optischen Kanals unbeeinflusst ist. Alternativ oder zusätzlich erfolgt das Anordnen der Optiken so, dass eine der Optiken eine Mehrzahl seriell angeordneter Optikelemente umfasst, die untereinander mechanisch verbunden sind, so dass die Optik entlang einer Richtung senkrecht zu einem Strahlengang durch die Optiken und entlang einer Zeilenerstreckungsrichtung des Arrays in einem Bereich von zumindest 50 % einer Länge des optischen Kanals entlang einer optischen Achse desselben berührungslos gegenüber anderen mechanischen Elementen angeordnet sind.

Gemäß einem weiteren Ausführungsbeispiel umfasst ein Verfahren zum Herstellen einer Multiaperturabbildungsvorrichtung ein Bereitstellen zumindest eines Bildsensors, ein Anordnen von Optiken von optischen Kanälen, so dass diese ein Array von nebeneinander angeordneten optischen Kanälen bilden, und so dass jeder optische Kanal eine Optik zur Abbildung zumindest eines Teilbereichs eines Objektbereichs auf einen Bildsensorbereich des Bildsensors aufweist. Das Verfahren umfasst ferner ein Bilden eines Gehäuses aus aneinandergefügten plattenförmigen Strukturen, so dass das Gehäuse zumindest eine dem Bildsensor zugewandte oder abgewandte Wandstruktur aufweist und zumindest eine Seitenwandstruktur aufweist. Das Verfahren umfasst ferner ein Anordnen der Optiken der optischen Kanäle des Arrays in dem Gehäuse, so dass die Optiken gegeneinander fixiert sind. Das Verfahren zeichnet sich unter anderem dadurch aus, dass das Anordnen der Optiken wird so ausgeführt wird, dass die Optiken bezüglich einer benachbarten Trennwandstruktur berührungslos angeordnet oder mit einem weichen Material abgestützt sind, und dass die Optiken bei einer thermisch induzierten Verformung entlang einer optischen Länge des optischen Kanals und entlang einer Richtung senkrecht zu der optischen Länge des optischen Kanals jeder optische Kanal von der Verformung in Richtung senkrecht zu der optischen Länge eines benachbarten optischen Kanals unbeeinflusst ist. Alternativ oder zusätzlich erfolgt das Anordnen der Optiken so, dass eine der Optiken eine Mehrzahl seriell angeordneter Optikelemente umfasst, die untereinander mechanisch verbunden sind, so dass die Optik entlang einer Richtung senkrecht zu einem Strahlengang durch die Optiken und entlang einer Zeilenerstreckungsrichtung des Arrays in einem Bereich von zumindest 50 % einer Länge des optischen Kanals entlang einer optischen Achse desselben berührungslos gegenüber anderen mechanischen Elementen angeordnet sind.

Weitere vorteilhafte Ausführungsformen sind der Gegenstand der abhängigen Patentansprüche. Darüber hinaus sollten Ausführungsformen und Aspekte, die nicht durch die Ansprüche abgedeckt sind, nicht als Ausführungsformen der Erfindung, sondern als Beispiele zum Verständnis der Erfindung ausgelegt werden. Bevorzugte Ausführungsbeispiele der vorliegenden Erfindung werden nachfolgend Bezug nehmend auf die beiliegenden Zeichnungen erläutert. Es zeigen:

Fig. 1      eine schematische perspektivische Ansicht einer Multiaperturabbildungsvorrichtung gemäß einem Ausführungsbeispiel;

Fig. 2      eine schematische perspektivische Ansicht auf eine weitere Multiaperturabbildungsvorrichtung gemäß einem Ausführungsbeispiel;

Fig. 3      eine schematische Darstellung eines optischen Kanals gemäß einem Ausführungsbeispiel, der drei Linsen aufweist;

Fig. 4a      eine schematische Aufsicht auf eine Multiaperturabbildungsvorrichtung gemäß einem Ausführungsbeispiel, bei der zwischen Bildsensorbereichen eines Bildsensors jeweils eine zumindest teilweise opake Struktur angeordnet ist;

Fig. 4b      eine schematische Aufsicht auf eine Multiaperturabbildungsvorrichtung gemäß einem Ausführungsbeispiel, bei der ein optischer Kanal konfiguriert ist, um zwei Teilbereiche abzubilden;

Fig. 5a      eine schematische perspektivische Ansicht einer Seitenwandstruktur für eine Multiaperturabbildungsvorrichtung gemäß einem Ausführungsbeispiel;

Fig. 5b      eine schematische perspektivische Ansicht einer Trennwandstruktur für eine Multiaperturabbildungsvorrichtung gemäß einem Ausführungsbeispiel;

Fig. 5c      eine schematische perspektivische Ansicht einer Seitenwandstruktur für eine Multiaperturabbildungsvorrichtung gemäß einem Ausführungsbeispiel, die beispielsweise als Ober- und/oder Unterseite eines Gehäuses verwendbar ist;

Fig. 5d      eine schematische perspektivische Ansicht einer alternativen Seitenwandstruktur für eine Multiaperturabbildungsvorrichtung gemäß einem Ausführungsbeispiel;

Fig. 5e      eine schematische perspektivische Ansicht einer weiteren Seitenwandstruktur für eine Multiaperturabbildungsvorrichtung gemäß einem Ausführungsbeispiel, bei der Erhebungen als unterbrochener Rahmen gebildet sind;

Fig. 6      eine schematische perspektivische Ansicht eines Ausschnitts einer Wandstruktur für eine Multiaperturabbildungsvorrichtung gemäß einem Ausführungsbeispiel;

Fig. 7a      eine schematische perspektivische Ansicht einer möglichen Implementierungsform eines Gehäuses für eine Multiaperturabbildungsvorrichtung gemäß einem Ausführungsbeispiel;

Fig. 7b      das Gehäuse aus Fig. 7a, bei dem für jeden optischen Kanal mehrere Linsen angeordnet sind, wie sie im Zusammenhang mit der Fig. 3 beschrieben sind;

Fig. 8      eine schematische perspektivische Ansicht einer Multiaperturabbildungsvorrichtung gemäß einem Ausführungsbeispiel, bei der das Gehäuse, wie es beispielsweise in Fig. 7b beschrieben ist;

Fig. 9a      eine schematische Seitenschnittansicht einer Vorrichtung gemäß einem Ausführungsbeispiel in einem ersten Betriebszustand;

Fig. 9b      eine schematische Seitenschnittansicht der Vorrichtung aus Fig. 9a in einem zweiten Betriebszustand;

Fig. 10a      eine schematische Seitenschnittansicht einer Vorrichtung gemäß einem weiteren Ausführungsbeispiel, die eine Abdeckung aufweist;

Fig. 10b      eine schematische Seitenschnittansicht der Vorrichtung aus Fig. 10a in einem zweiten Betriebszustand;

Fig. 10c      eine schematische Seitenschnittansicht der Vorrichtung aus Fig. 10a in einer dritten Position;

Fig. 11a      eine schematische Seitenschnittansicht einer Vorrichtung gemäß einem weiteren Ausführungsbeispiel in dem ersten Betriebszustand, die eine zumindest teilweise transparente Abdeckung aufweist;

Fig. 11b      eine schematische Seitenschnittansicht der Vorrichtung aus Fig. 11a in dem zweiten Betriebszustand;

Fig. 11c      eine schematische Seitenschnittansicht der Vorrichtung aus Fig. 11a, bei der eine Strahlumlenkeinrichtung zusätzlich translatorisch bewegbar ist;

Fig. 12a      eine schematische Seitenschnittansicht einer Vorrichtung gemäß einem Ausführungsbeispiel in dem ersten Betriebszustand mit einer translatorischen verschiebbaren Abdeckung;

Fig. 12b — eine schematische Seitenschnittansicht der Vorrichtung aus Fig. 12a in dem zweiten Betriebszustand;

Fig. 13a — eine schematische Seitenschnittansicht einer Vorrichtung gemäß einem Ausführungsbeispiel, bei der die Abdeckung rotatorisch bewegbar angeordnet ist;

Fig. 13b — eine schematische Seitenschnittansicht der Vorrichtung aus Fig. 13a bei der ein Verfahrschlitten translatorisch bewegbar ist;

Fig. 13c — eine schematische Seitenschnittansicht der Vorrichtung aus Fig. 13a in dem zweiten Betriebszustand;

Fig.14a — eine schematische Seitenschnittansicht einer Vorrichtung gemäß einem Ausführungsbeispiel in dem ersten Betriebszustand, die gegenüber der Vorrichtung aus Fig. 13 zumindest teilweise transparente Abdeckungen aufweist;

Fig. 14b — eine schematische Seitenschnittansicht der Vorrichtung aus Fig. 14a, bei der die Strahlumlenkeinrichtung eine Zwischenposition zwischen einer ersten Position und einer zweiten Position aufweist;

Fig. 14c — eine schematische Seitenschnittansicht der Vorrichtung aus Fig. 14a, bei der die Strahlumlenkeinrichtung vollständig aus einem Gehäusevolumen herausgefahren ist;

Fig. 14d — eine schematische Seitenschnittansicht der Vorrichtung aus Fig. 14a, bei der ein Abstand zwischen den zumindest teilweise transparenten Abdeckungen verglichen mit den Fig. 14a-c vergrößert ist;

Fig. 15 — eine schematische perspektivische Ansicht einer Vorrichtung gemäß einem Ausführungsbeispiel, die drei Multiaperturabbildungsvorrichtungen aufweist;

Fig. 16 — eine vergrößerte perspektivische Ansicht eines Ausschnitts der Vorrichtung aus Fig. 15;

Fig. 17 — eine schematische perspektivische Ansicht einer Vorrichtung gemäß einem Ausführungsbeispiel bei der die Strahlumlenkeinrichtung mittels Befestigungselementen mit der Multiaperturabbildungsvorrichtung verbunden ist;

Fig. 18a — eine schematische perspektivische Ansicht einer Vorrichtung gemäß einem Ausführungsbeispiel in dem ersten Betriebszustand mit einer exemplarischen Form einer Abdeckung;

Fig. 18b — eine schematische Ansicht der Vorrichtung aus Fig. 18a in dem zweiten Betriebszustand gemäß einem Ausführungsbeispiel;

Fig. 18c — eine schematische Darstellung einer Alternative zu Fig. 18a gemäß einem Ausführungsbeispiel;

Fig. 19a-c — detaillierte Darstellungen einer Multiaperturabbildungsvorrichtung gemäß einem Ausführungsbeispiel;

Fig. 19d-f — Ausgestaltungsformen der Multiaperturabbildungsvorrichtung gem. Fig. 19a-c für den Fall von einem gemeinsamen Träger gehalterten Optiken von optischen Kanälen gemäß einem Ausführungsbeispiel;

Fig. 20 — die Multiaperturabbildungsvorrichtung gem. Fig. 19a-c, die gemäß einem Ausführungsbeispiel um zusätzliche Einrichtungen zur für Realisierung von Relativbewegungen für eine optische Bildstabilisierung und zur Anpassung der Fokussierung ergänzt wird;

Fig. 21a — eine schematische Ansicht einer in einem flachen Gehäuse angeordnete Multiaperturabbildungsvorrichtung gem. einem Ausführungsbeispiel;

Fig. 21b — einen schematischen Aufbau einer Multiaperturabbildungsvorrichtung zum stereoskopischen Erfassen eines Gesamtgesichtsfeldes;

Fig. 22 — eine schematische Ansicht einer 3D-Multiaperturabbildungsvorrichtung gemäß einem Ausführungsbeispiel;

Fig. 23a — eine schematische Ansicht einer weiteren Multiaperturabbildungsvorrichtung gemäß einem Ausführungsbeispiel, die gemäß einem Ausführungsbeispiel um zusätzliche Einrichtungen zur für Realisierung von Relativbewegungen für eine Fokussteuerung und zur optischen Bildstabilisierung ergänzt wird;

Fig. 23b-23e schematische Seitenansichten einer Strahlumlenkvorrichtung gemäß einem Ausführungsbeispiel;

Fig. 24a eine schematische Ansicht einer Multiaperturabbildungsvorrichtung mit einer Einstelleinrichtung zum kanalindividuellen Einstellen optischer Eigenschaften, gemäße einem Ausführungsbeispiel;

Fig. 24b eine Variante einer Multiaperturabbildungsvorrichtung mit der Einstelleinrichtung gemäß einem Ausführungsbeispiel;

Fig. 25 eine schematische Ansicht der um zusätzliche Aktoren ergänzten Vorrichtung aus Fig. 23a gemäß einem Ausführungsbeispiel;

Fig. 26 eine schematische Ansicht einer Anordnung von Aktoren in einer Multiaperturabbildungsvorrichtung gemäß einem Ausführungsbeispiel;

Fig. 27 eine Ansicht von Komponenten einer konventionellen Kamera mit einem einzigen Abbildungskanal;

Fig. 28 eine Ansicht eines Stereoaufbaus konventioneller Kameras; und

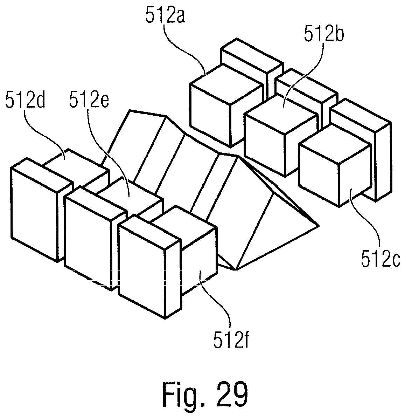

Fig. 29 eine Ansicht einer Array-Kamera-Anordnung, die auf der Nutzung mehrerer Einzelkameras basiert.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

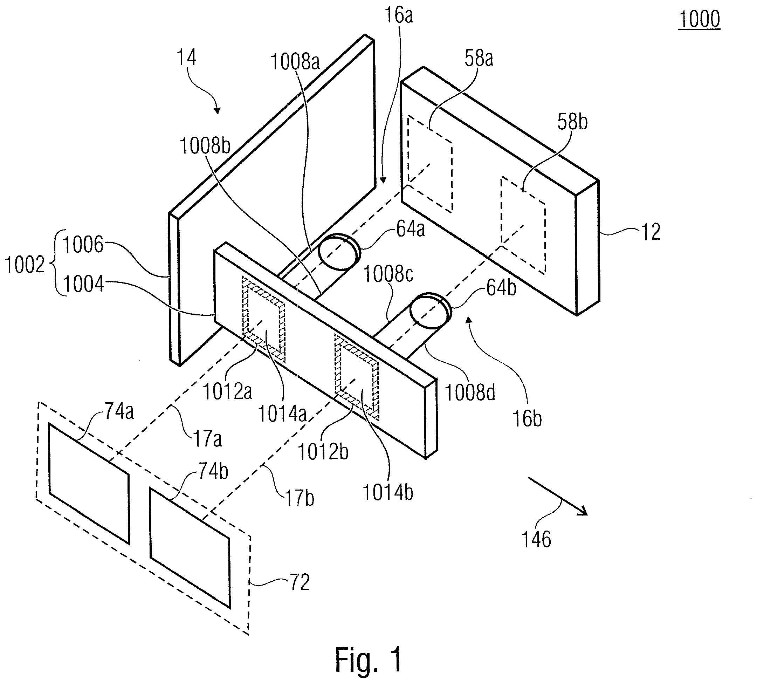

Fig. 1 zeigt eine schematische perspektivische Ansicht einer Multiaperturabbildungsvorrichtung 1000 gemäß einem Ausführungsbeispiel. Die Multiaperturabbildungsvorrichtung umfasst einen Bildsensor 12 und ein Array 14 von nebeneinander angeordneten optischen Kanälen 16a und 16b. Jeder optische Kanal 16a und 16b umfasst eine Optik 64a oder 64b zur Abbildung zumindest eines Teilbereichs 74a oder 74b eines Objektbereichs 72 auf einen Bildsensorbereich 58a bzw. 58b des Bildsensors 12. Obwohl die Teilbereiche 74a und 74b so dargestellt sind, dass sie disjunkt in dem Objektbereich 72 sind, können die Teilbereiche 74a und 74b auch direkt aneinander angrenzen oder teilweise, d.h. unvollständig, miteinander überlappen. Die Multiaperturabbildungsvorrichtung 1000 kann ausgebildet sein, um den Objektbereich vollständig abzutasten, d. h. um ein vollständiges Bild bereitzustellen. Alternativ oder zusätzlich kann die Multiaperturabbildungsvorrichtung 1000 ausgebildet sein, um zumindest einen Teilbereich 74a und/oder 74b des Objektbereichs 72 durch zumindest zwei optische Kanäle auf zumindest zwei Bildsensorbereiche abzubilden. Dies ermöglicht eine Aufnahme des Objektbereichs mit einer höheren Auflösung durch Nutzung der Superresolution und oder eine zumindest stereoskope Erfassung des Objektbereichs 72.

Der Objektbereich 72 kann auch als Gesichtsfeld der Multiaperturabbildungsvorrichtung 1000 bezeichnet werden und einen Bereich darstellen, der durch die Multiaperturabbildungsvorrichtung 1000 abgebildet wird. Die Teilbereiche 74a und 74b können auch als Teilgesichtsfelder des Gesichtsfelds 72 bezeichnet werden.

Das Array 14 umfasst ein Gehäuse 1002. Das Gehäuse 1002 umfasst eine Wandstruktur 1004, die entlang einer Zeilenerstreckungsrichtung 146 und senkrecht zu einer axialen Erstreckungsrichtung von Strahlengängen 17a-b der optischen Kanäle 16a-b angeordnet ist. Die Wandstruktur 1004 kann von den Optiken 64a-b ausgehend dem Bildsensor 12 zugewandt (nicht dargestellt) und/oder abgewandt (dargestellt) angeordnet sein. Die beabstandet von dem Bildsensor 12 dargestellte Wandstruktur 1004 kann auch so beschrieben werden, dass sie eine Eintrittsseite der Strahlengänge 17a-b der optischen Kanäle 16a-b des Arrays 14 bildet. Eine alternativ oder zusätzlich zu der Wandstruktur 1004 dem Bildsensor zugewandt angeordnete Wandstruktur kann als eine Austrittsseite des Arrays 14 bezeichnet werden. Das Gehäuse 1002 weist eine Seitenwandstruktur 1006 auf, die an der Wandstruktur 1004 angeordnet ist und konfiguriert ist, um einen Eintritt von Falschlicht, das bedeutet für eine Aufnahme der Multiaperturabbildungsvorrichtung 1000 ungewünschte oder störende Strahlung, zu reduzieren oder zu verhindern. Obwohl die Seitenwandstruktur 1006 so dargestellt ist, dass sie an einer lateralen Seite der Wandstruktur 1004 entlang oder entgegengesetzt zu der Zeilenerstreckungsrichtung 146 angeordnet ist, kann die Seitenwandstruktur 1006 auch an einer anderen Seite der Wandstruktur 1004 angeordnet sein und eine Seite der optischen Kanäle 46a und 64b vor äußerem Licht abschirmen. Alternativ können auch weitere Seitenwandstrukturen und eine weitere, dem Bildsensor 12 zugewandte Wandstruktur angeordnet sein, um ein vollständiges Gehäuse zu bilden.

Die Optiken 64a und 64b sind mit der Wandstruktur 1004 mechanisch verbunden oder mechanisch fest verbunden. Hierfür ist beispielsweise vorgesehen, dass die Optik 64a über mechanische Befestigungselemente 1008a und/oder 1008b mechanisch fest mit der Wandstruktur 1004 verbunden ist. Die Befestigungselemente 1008a und 1008b können als Haltestege oder Befestigungsstege aus einem beliebigen Material, etwa einem Kunststoffmaterial, einem Metallmaterial und/oder einem kristallinen Material, gebildet sein. Alternativ oder zusätzlich kann vorgesehen sein, dass die Optik 64a mittels eines Klebstoffs mit der Wandstruktur 1004 mechanisch fest verbunden ist. Die Optik 64b kann über Befestigungselemente 1008c und/oder 1008d mit der Wandstruktur 1004 verbunden sein und/oder mit dieser verklebt sein.

Gemäß einer ersten bevorzugten Ausführungsform umfasst die Wandstruktur 1004 und/oder die Seitenwandstruktur 1006 ein Glasmaterial, ein Keramikmaterial, ein Glaskeramikmaterial oder ein kristallines Material, etwa Silizium oder Polysilizium. Die Wandstruktur 1004 kann so ausgebildet sein dass sie zumindest in Bereichen 1014a-b, in denen Strahlengänge 17a-b der optischen Kanäle 16a-b durch die Wandstruktur verlaufen, transparent ist, etwa indem das Glasmaterial, die Keramik oder das kristalline Material für einen Nutzwellenlängenbereich einer von der Multiaperturabbildungsvorrichtung 1000 zu erfassenden Strahlung transparent ausgebildet ist. Dies ermöglicht, dass die optischen Kanäle 64a und 64b durch das Material der Wandstruktur 1004 hindurch verlaufen. Hierfür können transparente Bereiche 1014a und 1014b vorgesehen sein, die gegebenenfalls von Blendenstrukturen 1012a bzw. 1012b umschlossen sind. Die optischen Kanäle 16a und 16b können durch die transparenten Bereiche 1014a und 1014b hin zu dem Objektbereich 72 blicken. Eine dem Bildsensor 12 zugewandte Wandstruktur kann transparente Bereiche 1014a und 1014b aufweisen, so dass die optischen Kanäle hin zu dem Bildsensor 12 blicken. Die transparenten Bereiche 1014a und 1014b können aus dem Material der Wandstruktur 1004 bestehen oder diese umfassen, wenn dieses für den relevanten Wellenlängenbereich transparent oder zumindest teilweise transparent ist. "Zumindest teilweise transparent" bedeutet, dass eine geringe oder akzeptable optische Dämpfung erfolgt. Alternativ können die transparenten Bereiche 1014a und/oder 1014b als Öffnungen in der Wandstruktur, das bedeutet als Aussparungen, gebildet sein. Alternativ können die transparenten Bereiche 1014a und/oder 1014b ein transparentes oder zumindest teilweise transparentes Material aufweisen und von einem weniger transparenten, d. h. zumindest teilweise opaken Material der Wandstruktur 1004 umschlossen sein. An oder in den transparenten Bereichen 1014a-b können optisch aktive Bereiche gebildet sein, etwa Linsen. Das bedeutet, in dem transparenten Bereich 1014 kann auch zumindest eine Linse gebildet sein, die eine Beeinflussung des jeweiligen Strahlengangs 17a-b vornimmt.

Die Blendenstrukturen 1012a und 1012b können ausgebildet sein, um einen Blickwinkel oder Sichtbereich der optischen Kanäle 16a und 16b begrenzen bzw. einen Eintritt von Falschlicht aus Bereichen außerhalb der Teilbereiche 74a bzw. 74b hin zu dem jeweiligen Bildsensorbereich 58a oder 58b reduzieren oder verhindern. Gemäß einer Ausführungsform ist die Wandstruktur 1004 mit Ausnahme der Bereiche, an denen die optischen Kanäle 16a und 16b durch die Wandstruktur 1004 hindurch verlaufen von einer zumindest teilweise opaken Schicht bedeckt, die die Blendenstruktur 1012a und 1012b formt. Gemäß einer weiteren Ausführungsform ist die Blendenstruktur 1012a und/oder 1012b als randförmige Struktur um die transparenten Bereiche 1014a und/oder 1014b gebildet. Das bedeutet, dass an der Wandstruktur 1004 optische Blenden 1012 angeordnet sein können, die ausgebildet sind, um den Strahlengang 17a und 17b entlang einer Richtung senkrecht zu einem Verlauf des Strahlengangs 17a bzw. 17b zu begrenzen. Vorteilhaft an den Blendenstrukturen 1012a und 1012b ist, dass eine exakte Definition der Teilobjektbereiche 74a und 74b ermöglicht ist.

Gemäß einer weiteren bevorzugten Ausführungsform ist das Gehäuse 1002 aus aneinandergefügten plattenförmigen Strukturen, d. h. zumindest der Wandstruktur 1004 und der Seitenwandstruktur 1006, gebildet. Eine Aneinanderfügung von Plattenstrukturen zum Erhalt des Gehäuses 1002 ermöglicht eine Fertigung des Gehäuses 1002 mit einer geringen Fertigungstoleranz und mit schnellen und günstigen Fertigungsprozessen, so dass sowohl die Plattenstrukturen 1004 und 1006 als auch das Gehäuse 1002 günstig zu fertigen sind. Plattenförmige Strukturen können eben ausgebildet sein, können alternativ oder aber auch eine Krümmung entlang einer oder zweier Raumrichtungen aufweisen. Eine plattenförmige Struktur kann so verstanden werden, dass eine Ausdehnung der Struktur entlang zumindest einer Raumrichtung über einen Verlauf der Struktur im Wesentlichen gleich oder konstant bleibt, wie es etwa bei ebenen Platten gegeben ist.

Merkmale der beiden bevorzugten Ausführungsformen können ohne Einschränkungen mit einander kombiniert werden. Hierin beschriebene detaillierte Ausführungen sind ebenfalls mit beiden Ausführungsformen kombinierbar.

Bezüglich eines Verlaufs der Strahlengänge 17a und 17b von dem Objektbereich 72 hin zu dem Bildsensor 12 können Wandstrukturen als Eintrittsseite und Austrittsseite oder als Vorderseite und Rückseite bezeichnet werden, ohne dass diese Bezeichnung eine einschränkende Wirkung entfalten soll. Andere Seiten des Gehäuses, beispielsweise die dargestellte Seitenwandstruktur 1006, eine gegenüberliegende Seitenwandstruktur, aber auch Plattenstrukturen, die als Oberseite und/oder Unterseite bezeichnet werden können, werden nachfolgend einheitlich als Seitenwandstrukturen bezeichnet. Dies bedeutet vereinfacht, dass Seitenwandstrukturen an Seiten des Gehäuses 1002 angeordnet sein können, die nicht von einer Wandstruktur 1004 gebildet werden. Ferner kann das Gehäuse 1002 die Wandstruktur 1004 und/oder eine andere oder weitere Wandstruktur aufweisen. Zusätzlich zu der Wandstruktur angeordnete Seitenwandstrukturen, etwa die Seitenwandstruktur 1006, können angeordnet sein, um einen Eintritt von Falschlicht in das Innere des Gehäuses 1002 und/oder hin zu den optischen Kanälen 16a und 16b und/oder zu den Bildsensorbereichen 58a und 58b zu reduzieren oder zu verhindern. Das bedeutet auch, dass Seitenwandstrukturen aus opaken Materialien gebildet sein können und/oder mit einer opaken Schicht bedeckt sein können, um einen Eintritt von Falschlicht zu reduzieren oder zu verhindern. Alternativ kann auf die Anwendung von Seitenwandstrukturen 1006 auch verzichtet werden, beispielsweise wenn ein Eintritt von Falschlicht durch bauliche Eigenschaften der Multiaperturabbildungsvorrichtung 1000 nicht zu befürchten oder nicht schädlich ist. Beispielsweise kann die Multiaperturabbildungsvorrichtung 1000 in einem Gehäuse angeordnet sein, etwa in einem Smartphone, einem Tablet oder einer sonstigen Vorrichtung, so dass ein Eintritt von Falschlicht nicht zu befürchten ist.

Gemäß später detailliert beschriebenen Ausführungsformen kann das Gehäuse 1002 aber auch als nahezu geschlossenes Gehäuse umfassend sechs Wände, zwei Wandstrukturen und vier Seitenwandstrukturen, gebildet sein. Das Array 14 kann durch das Gehäuse 1002 als eine Gesamtanordnung von Bauteilen bewegt werden, was für Aktuatorik, wie etwa Aktoren zur Bildstabilisierung und/oder zur Fokussierung, vorteilhaft ist, da eine geringe oder keine unerwünschte Relativbewegung zwischen Komponenten erfolgt.

Die Wandstruktur 1004 kann sich über zumindest einen, zumindest zwei oder über alle optischen Kanäle 16a-b der Multiaperturabbildungsvorrichtung 1000 erstrecken. Dies ist insbesondere dann vorteilhaft, wenn die Wandstruktur 1004 ein für einen Nutzwellenlängenbereich der Multiaperturabbildungsvorrichtung 1000 transparentes Material aufweist und die optischen Kanäle 64a und 64b durch die Wandstruktur 1004 hindurch verlaufen. Die Wandstruktur 1004 kann so eine gesamte Seite des Arrays 14 bedecken. Die Wandstruktur 1004 kann mehrere Elemente umfassen, die gemeinsam die Wandstruktur 1004 bilden. Alternativ kann die Wandstruktur 1004 auch einstückig gebildet sein, was eine Fertigung des Gehäuses 1002 vereinfacht.

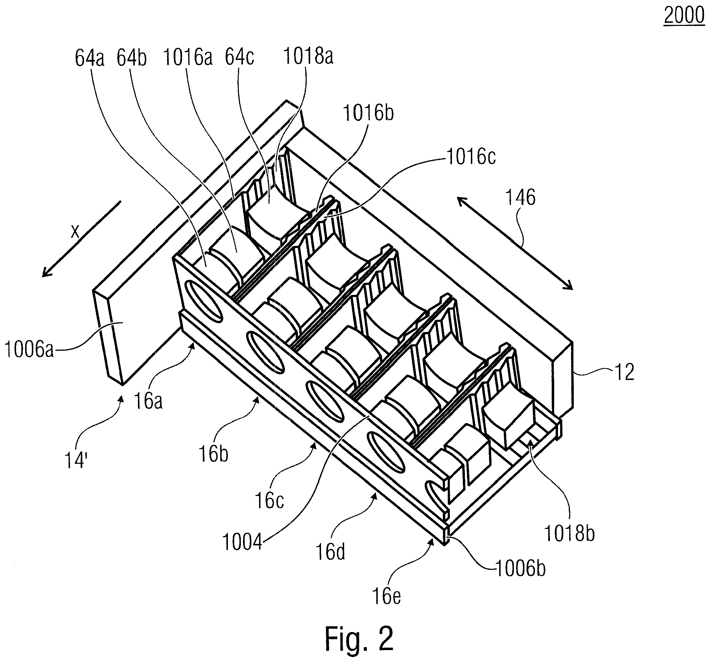

Fig. 2 zeigt eine schematische perspektivische Ansicht auf eine Multiaperturabbildungsvorrichtung 2000, die ein Array 14' umfasst. Das Array 14' umfasst zumindest fünf optische Kanäle 16a-e, die in einer Zeile nebeneinander entlang der Zeilenerstreckungsrichtung 146 angeordnet sind. Der optische Kanal 16e ist zur besseren Darstellung in einer perspektivischen Seitenschnittansicht dargestellt. Das Array 14' umfasst die Seitenwandstrukturen 1006a und 1006b, wobei die Seitenwandstruktur 1006b beispielsweise als eine Unterseite des Arrays 14' gebildet ist. Es wird in diesem Zusammenhang darauf hingewiesen, dass die hierin verwendeten Begriffe wie "Oberseite, Unterseite, linke Seite oder rechte Seite" beliebig miteinander vertauschbar sind, etwa, wenn die Orientierung des Arrays 14' und/oder der Multiaperturabbildungsvorrichtung 2000 im Raum geändert wird. Diese Begriffe sollen lediglich dem besseren Verständnis dienen und nicht einschränkend wirken. Eine Trennwandstruktur 1016a kann zwischen der Seitenwandstruktur 1006a und den Linsen 64a-c des optischen Kanals 16a angeordnet sein. Alternativ kann eine der Trennwandstruktur 1016a entsprechende Struktur oder eine optische Eigenschaft der Trennwandstruktur 1016a auch einstückig, d. h. integral, mit der Seitenwandstruktur 1006a gebildet sein. Gemäß weiteren Ausführungsbeispielen weist das Array zumindest eine zweite Zeile optischer Kanäle auf.

Das Array 14' umfasst Trennwandstrukturen 1016b und 1016c, die zwischen den optischen Kanälen 16a und 16b angeordnet sind. Die Trennwandstrukturen 1016b und 1016c können aus einem zumindest teilweise opaken Material gebildet sein, so dass eine Falschlichtunterdrückung zwischen den optischen Kanälen erhalten wird. Gemäß einem Ausführungsbeispiel sind die Trennwandstrukturen 1016a-b plattenförmig und im Wesentlichen eben gebildet. Obwohl sich auch die Materialien der Wandstruktur und Seitenwandstruktur als Material für die Trennwandstrukturen 1016a-b eignen, ist ein hiervon verschiedenes Material, etwa Kunststoff vorteilhaft, da es leicht ist und einfach mit anderen Materialen beschichtet werden kann oder umgeformt werden kann, etwa zum Implementieren von Mikrostrukturen. Kunststoff kann sich ebenfalls eignen, wenn die Trennwandstrukturen 1016a-b so angeordnet sind, dass sie keine wesentlichen tragenden Eigenschaften in dem Gehäuse 1002 übernehmen oder lediglich einen Abstand zwischen einer Oberseite und einer Unterseite (etwa die Seitenwandstruktur 1006b und eine gegenüberliegende Seitenwandstruktur) des Gehäuses beibehalten. Obwohl die Trennwandstrukturen 1016b und 1016c als zwei Elemente dargestellt sind, kann auch lediglich eine Trennwandstruktur zwischen den optischen Kanälen 16a und 16b angeordnet sein. Zwischen zwei benachbarten optischen Kanälen 16a und 16b, 16b und 16c, 16c und 16d oder 16d und 16e kann jeweils zumindest eine Trennwandstruktur angeordnet sein.

Die Trennwandstrukturen 1016a-c können als innere Trennwände zwischen zwei optischen Kanälen 64a-c angeordnet sein und über das Modul (die Multiaperturabbildungsvorrichtung) hin identisch aufgebaut sein. Ferner können die Trennwandstrukturen 1016 spiegelsymmetrisch bezüglich einer Längserstreckungsrichtung oder einer Längserstreckungsebene sein, das bedeutet, sie können jeweils symmetrisch hin zu den jeweiligen optischen Kanälen ausgebildet sein.

Zumindest einer der optischen Kanäle 16a-e kann mehrere Optiken 64a-c aufweisen, wie es nachfolgend beispielhaft für den optischen Kanal 16a beschrieben ist. Gemäß einem Ausführungsbeispiel sind alle optischen Kanäle 16a-e des Arrays 14' gleich ausgebildet, so dass die nachfolgenden Ausführungen ohne Einschränkungen auch auf andere optische Kanäle übertragbar sind. Der optische Kanal 16a umfasst seriell hintereinander geschaltete Linsen 64a, 64b und 64c, die jeweils eine Beeinflussung eines Strahlengangs durch den optischen Kanal ermöglichen. Seriell bedeutet hier, dass ein Strahlengang nacheinander durch die seriell angeordneten Linsen 64a-c verläuft.

Die Linsen 64a, 64b und 64c können untereinander mechanisch fest verbunden sein. Beispielsweise sind die Linsen 64a, 64b und 64c über Linsenhalter, d. h. mechanische Strukturen am Rand der Linsen, miteinander verbunden. Gemäß einem weiteren Ausführungsbeispiel sind die Linsen 64a, 64b und 64c an einer Seitenwandstruktur, beispielsweise der Seitenwandstruktur 1006b oder einer gegenüberliegenden Seitenwandstruktur mechanisch fest angeordnet, beispielsweise mittels eines Klebstoffs.

Bevorzugt sind die Linsen 64a, 64b und/oder 64c berührungslos oder zumindest wenig Kraft übertragend zu benachbarten Trennwandstrukturen 1016a und/oder 1016b oder anderen mechanischen Elementen angeordnet. Berührungslos bedeutet, die Linsen weisen über eine Wandstruktur oder Seitenwandstruktur eine lediglich mittelbare mechanische Verbindung zueinander auf. Dies ermöglicht, dass bei einer thermisch induzierten Ausdehnung der Linsen 64a, 64b und/oder 64c ein Anstoßen (mechanischer Kontakt) der Linsen an die Trennwandstrukturen 1016a und/oder 1016b vermieden wird, so dass durch die thermisch induzierte Ausdehnung der Linsen 64a-c keine oder lediglich eine geringe Kraft auf die Trennwandstrukturen 1016a und 1016b und/oder Linsen benachbarter optischer Kanäle 64a-c ausgeübt wird. Ein Anstoßen könnte eine Abstandsänderung der optischen Kanäle zueinander bewirken, was zu Bildfehlern führen würde. Die Vermeidung des Anstoßens ermöglicht zum einen eine geringe oder keine hierdurch induzierte Beeinflussung von benachbarten Kanälen als auch eine geringe oder keine Induzierung von Verformungskräften auf die Wandstruktur 1004 und/oder die Seitenwandstrukturen 1006a und 1006b. Das bedeutet, dass trotz einer thermisch induzierten Verformung der Linsen 64a-c eine Verformung des Gehäuses des Arrays 14' reduziert oder verhindert wird. Dies führt in besonders vorteilhafter Weise zu einer gleichbleibend hohen oder zumindest nur geringfügig beeinträchtigten Bildqualität der Multiaperturabbildungsvorrichtung 2000. Alternativ können insbesondere bei sich über einer großen Ausdehnung der Strahlengänge der optischen Kanäle erstreckende Linsen 64a-c oder Linsenstapel eine Abstützung derselben an Trennwandstrukturen vorteilhaft sein, um eine Position der Optiken zu fixieren. Das bedeutet, dass eine seitliche Abstützung hin zu den Trennwänden oder den Seitenwandstrukturen vorteilhaft sein kann, wenn die Linsenstapel zu lang werden. Hierzu können Klebstoffe vorgesehen sein, wobei insbesondere unter UV-Licht (UV = ultraviolett) aushärtende Kleber geeignet sind. Alternativ kann auch ein Lötmittel oder dergleichen verwendet werden. Es ist weiterhin vorteilhaft, diese Klebungen bzw. seitlichen Abstützungen aus einem weichen Material auszuführen, so dass eine abstützende Wirkung resultiert, jedoch nur möglichst geringe Kräfte übertragen werden.

In einem dem Bildsensor 12 zugewandten Bereich können die Trennwandstrukturen 1016a, 1016b und/oder 1016c Strukturen 1018a aufweisen, die optisch teilweise streuende und/oder teilweise absorbierende und/oder teilweise reflektierende Eigenschaften aufweist. Die optisch teilweise streuende oder teilweise absorbierende Struktur 1018a ist ausgebildet, um aus dem optischen Kanal 16a lateral, senkrecht zu dem Strahlengang 17a austretendes Licht, das auf die optisch teilweise streuende oder teilweise absorbierende Struktur 1018 trifft, in einem geringeren Umfang hin zu dem Bildsensor 12 zu streuen oder zu reflektieren. Bevorzugt wird das aus dem optischen Kanal 1016a austretende Licht in Richtung des Objektbereichs zurückreflektiert und/oder absorbiert. Dies ermöglicht eine hohe Bildqualität eines von dem Bildsensor 12 empfangenen und/oder gewandelten Bildes, da ein Umfang von Streulicht reduziert ist.

Wie es für die zumindest teilweise streuende oder teilweise absorbierende und/oder teilweise reflektierende Struktur 1018b dargestellt ist, kann eine entsprechende Struktur auch an einer Seitenwandstruktur, etwa der Seitenwandstruktur 1006b angeordnet sein oder einstückig mit dieser oder an dieser gebildet sein. Das bedeutet, dass die Seitenwandstruktur in einem Bereich, der dem Bildsensor 12 zugewandt angeordnet ist, die optisch teilweise streuende oder teilweise absorbierende Struktur 1018a aufweisen kann. Ist zwischen zwei optischen Kanälen 16a und 16b, 16b und 16c, 16c und 16d oder 16d und 16e lediglich eine Trennwandstruktur angeordnet, so kann diese bevorzugt an beiden, jeweils einem optischen Kanal zugewandten Hauptseite eine Struktur 1018 aufweisen, die teilweise streuende, teilweise absorbierende und/oder teilweise reflektierende Eigenschaften aufweist. Die teilweise streuende, teilweise absorbierende und/oder teilweise reflektierende Struktur 1018 kann auch als sogenanntes "Baffle" bezeichnet werden.

Die Multiaperturabbildungsvorrichtung 2000 kann so ausgebildet sein, dass das Array 14' bezüglich des Bildsensors 12 beweglich angeordnet ist, etwa um einen veränderlichen Abstand zwischen den Optiken der optischen Kanäle 16a-e und dem Bildsensor 12 zu erhalten, so dass ein Fokus der Multiaperturabbildungsvorrichtung 2000 verändert bzw. korrigiert wird.

Die Optiken der optischen Kanäle 16a-e können zusammen mit der Wandstruktur 1004 und den Seitenwandstrukturen 1006a und 1006b entlang einer Richtung x gegenüber dem Bildsensor 12 bewegbar sein. Dies ermöglicht die Anpassung eines Fokus der Multiaperturabbildungsvorrichtung 2000. Zwischen dem Bildsensor zugewandten Optiken der optischen Kanäle 16a-e, beispielsweise die Linse 64c, und dem Bildsensor 12 kann eine weitere Wandstruktur angeordnet sein, die eine Austrittsseite von Strahlengängen der optischen Kanäle bilden kann. Die Wandstrukturen können über Seitenwandstrukturen, wie etwa die Seitenwandstruktur 1006b und/oder die Seitenwandstruktur 1006a miteinander verbunden sein. Die Richtung x kann beispielsweise parallel zu Strahlengängen der optischen Kanäle 16a-e zwischen dem Bildsensor 12 und den Optiken der optischen Kanäle 16a-e verlaufen. Alternativ oder zusätzlich kann die Richtung x senkrecht zu der Zeilenerstreckungsrichtung 146 verlaufen.

In anderen Worten wird gemäß hierin beschriebenen Ausführungsbeispielen ein Gehäusekonzept für ein Array optischer Kanäle vorgeschlagen, das entgegen üblichen spritzgegossenen Kunststoffgehäusen eine wesentlich reduzierte thermische Ausdehnung und mithin eine stark verbesserte thermische Stabilität aufweist. Hieraus resultiert eine vereinfachte bzw. qualitativ bessere Zusammensetzung des Gesamtbilds aus den Teilbildern sowie robustere 3D-Bilddaten. Das Konzept besteht nicht allein in der Substitution der Materialien bekannter Lösungen, sondern umfasst auch die vorteilhafte Anordnung der jeweiligen Gehäusekomponenten. Bisherige Gehäuse- und Linsengeometrien verhindern eine kostengünstige Fertigung von Gehäusen für optische Kanäle, die gleichzeitig eine hohe Bildqualität bei wechselnder Umgebungstemperatur ermöglicht.

Gehäuseteile, die in Plattenform gebildet sind, können extrem preiswert und mit hoher Qualität und Präzision hergestellt werden. Vorteilhafte Materialien sind beispielsweise Glas, Glaskeramik, Keramik oder Silizium. Glaskeramik kann eine amorphe, polykristalline oder kristalline Struktur aufweisen. Keramik und/oder Silizium können als polykristallines oder kristallines Material vorliegen und verwendet werden. Eine Fertigung der Plattenstrukturen kann beispielsweise durch einen Sägeprozess, Schleifprozess und/oder Bruchprozess erfolgen. Alternativ kann beispielsweise ein Laserschneidprozess verwendet werden, um die Plattenstrukturen nach einer gemeinsamen Fertigung zu vereinzeln. Zusätzliche Strukturen, wie etwa die optisch teilweise streuenden, teilweise absorbierenden und/oder teilweise reflektierende Strukturen 1018 und/oder nachfolgend erläuterte Führungsstrukturen können beispielsweise durch zusätzliche Fertigungsschritte angeordnet werden, die vor oder nach dem Vereinzeln ausgeführt werden können. Etwa kann mittels eines Heißprägens eine Topographie auf die Plattenstrukturen aufgebracht werden, so dass die Topographie-Strukturen einstückig mit dem jeweiligen Plattenelement gebildet sind.

Optisch funktionelle Bereiche, wie etwa die Strukturen 1018 und/oder die Blendenstrukturen 1012 können durch eine zusätzliche Schwärzung durch Auftragen von Schichten, Schichtstapeln oder dergleichen erfolgen. Die Schichten können absorptiv und/oder dielektrisch gebildet sein. Ferner können topographische Mikrostrukturen für die Realisierung der Baffle-Strukturen verwendet werden. Eine Überlagerung von Oberflächeneigenschaften (bspw. absorptiv) mit einer optisch streuenden Mikrostruktur ermöglicht eine Überlagerung eines absorbierenden Effektes mit einem streuenden Effekt.

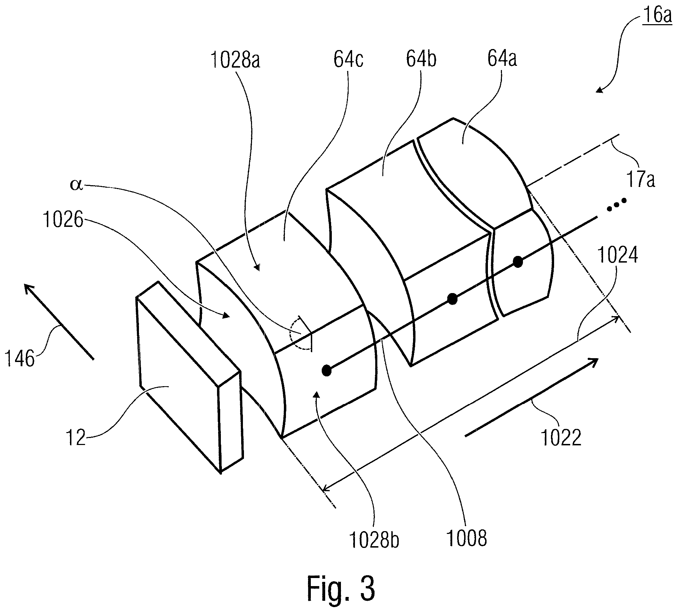

Fig. 3 zeigt eine schematische Darstellung des optischen Kanals 16a. Wie es im Zusammenhang mit der Fig. 2 beschrieben ist, umfasst der optische Kanal 16a die Linsen 64a, 64b und 64c. Die Optiken oder Linsen 64a-c können auch als Optikelemente einer Gesamtoptik des optischen Kanals 16a verstanden werden. Die Linsen sind beispielsweise über das mechanische Befestigungselement 1008 untereinander mechanisch verbunden. Vereinfacht ausgedrückt sind die Optikelemente 64a-c seriell angeordnet. Der Strahlengang 17a kann parallel oder antiparallel zu einer Richtung 1022, die eine axiale Erstreckungsrichtung des optischen Kanals 16a angibt, verlaufen.

Entlang der Zeilenerstreckungsrichtung 146 bzw. lateral benachbart zu dem optischen Kanal entlang einer positiven und/oder negativen Richtung der Zeilenerstreckungsrichtung 146 können die Linsen 64a-c berührungsfrei oder zumindest weich, d. h. wenig Kraft übertragend, gegenüber Seitenwandstrukturen oder anderen Optiken in der Multiaperturabbildungsvorrichtung angeordnet sein. Eine Länge 1024 des optischen Kanals 16a in dem Gehäuse 1002 kann beispielsweise durch die einander jeweils abgewandten Oberflächen des Optikelements 64a (dem Bildsensor abgewandt) und des Optikelements 64c (dem Bildsensor zugewandt) und entlang einer optischen Achse des optischen Kanals bestimmt sein. In einem Bereich von zumindest 50%, zumindest 70% oder zumindest 80% der Länge 1024 kann die serielle Anordnung der Optikelemente 64a, 64b und 64c sowie der mechanischen Verbindungselemente 1008 parallel zu der Zeilenerstreckungsrichtung 146 berührungslos gegenüber anderen mechanischen Strukturen angeordnet sein, etwa Trennwandstrukturen.

Die Optik 64 bzw. die einzelnen Linsen 64a, 64b und/oder 64c kann mit einer Seitenwandstruktur, beispielsweise einer Unterseite oder Oberseite, mechanisch fest verbunden sein, etwa mittels Klebstoff und/oder mittels später beschriebener Ausrichtungsstrukturen. Eine derartige Anordnung ermöglicht eine berührungslose Anordnung der Optik des optischen Kanals entlang der positiven und/oder negativen Zeilenerstreckungsrichtung 146. Eine Befestigung mittels Kleben kann beispielsweise mittels eines thermisch aktivierbaren Klebstoffes, eines Klebstoffes, der bei Raumtemperatur aktiv wird, mittels eines unter Ultraviolettstrahlung härtenden Klebers und/oder mittels Klebebands erfolgen. Alternativ oder zusätzlich können die Linsen mittels eines Laserlötens und/oder mittels eines Klemmens befestigt werden.

Obwohl die Linsen 64a, 64b und/oder 64c auch als runde oder ovale Linsen gebildet sein können, kann zumindest eine der Linsen 64a-c eine erste, zweite, dritte und vierte Nebenseite 1028a-b aufweisen, die eine erste optisch wirksame Hauptseite 1026 und eine zweite optisch wirksame Hauptseite der Linse miteinander verbinden. Eine Hauptseite einer Linse kann durch einen Eintritt und/oder Austritt des Strahlengangs 17a gekennzeichnet sein. Die Hauptseiten 1026a-b können (unter Vernachlässigung von Oberflächenkrümmungen) im Wesentlichen parallel zueinander angeordnet sein. Zwei benachbart zueinander angeordnete Nebenseiten 1028a und 1028b können in einem Winkel α von zumindest 60° und höchstens 120°, von zumindest 80° und höchstens 100° oder von zumindest 85° und höchstens 95°, beispielsweise um etwa 90° angeordnet sein. Beispielsweise kann zumindest eine der Linsen 64a-c und/oder die erhaltene Gesamtoptik einen rechteckigen oder quadratischen Querschnitt aufweisen. Eben ausgebildete Nebenseiten 1028a und/oder 1028b können einen erhöhten Kontaktbereich für ein Verbindemittel (beispielsweise Kleber oder Lötmittel oder dergleichen) für eine daran zu befestigende Komponente ermöglichen.

Eine entlang der Zeilenerstreckungsrichtung 146 gegenüber benachbarten optischen Kanälen berührungslose oder zumindest wenig Kraft übertragende Anordnung der Gesamtoptik eines optischen Kanals zumindest über einen großen Bereich der Länge 1024 hinweg ermöglicht, dass bei einer thermischen Verformung eine optische Eigenschaft einer jeweiligen (Teil-)Linse 64a, 64b und/oder 64c verändert wird und/oder dass sich ein Abstand zwischen den Linsen ändert. Eine derartige Verfälschung der Aufnahme durch die Gesamtoptik kann durch eine Neufokussierung des optischen Kanals 16a, beispielsweise mittels eines Autofokus, korrigiert werden. Eine Vermeidung oder zumindest Reduzierung von Querkräften auf andere optische Kanäle reduziert oder vermeidet zeitgleich Beeinflussungen der jeweils anderen optischen Kanäle, so dass eine Übereinstimmung von Teilbereichen in dem Objektbereich weitestgehend erhalten bleibt.

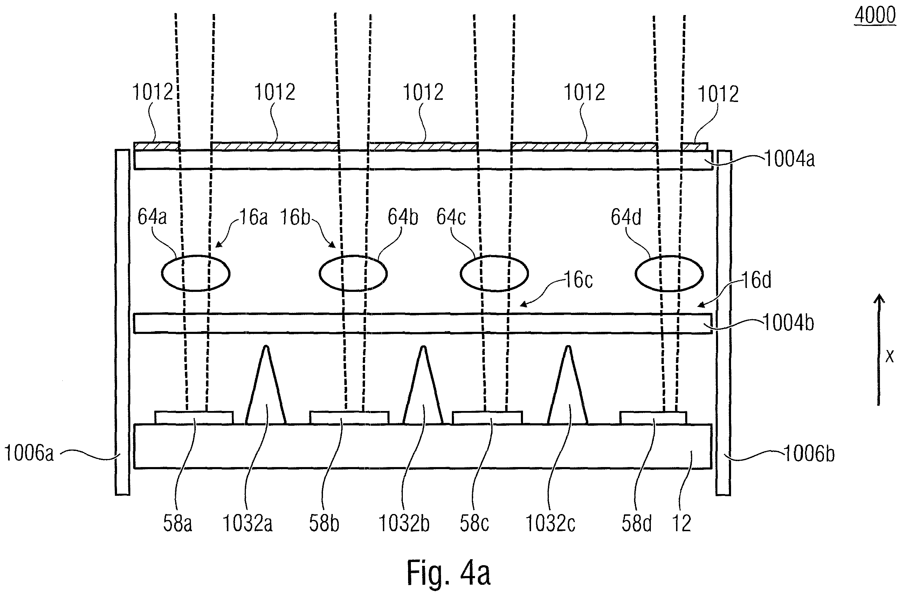

Fig. 4a zeigt eine schematische Aufsicht auf eine Multiaperturabbildungsvorrichtung 4000, bei der zwischen Bildsensorbereichen 58a und 58b, 58b und 58c und 58c und 58d jeweils eine zumindest teilweise opake Struktur 1032a, 1032b oder 1032c angeordnet ist. Die zumindest teilweise opaken Strukturen 1032a bis 1032c sind ausgebildet, um ein Übersprechen zwischen den optischen Kanälen 16a-d zu reduzieren oder zu verhindern. Unter einem Übersprechen zwischen den optischen Kanälen 16a-d wird ein Austritt von Licht aus einem ersten optischen Kanal und ein Eintritt dieses Falschlichts in einen anderen optischen Kanal verstanden. Die zumindest teilweise opaken Strukturen 1032a-c können einen derartigen Übertritt von Falschlicht zumindest reduzieren, so dass eine insgesamt höhere Bildqualität erhalten wird.

Die zumindest teilweise opaken Strukturen 1032a-c können sich entlang der x-Richtung verjüngen, wobei die Verjüngung beispielsweise an einen Blickwinkel des jeweiligen optischen Kanals 16a-b angepasst sein kann, was zu einer weiteren Optimierung der Falschlichtunterdrückung führt. Gemäß anderen Ausführungsbeispielen sind die zumindest teilweise opaken Strukturen 1032a, 1032b und/oder 1032c anders gebildet, beispielsweise gerade, das bedeutet mit einem in etwa konstanten Querschnitt. Die zumindest teilweisen opaken Strukturen 1032a-c können gleich zueinander oder voneinander verschieden gebildet sein. Beispielsweise kann eine kanalindividuelle Anpassung der Geometrie der zumindest teilweise opaken Strukturen 1032a-c erfolgen.

Die Wandstrukturen 1004a und 1004b können jeweils mit den Seitenwandstrukturen 1006a und 1006b mechanisch fest verbunden sein, so dass die Seitenwandstrukturen 1006a und 1006b einen Abstand zwischen den Wandstrukturen 1004a und 1004b definieren. Das Gehäuse der Multiaperturabbildungsvorrichtung 4000 kann so gebildet sein, dass der Abstand zwischen den Wandstrukturen 1004a und 1004b über höchstens zwei Seitenwandstrukturen 1006a und/oder 1006b definiert ist. Beispielsweise kann der Abstand auch durch lediglich eine der Seitenwandstrukturen 1006a und 1006b definiert sein. Zusätzliche Seitenwandstrukturen, etwa an einer Oberseite und/oder einer Unterseite des Gehäuses können so angeordnet sein, dass sie nicht fest mit den Wandstrukturen 1004a und 1004b verbunden sind, d. h., den Abstand zwischen den Wandstrukturen nicht definieren. Dies ermöglicht, dass bei einer Temperatur-induzierten Formänderung der Linsen 64a-d, die zu einer Krafteinleitung in die Wandstrukturen 1004a und/oder 1004b führen kann, eine Verformung oder Torsion des Gehäuses reduziert oder verhindert wird, da sich beispielsweise die jeweiligen Verformungskräfte in den Seitenwandstrukturen 1006a und 1006b abbauen, ohne über weitere Seitenwandstrukturen aufeinander überzukoppeln.

In anderen Worten können gegebenenfalls zusätzlich innere Trennwände 1032 außerhalb eines Abbildungskanals angeordnet sein, die sich nicht über die gesamte Länge des Aufbaus, d. h. die optischen Kanäle in dem Gehäuse, erstrecken und gegebenenfalls einen keilförmigen Querschnitt (von oben betrachtet) aufweisen. Das Gehäuse kann so ausgebildet sein, dass nur zwei Wände (jeweils innere oder äußere Seitenwandstrukturen oder Trennwandstrukturen) den Abstand zwischen vorderen und hinteren Glaskörpern (Wandstrukturen), die Ausrichtungsstrukturen und gegebenenfalls Linsen enthalten, definieren.

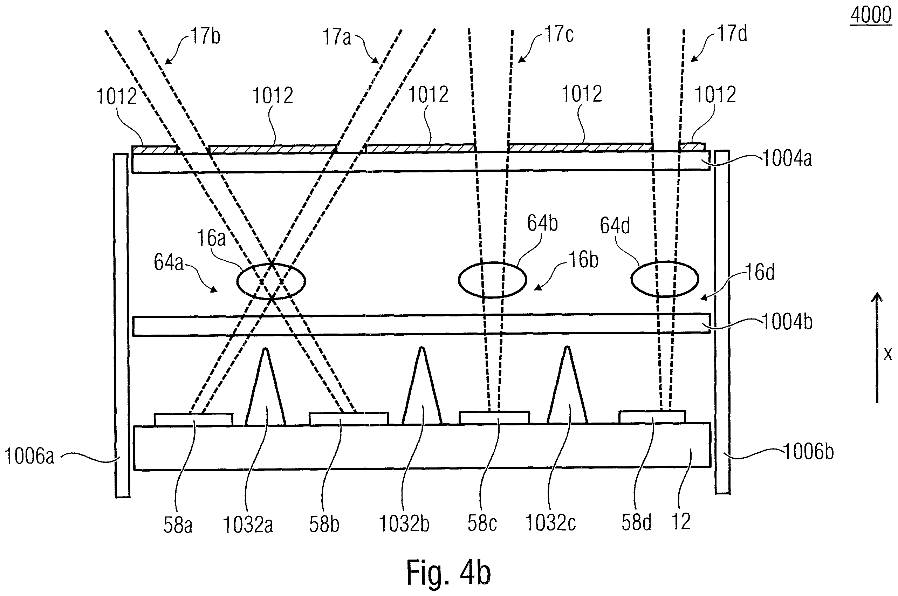

Fig. 4b zeigt die Multiaperturabbildungsvorrichtung 4000 aus Fig. 4a bei, der der optische Kanal 64a konfiguriert ist, um zwei Teilbereiche abzubilden. Ein erster Teilbereich des Objektbereichs wird auf den Bildsensorbereich 58a abgebildet. Ein zweiter Teilbereich des Objektbereichs wird auf den Bildsensorbereich 58b abgebildet. Zwischen dem ersten Bildsensorbereich 58a und dem zweiten Bildsensorbereich 58b ist die zumindest teilweise opake Struktur 1032a angeordnet, um ein Übersprechen und/oder einen Übertritt von Falschlicht zwischen dem Bildsensorbereich 58a und dem Bildsensorbereich 58b zu reduzieren oder zu verhindern. Vorteilhaft an einer Mehrfachnutzung einer Optik innerhalb eines optischen Kanals ist eine mögliche Reduzierung der Baugröße, da ein Bauraumbedarf für Optiken reduziert ist. Bspw. kann die Optik 64a rotationssymmetrisch oder spiegelsymmetrisch bzgl. der Bildsensorbereiche 58a und 58b oder einer Mittelachse zwischen den Bildsensorbereichen 58a und 58b ausgebildet sein, um eine gleichzeitige Abbildung zweier oder mehrerer Teilbereiche des Objektbereichs zu ermöglichen. Die zumindest teilweise opake Struktur 1032a kann sich entlang einer dem Bildsensor 12 abgewandten Richtung x verjüngen.

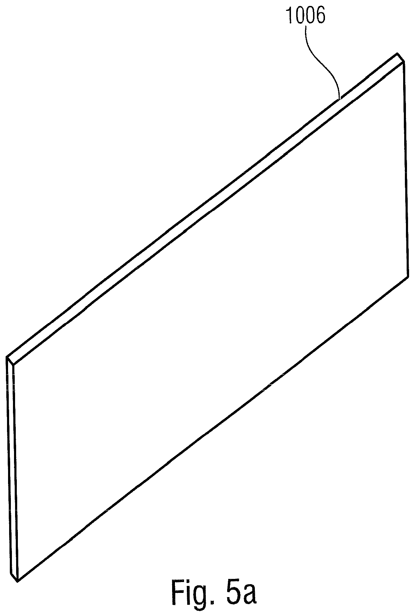

Fig. 5a zeigt eine schematische perspektivische Ansicht einer Seitenwandstruktur 1006. Die Seitenwandstruktur 1006 kann als einfache plattenförmige Struktur gebildet sein, was eine einfache und kostengünstige Herstellung ermöglicht. Alternativ kann die dargestellte Seitenwandstruktur 1006 auch als Trennwandstruktur, wie sie im Zusammenhang mit der Fig. 2 erläutert ist, angeordnet werden.

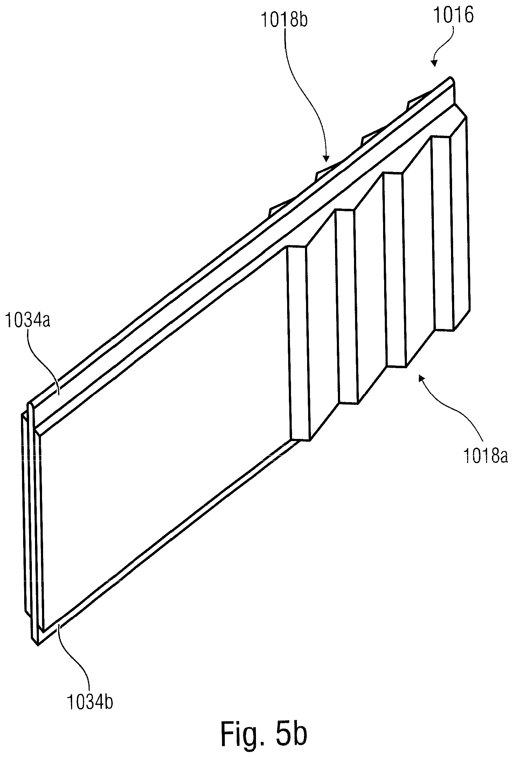

Fig. 5b zeigt eine schematische perspektivische Ansicht der Trennwandstruktur 1016, wie sie im Zusammenhang mit der Fig. 2 beschrieben ist. Die Trennwandstruktur 1016 kann im Wesentlichen als plattenförmige Struktur gebildet sein und beidseitig, d. h. an beiden Hauptseiten, optisch zumindest teilweise streuende und/oder zumindest teilweise absorbierende und/oder zumindest teilweise reflektierende Strukturen 1018a und 1018b aufweisen. Der streuende Effekt kann beispielsweise durch eine Ausbildung von Mikrostrukturen an der Oberfläche erfolgen, wie es durch die zueinander geneigten Oberflächen angedeutet ist. Die zumindest teilweise absorbierende Eigenschaft kann durch eine Beschichtung und/oder durch ein zusätzliches Material an den Hauptseiten der Trennwandstruktur 1016 erfolgen. Vereinfacht ausgedrückt kann zusätzlich zu der Schwärzung durch Auftragung von Schichten, Schichtstapeln oder dergleichen, die absorptiv und/oder die dielektrisch sind, so dass eine Absorption ermöglicht ist, eine überlagerte Mikrostruktur zum Erhalten einer Streuung angeordnet sein.

Ferner kann die Trennwandstruktur 1016 Führungsfedern 1034a und/oder 1034b aufweisen, die sich entlang einer Haupterstreckungsrichtung der Trennwandstruktur 1016 an Nebenseiten derselben erstreckt, wobei die Nebenseiten die Hauptseiten der Trennwandstruktur 1016 verbinden.

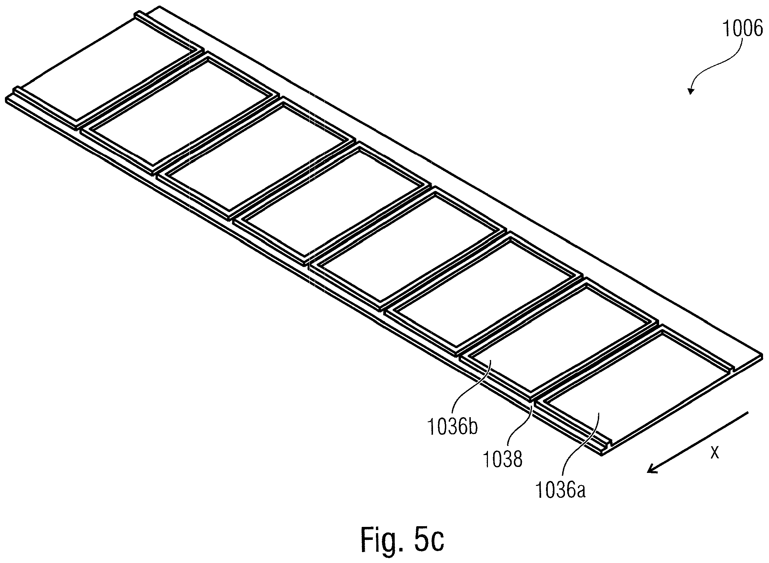

Fig. 5c zeigt eine schematische perspektivische Ansicht einer Seitenwandstruktur 1006, die beispielsweise als Ober- und/oder Unterseite des Gehäuses verwendbar ist. Die Seitenwandstruktur 1006 kann Erhebungen 1036a und 1036b aufweisen. Die Topographie der Erhebung ist als mechanische Führungsstruktur für andere Elemente des Gehäuses nutzbar. So können die Erhebungen 1036a und 1036b jeweils einen umlaufenden Rahmen bilden, so dass innerhalb des Rahmens Optiken von optischen Kanälen angeordnet werden können und dort mechanisch einrasten. Ferner kann ein Bereich 1038 zwischen zwei benachbarten Erhebungen 1036a und 1036b als Führungsnut dienen, beispielsweise um eine Position von Trennwandstrukturen 1016 zu ermöglichen. So kann eine Führungsfeder 1034 in der Nut 1038 geführt werden und eine Position der Trennwandstruktur zumindest teilweise fixieren. Das bedeutet, die Trennwandstruktur kann mechanisch gelagert werden. In oder entgegengesetzt zu der x-Richtung können die Trennwandstrukturen beispielsweise beweglich oder frei beweglich sein. Unter Bezugnahme auf Fig. 4 kann beispielsweise der Abstand zwischen den Wandstrukturen 1004a und 1004b auch über die Oberseite und die Unterseite des Gehäuses definiert werden, während die Seitenwandstrukturen 1006a und 1006b in Fig. 4 den Abstand zwischen die Wandstrukturen 1004a und 1004b nicht definieren.

Führungsnuten und/oder Führungsfedern können auch für die Definition von Abständen zwischen zwei Elementen nutzbar sein. So kann eine Definition des axialen Abstands von zwei Wandstrukturen über Nuten/Rillen an der Grund- und/oder Deckplatte (Seitenwandstrukturen) erfolgen, das bedeutet über die Führungen in der Oberseite und/oder Unterseite.

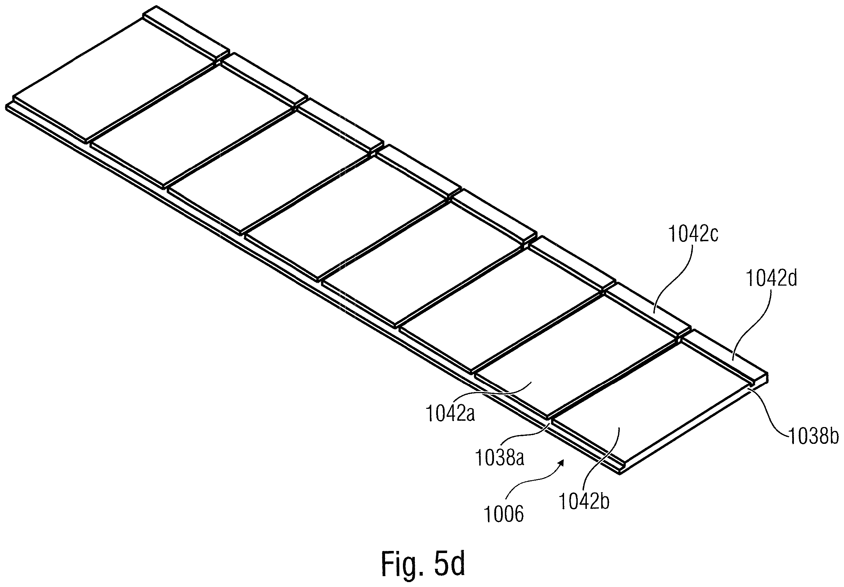

Fig. 5d zeigt eine schematische perspektivische Ansicht einer alternativen Seitenwandstruktur 1006, die ebenfalls als Oberseite und/oder Unterseite des Gehäuses einsetzbar ist. Die Seitenwandstruktur 1006 weist flächige Erhebungen 1042a-d auf, die beispielsweise in einem zweidimensionalen Matrix-Muster verteilt angeordnet sind. Die flächigen Erhebungen 1042a-d können zumindest zeilen- oder spaltenweise voneinander verschiedene Ausdehnungen entlang lateraler Erstreckungsrichtungen aufweisen. Bereiche 1038a und 1038b zwischen zwei benachbarten flächigen Erhebungen können als Führungsnuten für Trennwandstrukturen und/oder Wandstrukturen genutzt werden. In anderen Worten weist die Seitenwandstruktur 1006 mechanische Führungen 1038 auf, die ausgebildet sind, um die Trennwandstrukturen mechanisch zu lagern.

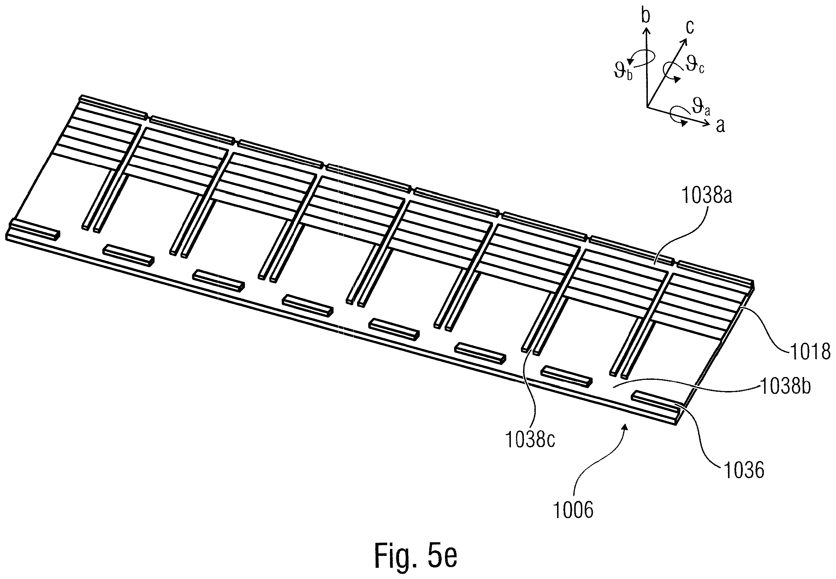

Fig. 5e zeigt eine schematische perspektivische Ansicht einer weiteren Seitenwandstruktur 1006, bei der die Erhebungen 1036 jeweils als mehrstückiger, d. h. unterbrochener, Rahmen gebildet sind, so dass zwei Führungsnuten 1038a und 1038b erhalten werden, entlang derer die Wandstrukturen gelagert werden können. Ferner weist die Seitenwandstruktur 1006 zumindest teilweise streuende und/oder zumindest teilweise absorbierende und/oder zumindest teilweise reflektierende Strukturen 1018 auf. Werden beispielsweise Trennwandstrukturen mit ebensolchen Strukturen angeordnet, so können die optischen Kanäle die zumindest teilweise streuenden und/oder zumindest teilweise absorbierenden und/oder zumindest teilweise reflektierende Strukturen an vier umlaufenden Seiten der optischen Kanäle aufweisen.

So ermöglicht eine Rille (Nut) entlang einer Richtung a, beispielsweise erhalten durch den Bereich 1038a oder 1038b eine Ausrichtung einer Struktur entlang einer Richtung c, entlang eines Winkels $\vartheta_c$ und eines Winkels $\vartheta_x$. Andere Rillen, beispielsweise die Rille 1038c entlang einer Richtung c kann eine Ausrichtung entlang der Richtung c und/oder der Richtung b und/oder der Richtung a ermöglichen. Ferner kann eine jeweilige Struktur bezüglich eines Winkels $\vartheta_c$ und/oder eines Winkels $\vartheta_b$ ausgerichtet werden.

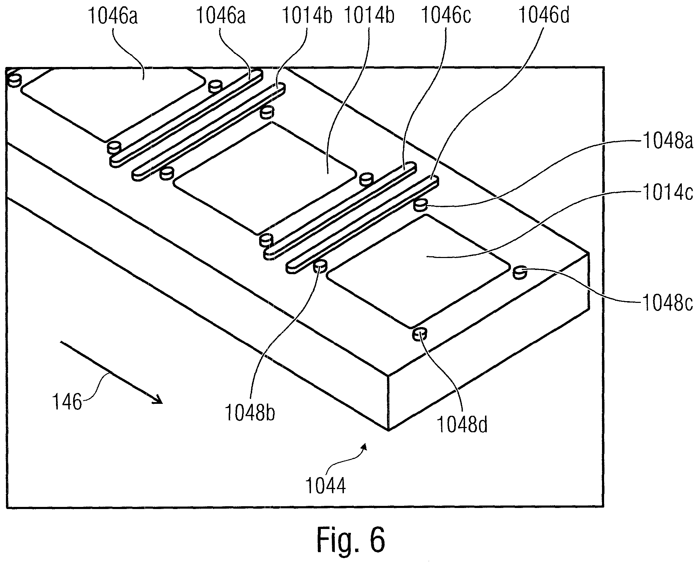

Fig. 6 zeigt eine schematische perspektivische Ansicht eines Ausschnitts einer Wandstruktur 1044, wie sie beispielsweise in den Multiaperturabbildungsvorrichtungen 1000, 2000 oder 4000 als Wandstruktur 1004 angeordnet werden kann. Die Wandstruktur weist die transparenten Bereiche 1014a-c auf. Zwischen zwei benachbarten transparenten Bereichen 1014a und 1014b oder 1014b und 1014c sind Erhebungen oder Führungen 1046a und 1046b oder 1046c und 1046d angeordnet. Zwischen zwei benachbarten Erhebungen 1046a und 1046b oder 1046c und 1046d können in dem Gehäuse die Trennwandstrukturen angeordnet sein, so dass die Trennwandstrukturen mittels der Erhebungen 1046a-d entlang der Zeilenerstreckungsrichtung 146 geführt oder fixiert sind.

Ferner weist die Wandstruktur 1044 Fixierungsbereiche 1048a-d auf, die benachbart zu den transparenten Bereichen 1014a-c angeordnet sind und ausgebildet sind, um eine mechanische Fixierung oder Arretierung von Linsen des jeweiligen optischen Kanals zu ermöglichen. Beispielsweise können die Fixierungen 1048a-d als Erhebungen und/oder Vertiefungen gebildet sein. Die Linsen können entsprechend komplementäre Strukturen aufweisen oder mit einem Rahmen verbunden sein, der diese komplementären Strukturen aufweist, so dass eine exakte Positionierung der Linsen in dem optischen Kanal ermöglicht ist.

Die Elemente 1048a-d können auch als Ausrichtungsstruktur für die Linsen des optischen Kanals bezeichnet werden. Unter Bezugnahme auf Fig. 5d und 5e können die Bereiche 1038 als Ausrichtungsstrukturen für die daran angeordneten Wandstrukturen und/oder Trennwandstrukturen bezeichnet werden. Erhebungen und/oder Vertiefungen in Seitenwandstrukturen oder Wandstrukturen können beispielsweise durch ein Heißprägeverfahren erhalten werden. Dies hat den Vorteil, dass die Wandstruktur oder Seitenwandstruktur einstückig und/oder aus einem Material gebildet sein kann, das mittels des Heißprägeverfahrens verformt wird, so dass die entsprechenden Strukturen erhalten werden. Alternativ oder zusätzlich können einige oder alle der Strukturen mittels eines Abscheideverfahrens oder eines Klebeverfahrens, beispielsweise eine UV-Replikation angeordnet werden. So kann beispielsweise eine Polymerstruktur auf einem Glasmaterial, einer Glaskeramik, einer Keramik und/oder einem Silizium erhalten werden. Vereinfacht ausgedrückt, kann eine Polymerschicht auf einem Substrat angeordnet werden.

Dies hat den Vorteil, dass die Strukturen preiswert, einfach und mit einer hohen Reproduktionsrate erhalten werden können. In Verbindung mit einer Ausführung der Wandstrukturen und Seitenwandstrukturen als plattenförmige Strukturen können die Elemente und somit das Gehäuse sehr preiswert hergestellt werden. Die Platten selbst können beispielsweise durch ein Schneidverfahren, Sägeverfahren und/oder Bruchverfahren vereinzelt werden.

Die Erhebungen und/oder Vertiefungen können auch als Montagestrukturen auf den jeweiligen Platten bezeichnet werden. Durchgehende Rillen oder Nuten (Bereiche 1038) auf einer jeweiligen Basisplatte ermöglichen in einer Richtung entlang der Zeilenerstreckungsrichtung (146) eine Ausrichtung der jeweiligen Strukturen entlang einzelner Richtungen.

Alternativ oder zusätzlich kann an den Strukturen 1048a-d auch eine Einzelblende mechanisch angeordnet und/oder justiert werden. Die Strukturen 1048a-d können als Festlager für Linsen, Trennwandstrukturen, Seitenwandstrukturen und/oder Wandstrukturen nutzbar sein. Obwohl sämtliche Strukturen 1046 und 1048 so beschrieben sind, dass sie an einer Innenseite des Gehäuses 1002 angeordnet sind, können gleiche oder ähnliche Strukturen auch an einer Außenseite des Gehäuses 1002 angeordnet sein, beispielsweise für die Anordnung von Blenden oder dergleichen.

Ferner können die Wandstrukturen 1044 in den transparenten Bereichen 1014a-c jeweils zusätzlich über optische Funktionsflächen, wie Linsen oder diffraktive Elemente verfügen, die aus demselben Material gebildet sein können, wie die Wandstruktur 1044 selbst oder das mittels UV-Replikation aufgebrachte Material. Die optischen Funktionsflächen sowie die Strukturen 1046a-d und 1048a-d können dabei auch einstückig ausgebildet sein.

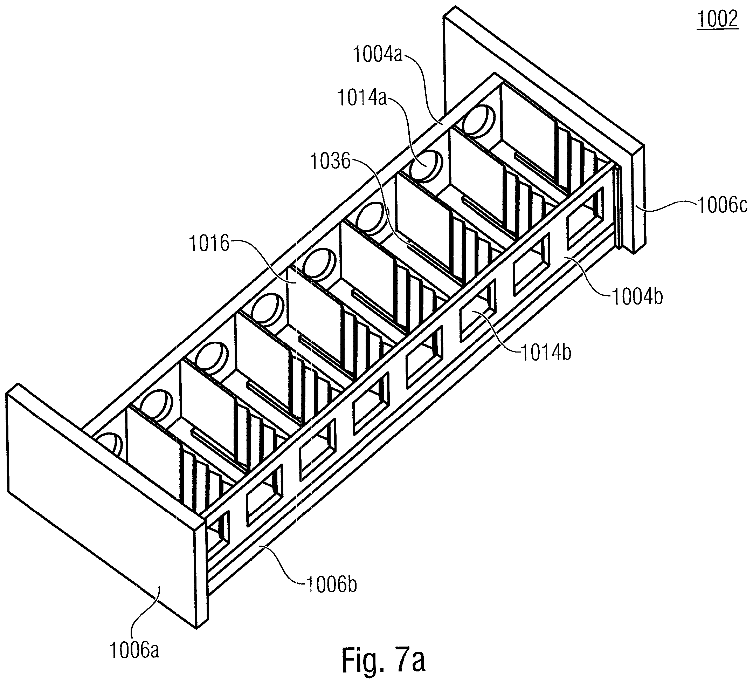

Fig. 7a zeigt eine schematische perspektivische Ansicht einer möglichen Implementierungsform des Gehäuses 1002, bei dem beispielhaft Seitenwandstrukturen 1006a-c angeordnet sind. Die dem Objektbereich zugewandt und einem Bildsensor abgewandt angeordnete Wandstruktur 1004a weist die transparenten Bereiche 1014a auf, die an die Optiken der optischen Kanäle und/oder an die Teilbereiche des Objektbereichs angepasst sind und beispielsweise rund ausgeführt sind. Die dem Bildsensor zugewandte Wandstruktur 1004b ist der Wandstruktur 1004a gegenüberliegend angeordnet und weist beispielsweise die transparenten Bereiche 1014b auf, die an die Bildsensorbereiche des Bildsensors angepasst sind und beispielsweise einen rechteckigen oder quadratischen durchlässigen Bereich ausbilden.

Die Trennwandstrukturen 1016 sind beispielsweise über Nuten, die durch die Erhebungen 1036 gebildet werden, an Seitenwandstrukturen gelagert. Das Gehäuse 1002 kann ferner eine weitere Seitenwandstruktur aufweisen, die beispielsweise die optischen Kanäle als Oberseite oder Unterseite bedeckt.

Alternativ können die Trennwandstrukturen 1016 auch als ebene Strukturen realisiert sein, wie es beispielsweise im Zusammenhang mit der Fig. 5a beschrieben ist. Alternativ können die Trennwandstrukturen auch nicht angeordnet sein. Beispielsweise kann es vorgesehen sein, dass die zumindest teilweisen opaken Strukturen 1032 an dem Bildsensor angeordnet sind und das Gehäuse in einer Umgebung angeordnet ist, in der dies eine hinreichende Falschlichtunterdrückung bietet.

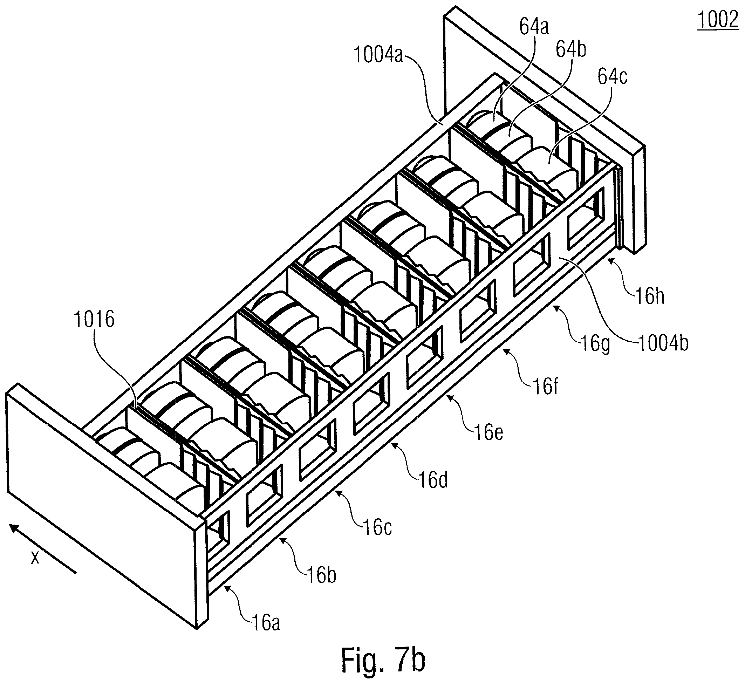

Fig. 7b zeigt das Gehäuse 1002 aus Fig. 7a, bei dem für jeden optischen Kanal 16a-h die Linsen 64a-c angeordnet sind, wie sie im Zusammenhang mit der Fig. 3 beschrieben sind. Die Ausbildung des Gehäuses 1002 aus planen Platten mit gegebenenfalls zusätzlichen Mikrostrukturen ermöglicht, dass eine Öffnung der optischen Kanäle in den Wandstrukturen 1004a und 1004b bei einer Verformung der Linsen unabhängig von einer axialen Position oder Verformung der Linsen 64a-c im Wesentlichen gleich groß bleibt, so dass eine unverändert hohe Bildqualität erhalten wird. In bekannten Lösungen nimmt die Ausdehnung der Öffnung in axialer Richtung zum Bildsensor zu. Ferner wird ein rechteckiger Querschnitt der Linsen 64a-c dafür genutzt, um eine einfache und robuste Befestigung der Linsen zu erhalten und eine einfache, nahezu plane Ausgestaltung der Trenn- und Seitenwände zu ermöglichen, da für deren Erstellung technisch einfache und mithin kostengünstige Herstellungsverfahren genutzt werden können. In bekannten Lösungen kann eine Formgebung von einer runden Form zu einer eckigen Form vorliegen. Die erforderlichen komplexeren Gehäuseformen werden mittels Spritzguss von Polymeren erzielt, die jedoch nachteiliger Weise große Änderungen der Abmasse bzw. ihrer Form bei Temperaturänderung aufweisen

Da die Optiken 64a-c zu benachbarten Trennwandstrukturen 1016 berührungslos zueinander oder zumindest wenig Kraft übertragend angeordnet sein können, stoßen sie vereinfacht ausgedrückt in einer Richtung quer zur Blickrichtung nicht an. Somit werden keine verwindenden Kräfte, die zu Bildfehlern führen können, in das Gehäuse 1002 induziert.

Gemäß einem Ausführungsbeispiel können die optischen Kanäle 16a-h eine Gesamtmenge von optischen Kanälen des Arrays bilden, die eine Gesamtmenge von Teilbereichen des Objektbereichs auf eine Gesamtmenge von Bildsensorbereichen des zumindest einen Bildsensors abbildet. Die so abgebildete Gesamtmenge der Teilbereiche kann den zu erfassenden Objektbereich vollständig abbilden. Es sind weiterhin Aufbauten möglich, wobei jeder Teilbereich des zu erfassenden Gesamtobjektbereichs von mindestens zwei Kanälen 16a-h zur Realisierung übertragen wird. Dies dient zur Realisierung stereoskopischer Bildaufnahmesysteme und/oder der Möglichkeit der Nutzung von Verfahren der Superresolution. Vereinfacht ausgedrückt kann die Gesamtheit der Kanäle 16aen das Gesamtobjektbereich mehrfach vollständig abbilden.

Obwohl vorangehend die optischen Kanäle so beschrieben sind, dass sie eine oder drei Linsen oder Linsenelemente aufweisen, können alternativ auch zwei oder mehr als drei Linsen oder Linsenelemente angeordnet sein, etwa 4, 5 oder mehr.

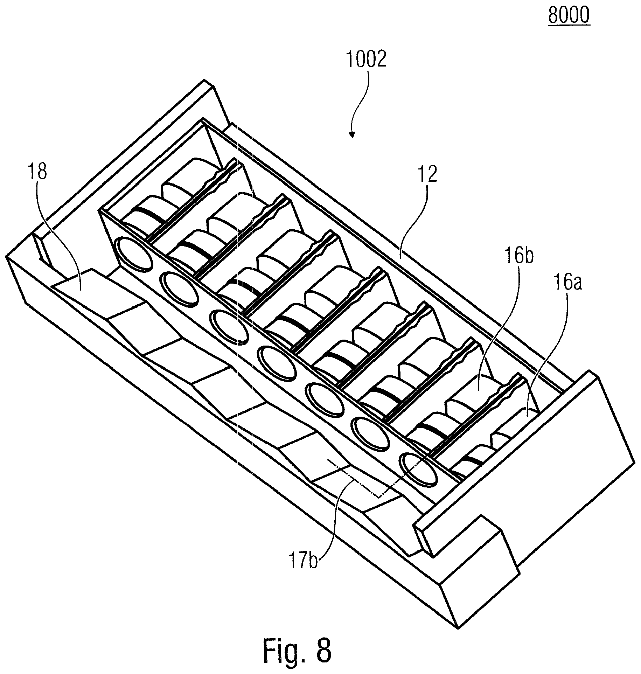

Fig. 8 zeigt eine schematische perspektivische Ansicht einer Multiaperturabbildungsvorrichtung 8000, bei der das Gehäuse 1002, wie es beispielsweise in Fig. 7b beschrieben ist, angeordnet ist, die zusätzlich den Bildsensor 12 aufweist und bei der ferner eine Strahlumlenkeinrichtung 18 angeordnet ist. Die Strahlumlenkeinrichtung 18 ist ausgebildet, um die Strahlengänge der optischen Kanäle 16a-b umzulenken, wie es beispielsweise für den Strahlengang 17b dargestellt ist. Äußere Wände des Gehäuses 1002 können Strukturen aufweisen, die für eine Befestigung von weiteren Komponenten ausgelegt sind. Vorderseitig des Gehäuses, das bedeutet, dem Bildsensor 12 abgewandt, können solche Komponenten beispielsweise die Strahlumlenkeinrichtung 18 umfassen. Alternativ oder zusätzlich kann es sich um eine Aktuatorik handeln, die konfiguriert ist, um die Strahlumlenkeinrichtung 18, das Gehäuse 1002 und/oder den Bildsensor 12 zu bewegen. Wie es nachfolgend detailliert beschrieben wird, kann es sich hierbei um translatorische und/oder rotatorische Bewegungen handeln, die es ermöglichen, eine Fokussierung der Multiaperturabbildungsvorrichtung 8000 vorzunehmen und/oder eine optische Bildstabilisierung zu erhalten.

Ferner kann rückseitig des Gehäuses, d. h. dem Bildsensor 12 zugewandt oder so, dass der Bildsensor 12 zwischen dem Gehäuse 1002 und der Aktuatorik angeordnet ist, eine Befestigung weiterer Komponenten vorgesehen sein. Beispielsweise kann eine durch den Bildsensor 12 von dem Gehäuse 1002 beabstandete Aktuatorik ausgebildet sein, um den Bildsensor bezüglich des Gehäuses zu bewegen. Alternativ oder zusätzlich kann eine Anbindung oder Verbindung an oder mit einem weiteren Gehäuse, das weitere optische Kanäle aufweist, vorgesehen sein. Auch seitlich, d. h. entlang oder entgegengesetzt zu der Zeilenerstreckungsrichtung 146 können Verbindungsorte für weitere Gehäuse und/oder Aktuatorik vorgesehen sein. Beispielsweise kann es sich hier um Permanentmagnete und/oder Federlager handeln, die ausgebildet sind, um das Gehäuse 12 zu bewegen.

Die hierin beschriebenen Ausführungsbeispiele ermöglichen eine Verringerung der Bauhöhe durch Nutzung eines Multiaperturansatzes mit linearer Kanalanordnung. Dies ermöglicht ferner eine Einsparung einer zweiten Kamera durch Strahlumlenkung mit einem Spiegel, insbesondere wenn die Strahlumlenkeinrichtung 18 ausgebildet ist, um zeitvariant den Strahlengang der optischen Kanäle in unterschiedliche Richtungen und somit hin zu voneinander verschiedenen Objektbereichen umzulenken. Die vorangehend beschriebene Ausführungsform von Gehäusen ermöglicht eine Verbesserung der thermischen Stabilität zur Verbesserung der Bildzusammensetzung und der Robustheit von 3D-Objektdaten. Dies ermöglicht zusätzlich eine Senkung von Herstellungskosten und/oder eine Reduktion des Bauvolumens.

Gemäß einem weiteren Ausführungsbeispiel können der Bildsensor und einige der optischen Kanäle 16a-d ein erstes Teilmodul in dem Gehäuse bilden, das ausgebildet ist, um den Objektbereich (vollständig) zu erfassen. Andere optische Kanäle, beispielsweise die optischen Kanäle 16e-h können mit dem Bildsensor oder einem weiteren Bildsensor ein zweites Teilmodul bilden, das den Objektbereich ebenfalls vollständig erfasst. Die Wandstruktur 1004a und/oder 1004b kann sich über die optischen Kanäle beider Teilmodule erstrecken. Der Bildsensor der beiden Teilmodule kann einstückig als ein Bildsensor gebildet sein. Alternativ oder zusätzlich kann jedes der Teilmodule zumindest einen Bildsensor aufweisen. Ist beispielsweise ein nachfolgend erläuterter Aktor für eine Fokussiereinrichtung und/oder einen optischen Bildstabilisator angeordnet, so kann der optische Bildstabilisator und/oder die Fokussiereinrichtung für optische Kanäle des ersten und des zweiten Teilmoduls gemeinsam wirken. Dies kann dadurch erhalten werden, dass die Teilmodule bzw. deren optischen Kanäle in dem gleichen Gehäuse angeordnet sind, das gemeinsam eine Relativbewegung bezüglich anderer Komponenten, beispielsweise dem Bildsensor oder der Strahlumlenkeinrichtung, erfährt. Das bedeutet, dass zumindest ein Aktor der Fokussiereinrichtung zum Einstellen eines Fokus des ersten Teilmoduls und des zweiten Teilmoduls ausgelegt ist. Aktiv oder zusätzlich kann eine Strahlumlenkeinrichtung zum Umlenken eines Strahlengangs von optischen Kanälen ausgelegt sein, um die Strahlengänge des ersten Teilmoduls und des zweiten Teilmoduls gemeinsam umzulenken.

Nachfolgend wird Bezug genommen auf Vorrichtungen, die zumindest eine Multiaperturabbildungsvorrichtung umfassen. Bei den Vorrichtungen kann es sich um Abbildungssysteme handeln, die konfiguriert sind, um mittels der zumindest einen Multiaperturabbildungsvorrichtung den Objektbereich abzubilden. Beispielsweise kann es sich bei den nachfolgend beschriebenen Multiaperturabbildungsvorrichtungen um die Multiaperturabbildungsvorrichtung 1000, 2000, 4000 und/oder 8000 handeln.

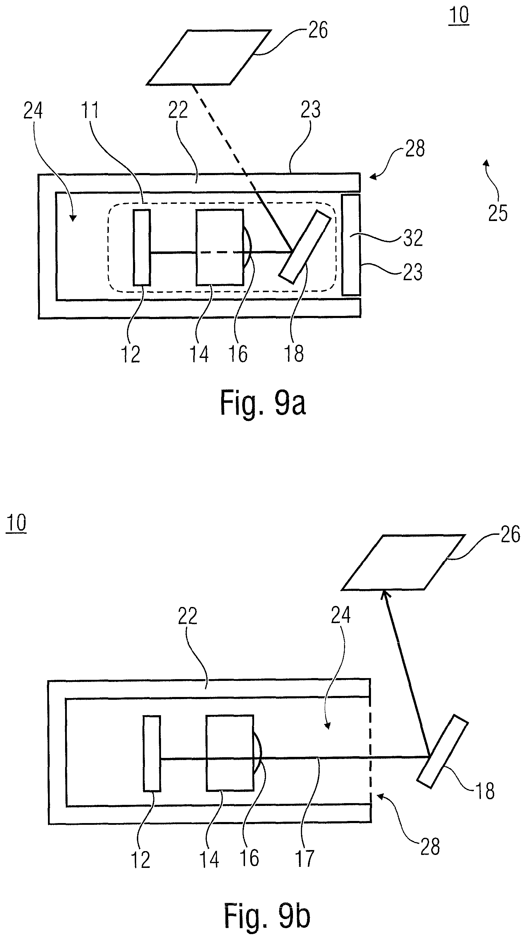

Fig. 9a zeigt eine schematische Seitenschnittansicht einer Vorrichtung 10 gemäß einem Ausführungsbeispiel in einem ersten Betriebszustand. Bei der Vorrichtung 10 kann es sich um eine mobile oder immobile Vorrichtung handeln, wie etwa ein Mobiltelefon, ein Smartphone, ein mobiler Computer, wie etwa ein Tablet-Computer und/oder eine mobile Musikabspieleinrichtung.

Die Vorrichtung 10 umfasst eine Multiaperturabbildungsvorrichtung 11, etwa die Multiaperturabbildungsvorrichtung 1000, 2000, 4000 und/oder 8000. Die Multiaperturabbildungsvorrichtung 11 weist einen Bildsensor 12, ein Array 14 von nebeneinander angeordneten optischen Kanälen 16 und eine Strahlumlenkeinrichtung 18 auf. Die Strahlumlenkeinrichtung 18 ist ausgebildet, um einen Strahlengang 17 der optischen Kanäle 16 umzulenken und wird später ausführlich beschrieben. Die Vorrichtung 10 umfasst ein Gehäuse 22, das Außenflächen 23 aufweist, die ein Gehäusevolumen 24 umschließen. Das bedeutet, das Gehäusevolumen 24 kann ein Innenvolumen des Gehäuses 22 und das Volumen des Gehäuses 22 umfassen. Das Gehäusevolumen beinhaltet dabei auch ein Volumen, dass durch die Gehäusewände beansprucht wird und wird somit von den Außenflächen 23 des Gehäuses umschlossen. Das Gehäuse 22 kann transparent oder opak gebildet sein und bspw. Kunststoffmaterialien und/oder Metallmaterialien umfassen. Die Strahlumlenkeinrichtung 18 weist eine erste Position innerhalb des Gehäusevolumens 24 auf. Löcher oder Durchbrüche in den Gehäuseseiten, etwa für akustische Kanäle von Mikrophonen oder für elektrische Kontakte der Vorrichtung 10 können für die Bestimmung des Gehäusevolumens 24 vernachlässigt werden. Das Gehäuse 22 und/oder in dem Gehäuse 22 angeordnete Bauteile können den Strahlengang 17 der optischen Kanäle 16 nach einer Umlenkung durch die Strahlumlenkeinrichtung 18 blockieren, so dass ein außerhalb des Gehäuses 22 angeordnetes Gesichtsfeld 26 mit der Multiaperturabbildungsvorrichtung 11 erfasst werden soll nicht oder nur eingeschränkt erfassbar ist. Bei den Bauteilen kann es sich etwa um einen Akku, Platinen, nicht transparente Bereiche des Gehäuses 22 oder dergleichen handeln. Anders ausgedrückt kann an einem Gehäuse anstelle eines bisherigen Kameraobjektivs ein anderes, ggf. nicht-optisches Bauelement angeordnet werden.

Das Gehäuse 22 kann eine Öffnung 28 aufweisen, durch die das Gehäusevolumen 24 mit einem Außenvolumen 25 des Gehäuses 22 verbunden ist. Die Öffnung 28 kann zeitweise von einer Abdeckung 32 ganz oder teilweise verschlossen sein. Der erste Betriebszustand der Vorrichtung 10 kann ein inaktiver Betriebszustand der Multiaperturabbildungsvorrichtung 11 sein, bei dem die optischen Kanäle 16 bspw. auf die Innenseite des Gehäuses 22 gelenkt werden oder nicht umgelenkt werden.

In anderen Worten wird die Bauhöhe des Aufbaus der Multiaperturabbildungsvorrichtung zumindest teilweise vom Durchmesser von Optiken der optischen Kanäle 16 (Linsen) bestimmt. In einem (ggf. optimalen) Fall ist die Ausdehnung der Spiegel (Strahlumlenkeinrichtung) in dieser Dickenrichtung gleich groß der Ausdehnung der Linsen in dieser Richtung. Dabei wird jedoch der Strahlengang des optischen Kanals 16 durch den Spiegel 18 beschnitten. Dies führt zu einer Reduzierung der Bildhelligkeit, wobei diese Reduzierung abhängig vom Feldwinkel ist. Die vorliegenden Ausführungsbeispiele lösen dies Problem, indem Teile oder aber der gesamte Multikanalkameraaufbau bewegt wird, so dass im Betriebszustand der Kamera Teile des Aufbaus über das Gehäuse z.B. eines Smartphones herausragen verglichen mit dem Zustand der Nichtnutzung der Kamera. Die Bewegung der Teile, wie z.B. die Strahlumlenkeinrichtung, kann rotativ (Ausklappen oder Aufklappen), translativ (Ausfahren) oder aus einer Mischform bestehen. Die zusätzlichen Bewegungen von Teilen bzw. des Gesamtsystems ermöglichen, ähnlich bekannter Zoom-Objektive an Kompaktkameras, eine minimale Bauform im Nichtnutzungsmodus der Kameras und eine für die Realisierung der technischen Funktion optimierte, größere Bauform im Nutzungsmodus der Kamera.

Fig. 9b zeigt eine schematische Seitenschnittansicht der Vorrichtung 10 in einem zweiten Betriebszustand. In dem zweiten Betriebszustand weist die Strahlumlenkeinrichtung 18 eine zweite Position außerhalb des Gehäusevolumens 24 auf. Dies ermöglicht, dass die Strahlumlenkeinrichtung 18 die Strahlengänge 17 der optischen Kanäle 16 außerhalb des Gehäusevolumens 24 umlenkt und das Gesichtsfeld 26 außerhalb des Gehäuses 22 von der Multiaperturabbildungsvorrichtung 11 erfassbar ist. Die Abdeckung 32 kann aus der in Figur 9a gezeigten Position wegbewegt sein, so dass die Strahlumlenkeinrichtung 18 durch die Öffnung 28 des Gehäuses 22 aus dem Gehäusevolumen 24 bewegbar ist. Die Strahlumlenkeinrichtung 18 kann translatorisch und/oder rotatorisch zwischen der ersten Position und der zweiten Position bewegt werden. Vorteilhaft ist, dass die Bauteile innerhalb des Gehäuses 22 und/oder das Gehäuse 22 den umgelenkten Strahlengang 17 der optischen Kanäle 16 nicht blockieren.

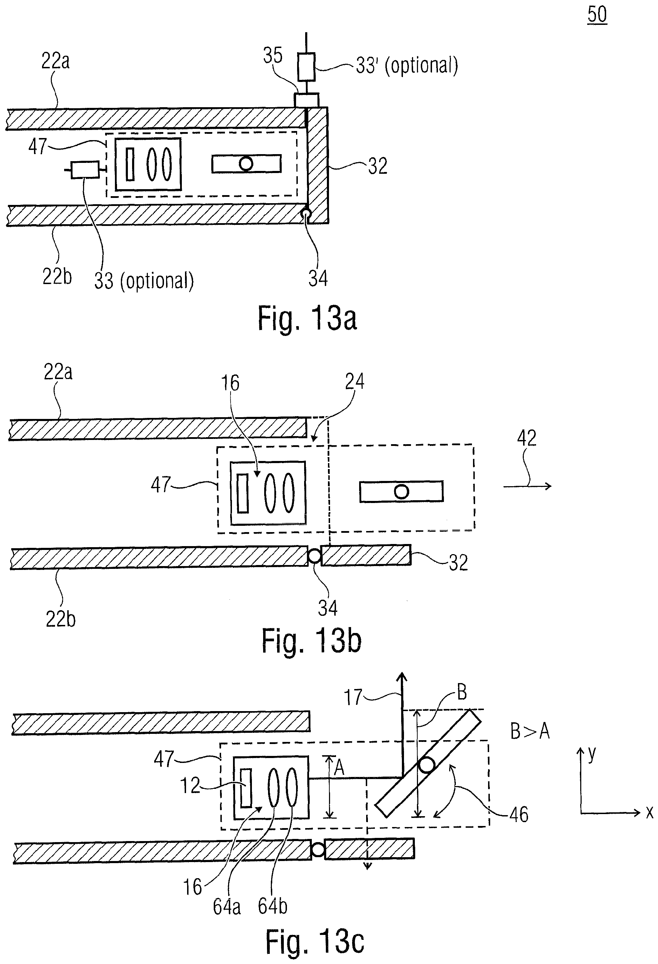

Die Multiaperturabbildungsvorrichtung 11 kann in einem Kameragehäuse angeordnet sein, das wiederum zumindest teilweise in dem Gehäuse 22 angeordnet ist. Das Kameragehäuse kann bspw. zumindest teilweise von einem Verfahrschlitten, wie er im Zusammenhang mit Fig. 13 beschrieben ist, gebildet sein. Dies unterscheidet sich von einem Konzept, bei dem eine einkanalige Kamera mittels eines Umklapp-Mechanismus in verscheide Richtungen orientiert wird, dadurch, dass vorliegend eine Rotation oder Verkippung eines Bildsensors und/oder der Abbildungsoptik vermeidbar ist.

Ein Gesamtgesichtsfeld kann mittels der Vorrichtung 10 so erfasst werden, dass die Strahlumlenkeinrichtung ausgehend von der ersten Position in die zweite Position bewegt wird, in der die Strahlumlenkeinrichtung zumindest teilweise außerhalb eines Gehäusevolumens platziert wird. Weist die Strahlumlenkeinrichtung die zweite Position auf, kann das Gesamtgesichtsfeld und mit dem Array von nebeneinander angeordneten optischen Kanälen der Multiaperturabbildungsvorrichtung, deren Strahlengänge von der Strahlumlenkeinrichtung umgelenkt werden, erfasst werden.

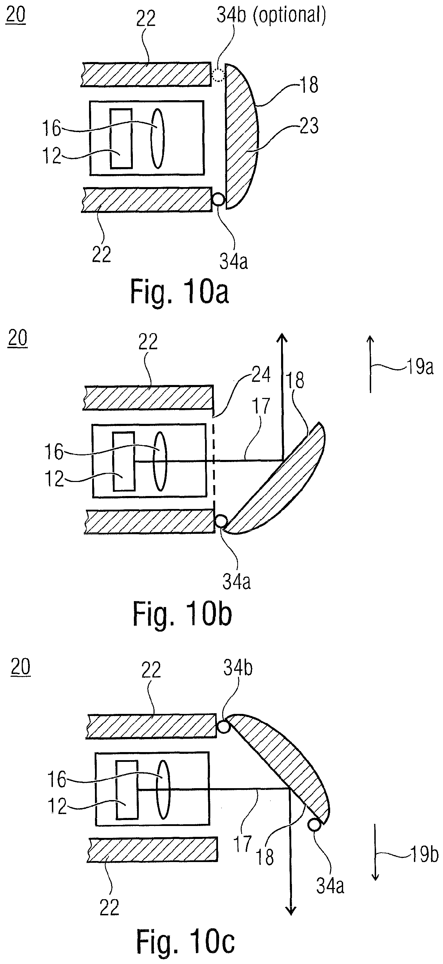

Fig. 10a zeigt eine schematische Seitenschnittansicht einer Vorrichtung 20 gemäß einem weiteren Ausführungsbeispiel in einem ersten Betriebszustand. Die Vorrichtung 20 weist die Abdeckung 23 auf, die drehbar an dem Gehäuse 22 gelagert ist, etwa über ein Verbindungselement 34a und/oder über ein optionales Verbindungselement 34b. Das Verbindungselement 34a und/oder 34b kann ausgebildet sein, um ein Verkippen und mithin eine rotatorische Bewegung zwischen der Abdeckung 23 der Strahlumlenkeinrichtung 18 gegenüber dem Gehäuse 22 zu ermöglichen und bspw. als Scharnier oder Walzenlager gebildet sein.

Die Strahlumlenkeinrichtung 18 kann eine Abdeckung des Gehäuses bilden oder ein Teil hiervon sein. Eine der strahlumlenkenden Oberflächen der Strahlumlenkeinrichtung 18 kann eine Außenkannte des Gehäuses sein. Die Strahlumlenkeinrichtung 18 weist eine erste Position auf und verschließt das Gehäuse 22 teilweise oder vollständig. Bspw. kann die Strahlumlenkeinrichtung 18 einen reflektiven Bereich zum Umlenken des Strahlengang 17 aufweisen und Kontaktbereiche aufweisen, die ausgebildet sind, um mit dem Gehäuse 22 in er ersten Position einen mechanischen Kontakt zu bilden. Vereinfacht ausgedrückt, kann die Kamera nicht oder kaum sichtbar sein, wenn sie nicht benutzt wird.

Fig. 10b zeigt eine schematische Seitenschnittansicht der Vorrichtung 20 in einem zweiten Betriebszustand. In dem zweiten Betriebszustand kann die Strahlumlenkeinrichtung 18 rotatorisch gegenüber dem Gehäuse 22 bewegt, d. h., ausgeklappt, sein, so dass das Gehäusevolumen 24 geöffnet ist. Die rotatorische Verkippung ermöglicht eine geneigte oder verkippte Orientierung der Strahlumlenkeinrichtung 18 gegenüber einem Verlauf des Strahlengangs 17 der optischen Kanäle 16 zwischen dem Bildsensor 12 und der Strahlumlenkeinrichtung 18, so dass der Strahlengang 17 an der Strahlumlenkeinrichtung 18 in eine erste Richtung 19a umgelenkt wird.

Fig. 10c zeigt eine schematische Seitenschnittansicht der Vorrichtung 20 in einer dritten Position. Die Vorrichtung 20 kann den zweiten Betriebszustand aufweisen. Verglichen mit der zweiten Position, wie sie in Fig. 10b dargestellt ist, kann die Strahlumlenkeinrichtung 18 den Strahlengang 17 der optischen Kanäle 16 in eine andere Richtung 19b umlenken, so dass ein anderes Gesichtsfeld oder ein an einem anderen Ort positioniertes Gesichtsfeld erfassbar ist. Bspw. kann es sich um eine erste Seite und eine gegenüberliegende Seite, wie etwa Vorderseite und Rückseite, Links und Rechts oder Oben und Unten der Vorrichtung 20 und/oder eines Nutzers handeln, in die das Strahlengang 17 umgelenkt wird. Die Verbindungselemente 34a und 34b können bspw. mit einer Rahmenstruktur und der Strahlumlenkeinrichtung 18 verbunden sein, so dass die Strahlumlenkeinrichtung 18 wechselseitig die zweite oder dritte Position aufweisen kann. Durch eine umschaltbare Blickrichtung der Multiaperturabbildungsvorrichtung können bisherige Lösungen insbesondere in Smartphones unter Nutzung zweier Kameras mit Blickrichtung nach vorn und hinten durch einen Aufbau ersetzt werden.

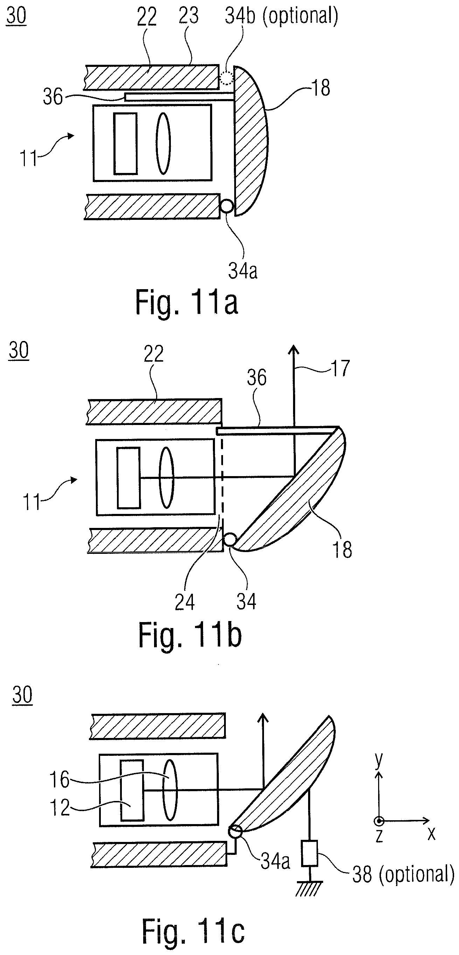

Fig. 11a zeigt eine schematische Seitenschnittansicht einer Vorrichtung 30 gemäß einem weiteren Ausführungsbeispiel in dem ersten Betriebszustand. Verglichen mit der Vorrichtung 20, wie sie in den Figuren 10a-c beschrieben ist, weist die Vorrichtung 30 eine zumindest teilweise transparente Abdeckung 36 auf, die zwischen einer Außenkannte 23 des Gehäuses 22 und der Multiaperturabbildungsvorrichtung 11 angeordnet ist. Die zumindest teilweise transparente Abdeckung ist mit der Strahlumlenkeinrichtung 18 verbunden und ausgebildet, um sich basierend auf einer Bewegung der Strahlumlenkeinrichtung 18 zu bewegen. Die zumindest teilweise transparente Abdeckung 36 kann bspw. polymere und/oder Glasmaterialien aufweisen.

In anderen Worten können u. a. Vorrichtungen vorgesehen sein, die eine Kapselung der Optik zum Schutz vor Verschmutzung unter Möglichkeit der Änderung des gekapselten Volumens ermöglichen (bewegliche Deckgläser).

Fig. 11b zeigt eine schematische Seitenschnittansicht der Vorrichtung 30 in dem zweiten Betriebszustand. Verglichen mit der Vorrichtung 20 in Fig. 10b ist die zumindest teilweise transparente Abdeckung zumindest teilweise aus dem Gehäusevolumen 24 herausbewegt. Dies kann durch eine Rotationsbewegung der Strahlumlenkeinrichtung um das Verbindungselement 34 erfolgen. Die Strahlumlenkeinrichtung 18 ist ausgebildet, um den Strahlengang 17 der optischen Kanäle 16 so umzulenken, dass die optischen Kanäle durch die zumindest teilweise transparente Abdeckung verlaufen. Die Abdeckung 36 ist ausgebildet, um einen Eintritt von Partikeln, Schmutz und/oder Feuchtigkeit in das Gehäusevolumen 24 zu reduzieren oder zu verhindern. Die Abdeckung 36 kann dabei für die Strahlengänge 17 transparent gebildet sein und/oder teilweise opak ausgebildet sein. Bspw. kann die Abdeckung 36 für bestimmte Wellenlängenbereiche elektromagnetischer Strahlung intransparent sein. Vorteilhaft an der Abdeckung 36 ist, dass durch den reduzierten Umfang von Partikeln, Schmutz und/oder Feuchtigkeit eine lange Betriebsdauer der Vorrichtung und/oder eine dauerhaft hohe Bildqualität erhalten werden kann, da eine Verschmutzung von Optiken der optischen Kanäle gering ist.

Fig. 11c zeigt eine schematische Seitenschnittansicht der Vorrichtung 30, bei der die Strahlumlenkeinrichtung 18 mit einem optionalen Aktor 38 translatorisch entlang einer Richtung y senkrecht zu einer Richtung x des Strahlengangs 17 zwischen dem Bildsensor 12 und den optischen Kanälen 16 und senkrecht zu einer Richtung z senkrecht zu einer Zeilenerstreckungsrichtung des Arrays von optischen Kanälen 16 bewegbar ist. Die Strahlumlenkeinrichtung 18 kann auch basierend auf der Rotationsbewegung um das Verbindungselement 34 translatorisch bewegt werden, etwa über eine Führung, einen Hebel oder dergleichen. Das Aufklappen (Rotationsbewegung) kann manuell oder unter Nutzung eines Aktors erfolgen. Der optionale Aktor 38 kann an der Strahlumlenkeinrichtung 18 angeordnet sein. Alternativ kann der Aktor 38 zwischen dem Gehäuse 22 und der Strahlumlenkeinrichtung 18 angeordnet sein. Der Aktor 38 kann bspw. zwischen dem Gehäuse 22 und dem Verbindungselement 34a und/oder zwischen dem Verbindungselement 34a und der Strahlumlenkeinrichtung 18 angeordnet sein. Vorteilhaft daran ist, dass durch die translatorische Bewegung der Strahlumlenkeinrichtung entlang der x-Richtung das Gehäuse eine Abschattung des zu erfassenden Gesichtsfeldes durch das Gehäuse 22 reduzierbar ist.

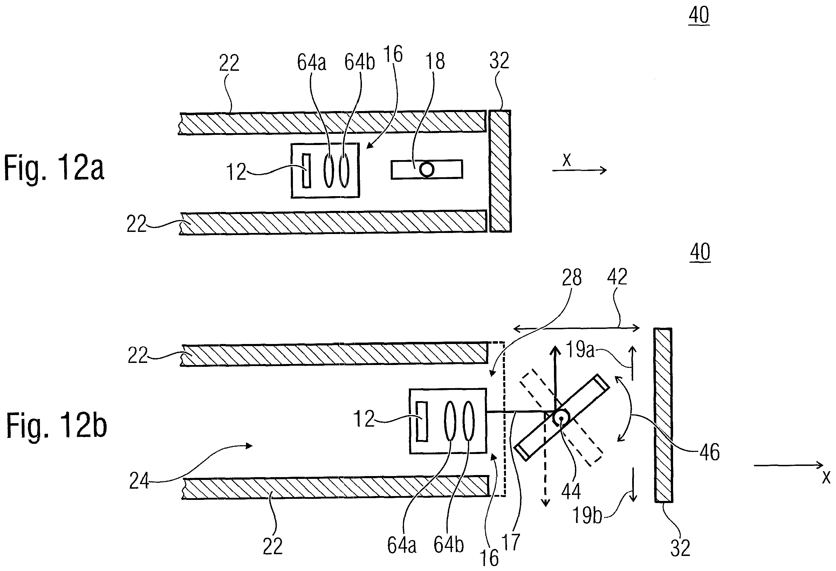

Fig. 12a zeigt eine schematische Seitenschnittansicht einer Vorrichtung 40 gemäß einem Ausführungsbeispiel in dem ersten Betriebszustand. Die Strahlumlenkeinrichtung 18 ist in der ersten Position innerhalb des Gehäusevolumens des Gehäuses 22 angeordnet und ausgebildet, um basierend auf einer translatorischen Bewegung 42 von der ersten Position in die zweite Position bewegt zu werden, die schematisch in Fig. 12b dargestellt ist. Wie in Fig. 12a dargestellt, kann das Gehäuse die Abdeckung 32 aufweisen, die das Gehäuse 22 bzw. eine Öffnung darin in dem ersten Betriebszustand verschließt. Die Strahlumlenkeinrichtung 18 kann in dem ersten Betriebszustand so orientiert sein, dass sie senkrecht zu einer Richtung x, die durch den optischen Strahlengang innerhalb des Gehäuses 22 definiert wird, eine minimale Ausdehnung aufweist.

Fig. 12b zeigt eine schematische Seitenschnittansicht der Vorrichtung 40 in dem zweiten Betriebszustand. Die Strahlumlenkeinrichtung ist basierend auf der translatorischen Bewegung 42, bspw. entlang der x-Richtung aus dem Gehäusevolumen 24 herausbewegt. Hierfür kann die Strahlumlenkeinrichtung 18 durch die Öffnung 28 bewegt werden. Die Strahlumlenkeinrichtung 18 kann um eine Rotationsachse 44 rotatorisch bewegbar sein. Während der translatorischen Bewegung zwischen dem ersten Betriebszustand und dem zweiten Betriebszustand kann die Strahlumlenkeinrichtung 18 eine rotatorische Bewegung um die Rotationsachse 44 ausführen. Eine Winkelorientierung der Strahlumlenkeinheit kann verglichen mit dem ersten Betriebszustand aus Fig. 12a verändert sein, so dass die vom Strahlengang der Multiaperturabbildungsvorrichtung genutzte Fläche der Strahlumlenkeinrichtung verglichen mit dem ersten Betriebszustand zunimmt. Eine Rotationsbewegung 46 um die Rotationsachse 44 ermöglicht eine veränderliche Neigung der Strahlumlenkeinrichtung 18 gegenüber dem Strahlengang 17 zwischen den optischen Kanälen 16 und der Strahlumlenkeinrichtung 18 und mithin eine veränderliche Richtung in die der Strahlengang 17 der optischen Kanäle 16 abgelenkt wird. Die optischen Kanäle 16 können Optiken 64a-b aufweisen.

Zusätzlich zur Strahlumlenkeinrichtung 18 können in dem zweiten Betriebszustand Optiken 64a-b der optischen Kanäle 16 und/oder der Bildsensor 12 außerhalb des Gehäusevolumens 24 angeordnet sein. Bspw. können die Optiken 64a-b der optischen Kanäle 16 und/oder der Bildsensor 12 mit der Strahlumlenkeinrichtung 18 mitbewegt werden.

In anderen Worten umfassen Multiaperturkameras mit linearer Kanalanordnung mehrere optische Kanäle, die nebeneinander angeordnet sind, und jeweils Teile des Gesamtgesichtsfeldes übertragen. Vorteilhafterweise ist ein Spiegel vor den Abbildungslinsen angebracht, der zur Strahlumlenkung genutzt werden kann und zur Reduzierung der Bauhöhe beiträgt. In Kombination mit einem kanalweise angepassten Spiegel, etwa ein Facettenspiegel, wobei die Facetten plan oder beliebig gekrümmt oder mit einer Freiformfläche versehen sind, ist es vorteilhafterweise möglich, dass die Abbildungsoptiken der optischen Kanäle im Wesentlichen identisch aufgebaut sind, wohingegen die Blickrichtung der Kanäle durch die einzelnen Facetten des Spiegel-Arrays vorgegeben sind. Eine Oberfläche der Strahlumlenkeinrichtung ist zumindest an den optischen Kanälen zugeordneten reflektierenden Facetten verspiegelt. Es ist auch möglich, dass die Abbildungsoptiken der Kanäle unterschiedlich ausgeprägt sind, so dass sich unterschiedliche Blickrichtungen durch den Winkel der Spiegelfacette und der Gestaltung des jeweiligen optischen Kanals ergeben. Es ist weiterhin möglich, dass mehrere Kanäle denselben Bereich der Strahlumlenkeinrichtung nutzen und damit die Anzahl von Facetten kleiner als die der Kanäle ist. Der Ablenkspiegel kann dabei drehbar gelagert sein, wobei die Drehachse bspw. parallel zur Erstreckungsrichtung der Kanäle verläuft. Der Ablenkspiegel kann beidseitig reflektiv sein, wobei metallische oder dielektrische Schichten(folgen) genutzt werden können. Die Drehung des Spiegels kann analog oder bistabil oder mehrfach stabil erfolgen. Basierend auf der Dreh- oder Rotationsbewegung kann die Strahlumlenkeinrichtung zwischen zumindest einer ersten Stellung und einer zweiten Stellung bewegbar sein, wobei die Strahlengänge in jeder Stellung in voneinander verschiedene Richtungen umgelenkt werden. Ähnlich, wie es für die Stellungen der Strahlumlenkeinrichtung 18 in den Fig. 10-c beschrieben ist kann die Strahlumlenkeinrichtung auch um eine Rotationsachse bewegt werden. Zusätzlich zur translatorischen Bewegung der Gehäuseabdeckung 32 und der Strahlumlenkeinrichtung 18 können Teile bzw. alle zusätzlichen Komponenten der Multiaperturabbildungsvorrichtung translativ in dieselbe Richtung mitbewegt werden, wobei gleiche oder auch unterschiedliche Stellwege möglich sind.

Fig. 13a zeigt eine schematische Seitenschnittansicht einer Vorrichtung 50 bei der die Abdeckung 32 rotatorisch bewegbar über ein Bewegungselement 34 an einer Gehäuseseite 22b des Gehäuses 22 angeordnet ist. Die Strahlumlenkeinrichtung 18 kann mit einem Verfahrschlitten 47 mechanisch verbunden sein. Der Verfahrschlitten 47 kann als mechanische Transporteinrichtung zum Bewegen zumindest der Strahlumlenkeinrichtung 18 verstanden werden. Die Vorrichtung 50 kann einen Aktor 33 umfassen, der ausgebildet ist, um den Verfahrschlitten 47 translatorisch zu bewegen. Der Aktor kann einen beliebigen Antrieb, etwa einen Schrittmotor, einen piezoelektrischen Antrieb oder einen Tauchspulenantrieb umfassen. Alternativ oder zusätzlich zu dem Aktor 33 kann die Vorrichtung 50 einen Aktor 33' umfassen, der ausgebildet ist, um eine mechanische Verriegelung 35 zu lösen, die die Abdeckung 32 und das Gehäuse an zumindest einer Gehäuseseite 22a verriegelt. Bspw. kann die Strahlumlenkeinrichtung oder der Verfahrschlitten 47 mittels einer Federkraft aus dem Gehäuse fahrbar sein, wenn die Verriegelung 33' gelöst wird. Das bedeutet, die Verriegelung 35 kann ausgebildet sein, um die Strahlumlenkeinrichtung 18 in der ersten Position zu halten. Der Verfahrschlitten 47 kann auch in Vorrichtung 40 angeordnet sein. Das bedeutet, der Verfahrschlitten 47 ist auch bei einer translatorischen Bewegung der Abdeckung 32 einsetzbar.

Fig. 13b zeigt eine schematische Seitenschnittansicht der Vorrichtung 50 bei der der Verfahrschlitten 47 entlang der translatorischen Bewegungsrichtung 42 bewegt ist, so dass die Strahlumlenkeinrichtung 18 aus dem Gehäusevolumen 24 herausbewegt ist. Der Bildsensor 12 und/oder Optiken der optischen Kanäle 16 können ebenfalls mit dem Verfahrschlitten 47 mechanisch verbunden sein und mit der Strahlumlenkeinrichtung 18 in einem gleichen Umfang mitbewegbar sein. Alternativ können der Bildsensor 12 und/oder die Optiken der optischen Kanäle 16 in einem geringeren Umfang als die Strahlumlenkeinrichtung 18 bewegbar sein, so dass ein Abstand zwischen dem Bildsensor 12, den Optiken und/oder Strahlumlenkeinrichtung 18 während eines Herausfahrens vergrößert wird. Alternativ oder zusätzlich können der Bildsensor 12 und/oder die Optiken der optischen Kanäle ortsfest bzgl. des Gehäuses angeordnet sein, so dass lediglich die Strahlumlenkeinrichtung 18 mittels des Verfahrschlittens 47 bewegt wird. Ein sich vergrößernder Abstand zwischen dem Bildsensor 12, den Optiken und/oder Strahlumlenkeinrichtung 18 während eines Herausfahrens ermöglicht einen geringen Abstand der Komponenten in dem ersten Betriebszustand, so dass die Multiaperturabbildungsvorrichtung mit einem geringen Bauraumbedarf in dem Gehäuse 22 untergebracht werden kann.

Fig. 13c zeigt eine schematische Seitenschnittansicht der Vorrichtung 50 in dem zweiten Betriebszustand. Die Strahlumlenkeinrichtung kann rotatorisch gelagert sein, um die Rotationsbewegung 46 auszuführen, wie es bspw. für die Vorrichtung 40 beschrieben ist. Wie es im Zusammenhang mit Fig. 12b beschrieben ist, kann die Winkelorientierung der Strahlumlenkeinrichtung 18 verglichen mit dem ersten Betriebszustand aus Fig. 13a oder dem Zustand in Fig. 13b verändert sein, so dass die vom Strahlengang der Multiaperturabbildungsvorrichtung genutzte Fläche der Strahlumlenkeinheit verglichen mit dem ersten Betriebszustand zunimmt. Eine den optischen Kanälen 16 bzw. dem Bildsensor 12 zugewandte Seite der Strahlumlenkeinrichtung 18 kann eine Abmessung B senkrecht zu der translatorischen Bewegungsrichtung 42, bspw. entlang der y-Richtung aufweisen, die größer ist, als eine Abmessung A des Bildsensors 12 bzw. der optischen Kanäle 16 entlang dieser Richtung. Die Abmessung B ist bspw. senkrecht zu einer Zeilenerstreckungsrichtung des Arrays und parallel zu einer Oberfläche eines Bildsensors, auf den die optischen Kanäle treffen. Dies kann dazu führen, dass ein hohes Maß an Licht von der Stahlumlenkeinrichtung 18 umlenkbar ist und eine Helligkeit eines zu erfassenden Bildes hoch ist. In der in Fig. 13a gezeigten Stellung ist die Ausdehnung oder Abmessung B kleiner als in der in Fig. 13c gezeigten Stellung oder einer Stellung, in der die Strahlumlenkeinrichtung 18 den Strahlengang in eine andere Blickrichtung lenkt.

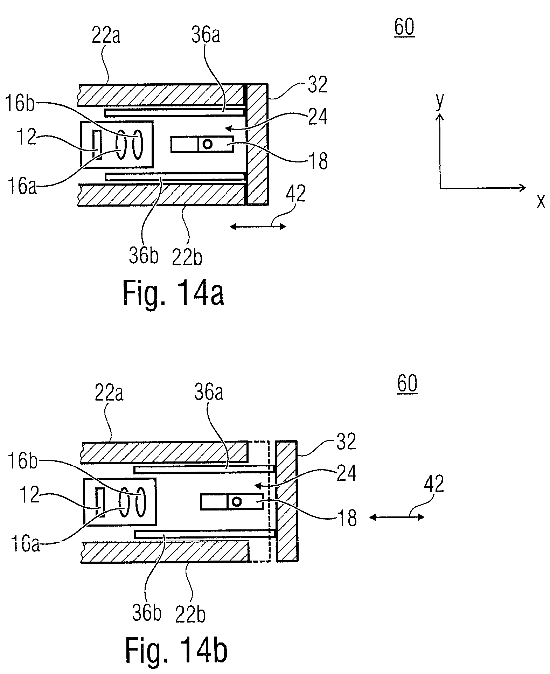

Fig. 14a zeigt eine schematische Seitenschnittansicht einer Vorrichtung 60 gemäß einem Ausführungsbeispiel in dem ersten Betriebszustand. Die Strahlumlenkeinrichtung 18 weist die erste Position auf. Verglichen mit der Vorrichtung 40 und der Vorrichtung, wie sie in den Figuren 12a und 12b beschrieben ist, weist die Vorrichtung 50 zumindest teilweise transparente Abdeckungen 36a und 36b auf, die mit der Abdeckung 32 verbunden sind und mit dieser entlang der translatorischen Bewegungsrichtung 42 bewegbar sind. Die zumindest teilweise transparenten Abdeckungen 36a und 36b können jeweils an voneinander verschiedenen Seiten der Strahlumlenkeinrichtung 18 zwischen selbiger und dem Gehäuse 22 angeordnet sein. In dem ersten Betriebszustand können die Abdeckungen 36a und 36b teilweise oder vollständig innerhalb des Gehäusevolumens 24 angeordnet sein. Die Abdeckungen 36a und 36b können bspw. an dem in den Fig. 13a-c dargestellten Verfahrschlitten 47 angeordnet oder transparente Bereiche des Verfahrschlittens 47 sein.

Fig. 14b zeigt eine schematische Seitenschnittansicht der Vorrichtung 60, bei der die Strahlumlenkeinrichtung 18 eine Zwischenposition zwischen der ersten Position und der zweiten Position aufweist. Bspw. kann die Zwischenposition der Strahlumlenkeinrichtung während eines Einfahrens oder eines Ausfahrens der Strahlumlenkeinrichtung 18 in das Gehäusevolumen 24 hinein bzw. aus dem Gehäusevolumen 24 heraus erhalten werden. Die Strahlumlenkeinrichtung 18 ist teilweise aus dem Gehäusevolumen 24 herausbewegt.

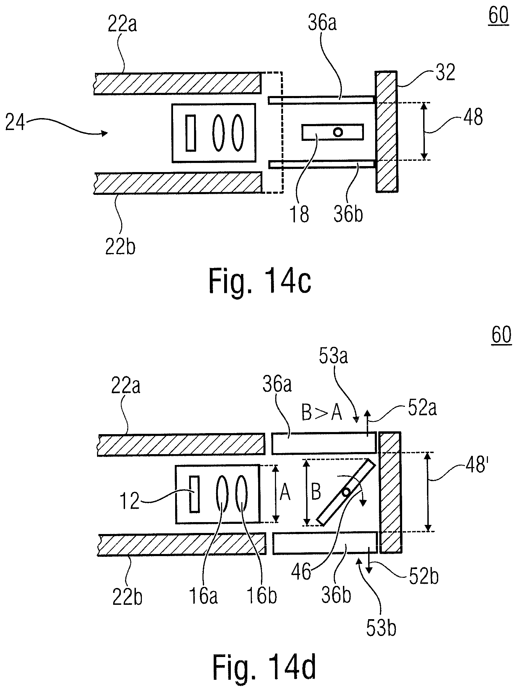

Fig. 14c zeigt eine schematische Seitenschnittansicht der Vorrichtung 60, bei der die Strahlumlenkeinrichtung 18 die zweite Position aufweist, d.h., die Strahlumlenkeinrichtung 18 ist bspw. vollständig aus dem Gehäusevolumen 24 herausgefahren. Die zumindest teilweise transparenten Abdeckungen 36a und 36b weisen einen Abstand 48 zueinander auf, der kleiner ist als ein vergleichbarer Abstand zwischen Seitenflächen des Gehäuses 22a und 22b.

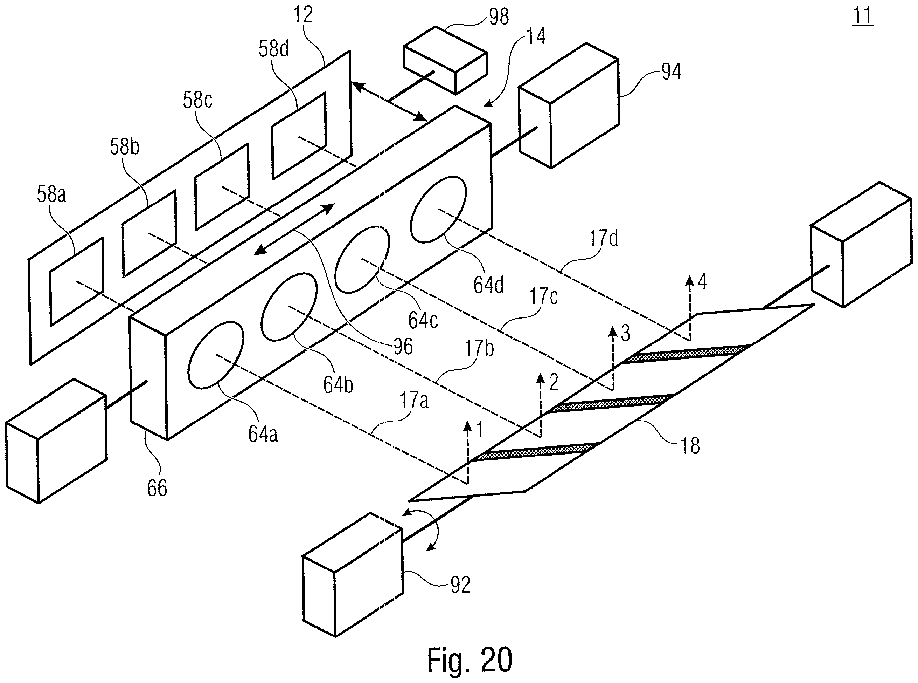

Fig. 14d zeigt eine schematische Seitenschnittansicht der Vorrichtung 60, bei der ein Abstand der zumindest teilweise transparenten Abdeckungen 36a und 36b verglichen mit den Fig. 14a-c vergrößert ist. Die zumindest teilweise transparenten Abdeckungen 36a und/oder 36b können entlang einer von der jeweils anderen zumindest teilweise transparenten Abdeckung 36a bzw. 36b abgewandte translatorische Bewegungsrichtung 52a bzw. 52b, bspw. entlang einer positiven oder negativen y-Richtung bewegbar sein. Der in den Fig. 14a-c dargestellte Zustand der zumindest teilweise transparenten Abdeckungen 36a und 36b kann als eingefahrener oder zusammengeklappter Zustand verstanden werden. Der in Fig. 14d dargestellte Zustand kann als ausgefahrener oder ausgeklappter Zustand verstanden werden, bei dem ein Abstand 48' zwischen den zumindest teilweise transparenten Abdeckungen 36a und 36b gegenüber dem Abstand 48 verändert, bspw. vergrößert ist. Der Abstand 48' kann bspw. größer oder gleich sein, als der Abstand zwischen den vergleichbaren Seiten des Gehäuses 22. Die Strahlumlenkeinrichtung 18 ist ausgebildet, um die Strahlengänge der optischen Kanäle so umzulenken, dass sie durch die zumindest teilweise transparenten Abdeckungen 36a und/oder 36b verlaufen. Wie es im Zusammenhang mit Fig. 12b, Fig. 13a und Fig. 13b beschrieben ist, kann die Winkelorientierung der Strahlumlenkeinrichtung 18 verglichen mit dem ersten Betriebszustand aus Fig. 14a oder dem Zustand in Fig. 14b oder 14c verändert sein, so dass die vom Strahlengang der Multiaperturabbildungsvorrichtung genutzte Fläche der Strahlumlenkeinheit verglichen mit dem ersten Betriebszustand zunimmt. Der vergrößerte Abstand 48' kann alternativ oder zusätzlich einen erhöhten Umfang der rotatorischen Bewegung 46 ermöglichen. Mit der rotatorischen Bewegung 46 kann die Strahlumlenkeinrichtung 18 zwischen zumindest einer ersten und einer weiteren Stellung umschaltbar sein, wobei jede Stellung einer Blickrichtung der Multiaperturabbildungsvorrichtung zugeordnet werden kann. Die Drehung des Spiegels kann analog oder bistabil oder mehrfach stabil erfolgen. Die rotatorische Bewegung 46 zur Veränderung einer Blickrichtung der Multiaperturabbildungsvorrichtung kann mit einer Rotationsbewegung der Strahlumlenkeinrichtung 18 zur optischen Bildstabilisierung kombiniert werden, was im Zusammenhang mit Fig. 20 beschrieben ist. Die Abdeckungen 36a und/oder 36b können die anderen Komponenten der Multiaperturabbildungsvorrichtung kapseln.

Die gegenüberliegend angeordneten Abdeckungen 36a und/oder 36b bzw. transparente Bereiche hiervon können eine schaltbare Blende aufweisen, so dass die schaltbare Blende bspw. ober- und/oder unterhalb oder entlang einer beliebigen anderen Richtung der Strahlumlenkeinrichtung eingebracht ist. Die Blende kann nach Betriebszustand und Blickrichtung der Kamera geschaltet werden. Bspw. kann jeweils eine nicht genutzt Blickrichtung der Multiaperturabbildungsvorrichtung von der Blende zumindest teilweise verschlossen werden, um einen Eintritt von Falschlicht zu reduzieren. Die Blenden können z. B. mechanisch bewegt oder elektrochrom sein. Die von der Blende beeinflussten Bereiche können zusätzlich mit einer schaltbaren Blende ausgestattet sein, die den optischen Aufbau für den Fall der Nichtbenutzung abdeckt. Die Blende kann elektrisch steuerbar sein und eine elektro-chrome Schicht(folge) umfassen. Die Blende kann ein mechanisch bewegtes Teil umfassen. Die Bewegung kann unter Nutzung pneumatischer, hydraulischer, piezoelektrischer Aktoren, DC-Motoren, Schrittmotoren, thermischer Aktoren, elektrostatischer Aktoren, elektrostriktiver und/oder magnetostriktiver Aktoren oder Antriebe erfolgen. In einem Zustand der Multiaperturabbildungsvorrichtung, bei der die Blickrichtung eine Blende durchdringt kann die Blende so geschaltet werden, um die Strahlengänge der optischen Kanäle durchzulassen. Das bedeutet, dass die Multiaperturabbildungsvorrichtung einen ersten Betriebszustand und einen zweiten Betriebszustand aufweisen kann. Die Strahlumlenkeinrichtung kann den Strahlengang der optischen Kanäle in dem ersten Betriebszustand so umlenken, dass dieser durch einen ersten transparenten Bereich der Abdeckung 36a verläuft. In dem zweiten Betriebszustand kann der Strahlengang der optischen Kanäle so umgelenkt werden, dass dieser durch einen zweiten transparenten Bereich der Abdeckung 36b verläuft. Eine erste Blende 53a kann ausgebildet sein, um den ersten transparenten Bereich in dem zweiten Betriebszustand optisch zumindest teilweise zu verschließen. Eine zweite Blende 53b kann ausgebildet sein, um den zweiten transparenten Bereich in dem ersten Betriebszustand optisch zeitweise zumindest teilweise zu verschließen. So kann ein Eintritt von Falschlicht aus einer Richtung, die nicht die aktuelle Blickrichtung der Multiaperturabbildungsvorrichtung ist, reduziert werden, was sich vorteilhaft auf die Bildqualität auswirkt. Die erste und/oder zweite Blende 53a-b kann für zumindest einen, für zumindest zwei oder für alle der optischen Kanäle wirksam sein. Bspw. können zumindest einer, zumindest zwei oder alle optischen Kanäle der Multiaperturabbildungsvorrichtung durch die erste Blende verlaufen, wenn der Strahlengang der optischen Kanäle durch den ersten transparenten Bereich gelenkt wird und durch die zweite Blende verlaufen, wenn der Strahlengang der optischen Kanäle durch den zweiten transparenten Bereich gelenkt wird.

Es wird darauf hingewiesen, dass es möglich ist, einen Mechanismus zum Ausklappen der Strahlumlenkeinrichtung gemäß den Figuren 10 und 11 mit einem Mechanismus zum translatorischen Bewegen zu kombinieren, d.h., es können Mischformen auftreten. Ein Aufklappen des Gehäuses und/oder ein Ausfahren der Strahlumlenkeinrichtung kann derart erfolgen, dass ggf. das Abbildungsmodul, d. h., die optischen Kanäle, Optiken davon und/oder der Bildsensor aus dem Gehäusevolumen bewegt werden. Eine Winkeländerung der Strahlumlenkeinrichtung kann ermöglichen, dass eine Ausdehnung der Multiaperturabbildungsvorrichtung in Dickenrichtung groß ist und/oder dass die Strahlumlenkeinrichtung den Strahlengang ungehindert nach "vorn" und "hinten" umlenken kann. Deckgläser, etwa die Abdeckungen 36 können auch bzgl. der ausgeklappten bzw. ausgefahrenen Elemente fixiert sein. Die Deckgläser können beliebige, ebene oder nicht-ebene Flächen aufweisen.

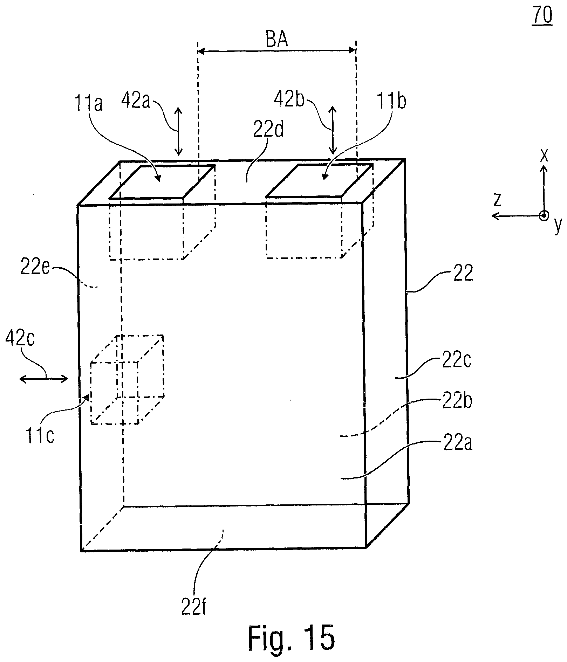

Fig. 15 zeigt eine schematische perspektivische Ansicht einer Vorrichtung 70 gemäß einem Ausführungsbeispiel, die drei Multiaperturabbildungsvorrichtungen 11a-c aufweist. Die Multiaperturabbildungsvorrichtungen 11a-c können translatorisch entlang einer jeweiligen translatorischen Bewegungsrichtung 42a-c bewegbar sein. Die Multiaperturabbildungsvorrichtungen 11a-c können in Nebenseiten 22c-f des Gehäuses 22 angeordnet sein. Das Gehäuse kann flach gebildet sein, das bedeutet, eine erste Ausdehnung des Gehäuses 22 entlang einer ersten Gehäuserichtung, bspw. eine x-Richtung, und eine zweite Ausdehnung des Gehäuses 22 entlang einer zweiten Gehäuserichtung, bspw. eine z-Richtung, kann mindestens eine dreifache Abmessung, mindestens eine fünffache oder mindestens eine siebenfache Abmessung verglichen mit einer dritten Ausdehnung des Gehäuses 22 entlang einer dritten Gehäuserichtung, etwa die y-Richtung, aufweisen. Eine Hauptseite 22a und/oder 22b des Gehäuses 22 kann die erste und die zweite Abmessung aufweisen und bspw. parallel zu einer x/z-Ebene im Raum angeordnet sein. Die Nebenseiten 22c-f können die Hauptseiten 22a und 22b verbinden bzw. dazwischen angeordnet sein.

Die Multiaperturabbildungsvorrichtungen 11a und 11b können in oder an derselben Seite 22d in dem Gehäuse 22 angeordnet sein und bspw. einen Basisabstand BA zueinander aufweisen, wie zum Beispiel zum Zweck der Stereoskopie. Mehr als zwei Module wären ebenfalls denkbar. So kann das Gesamtgesichtsfeld bspw. stereoskopisch oder höher durch eine Verwendung der Multiaperturabbildungsvorrichtung 11c und zumindest einer weiteren Multiaperturabbildungsvorrichtung 11a und/oder 11b erfasst werden. Die Multiaperturabbildungsvorrichtungen 11a, 11b und/oder 11c können einzeln bewegbar sein. Alternativ können zwei oder mehrere die Module auch gemeinsam als Gesamtsystem bewegbar sein.

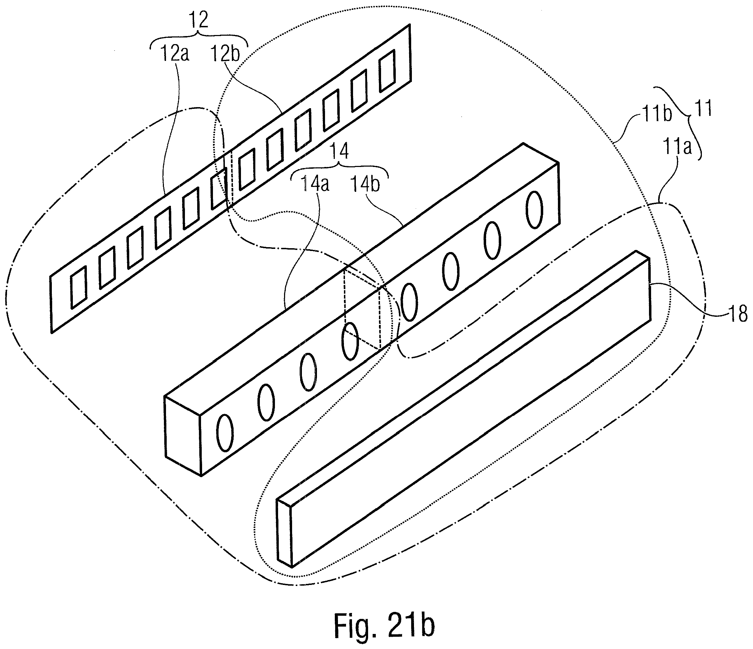

Wie es nachfolgend ausführlich beschrieben ist, kann die Vorrichtung 70 ausgebildet sein, um ein Gesamtgesichtsfeld zumindest stereoskopisch zu erfassen. Das Gesamtgesichtsfeld ist bspw. an einer der Hauptseite 22a oder 22b angeordnet, kann jedoch auch an einer Nebenseite 22c-f angeordnet sein. Beispielsweise können die Multiaperturabbildungsvorrichtungen 11a-c jeweils das Gesamtgesichtsfeld aufnehmen. Obwohl die Multiaperturabbildungsvorrichtungen 11a-c räumlich voneinander beabstandet angeordnet dargestellt sind, können die Multiaperturabbildungsvorrichtungen 11a, 11b und/oder 11c auch räumlich benachbart oder kombiniert angeordnet sein. Bspw. können die ggf. einzeilig gebildeten Arrays der Abbildungsvorrichtungen 11a und 11b nebeneinander oder parallel zu einander angeordnet sein, wie es bspw. im Zusammenhang mit Fig. 21b beschreiben ist. Die Arrays können Zeilen zueinander bilden, wobei jede Multiaperturabbildungsvorrichtung 11a und 11b ein einzeiliges Array aufweist. Die Abbildungsvorrichtungen 11a und 11b können eine gemeinsame Strahlumlenkeinrichtung und/oder einen gemeinsamen Träger von Optiken der optischen Kanäle und/oder ein gemeinsamen Bildsensor aufweisen.

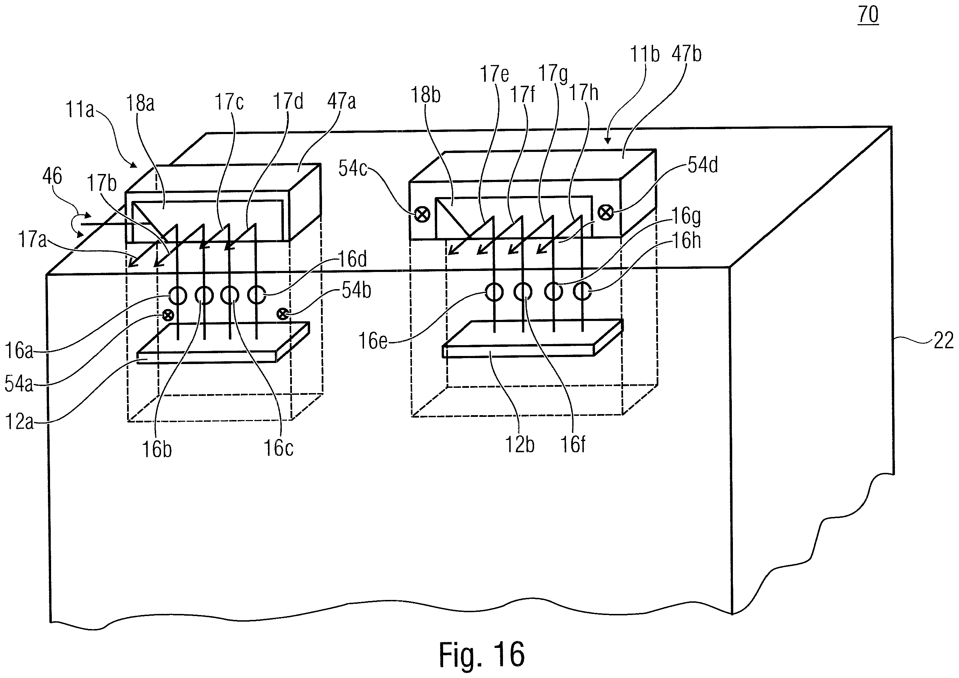

Fig. 16 zeigt eine vergrößerte perspektivische Ansicht eines Ausschnitts der Vorrichtung 70 und der Multiaperturabbildungsvorrichtungen 11a und 11b. Die Vorrichtung 70 weist den zweiten Betriebszustand auf. Bspw. ragt die Multiaperturabbildungsvorrichtung 11a und/oder 11b über die ursprüngliche Gehäuseseite heraus. Die Strahlumlenkeinrichtungen 18a und 18b sind basierend auf den translatorischen Bewegungsrichtungen 42a und 42b zumindest teilweise außerhalb des Gehäusevolumens bewegt. Alternativ kann in dem zweiten Betriebszustand auch lediglich ein Teil der Strahlumlenkeinrichtungen der Multiaperturabbildungsvorrichtungen 11a-c aus dem Gehäusevolumen des Gehäuses 22 bewegt sein.

Die Multiaperturabbildungsvorrichtungen 11a-b weisen bspw. jeweils vier optische Kanäle 16a-d und 16e-h auf. Die Strahlumlenkeinrichtungen 18a und 18b sind jeweils ausgebildet, um die Strahlengänge 17a-d bzw. 17e-h der optischen Kanäle 16a-d bzw. 17e-h umzulenken. Wie später ausführlich beschrieben ist, können andere Multiaperturabbildungsvorrichtungen eine von einander verschiedene Anzahl von optischen Kanälen aufweisen. Die Multiaperturabbildungsvorrichtungen 11a-b können eine gleiche oder eine von einander verschiedene Anzahl optischer Kanäle aufweisen.

Die Multiaperturabbildungsvorrichtungen 11a und 11b weisen jeweils Beleuchtungseinrichtungen 54a und 54b bzw. 54c und 54d auf. Die Beleuchtungseinrichtungen 54a-d sind ausgebildet, um das zu erfassende Gesamtgesichtsfeld zumindest teilweise zu beleuchten und können bspw. jeweils ausgebildet sein, um ein Zentrum des zu erfassenden Gesamtgesichtsfeldes (Objektbereich) zu beleuchten. Gemäß einem Ausführungsbeispiel kann zumindest eine der Beleuchtungseinrichtungen 54a oder 54b bzw. 54c oder 54d so angeordnet sein, dass sie entlang einer mittleren Blickrichtung der optischen Kanäle 16a-d bzw. 16e-h das Gesamtgesichtsfeld beleuchtet. Das Gesamtgesichtsfeld kann von einander verschiedene Teilgesichtsfelder aufweisen, die jeweils von zumindest einem optischen Kanal 16a-d bzw. 16e-h erfasst werden. Eine mittlere Blickrichtung von optischen Kanälen 16a-d oder 16e-h kann bspw. ein geometrisches Mittel der Blickrichtungen oder ein Medianwert der Blickrichtungen sein.

Die Beleuchtungseinrichtungen 54a-b und 54c-d können als Blitzlicht der jeweiligen Multiaperturabbildungsvorrichtung 11a oder 11b betrieben werden und eine beliebige Lichtquelle umfassen. Vorteilhaft kann die Lichtquelle bspw. als lichtemittierende Diode (LED) ausgeführt sein, da diese einen geringen Bauraumbedarf und einen geringen Energiebedarf aufweisen. Gemäß weiteren Ausführungsbeispielen kann eine Multiaperturabbildungsvorrichtung keine, eine oder mehr als zwei Beleuchtungseinrichtungen 54a-d umfassen, wobei die Anzahl von Beleuchtungseinrichtungen 54a-d einer Multiaperturabbildungsvorrichtung von anderen Multiaperturabbildungsvorrichtungen einer Vorrichtung verschieden oder gleich sein kann. Zumindest eine der Beleuchtungseinrichtungen 54a-d kann ausgebildet ist, um mehrere Objektbereiche auszuleuchten. So kann bspw. Licht wahlweise in eine oder in mehrere Richtungen von der Beleuchtungseinrichtung ausgesendet werden. Die Beleuchtungseinrichtung kann entlang zumindest zweier Blickrichtungen der Multiaperturabbildungsvorrichtung Licht aussenden. Hierfür kann die Beleuchtungseinrichtung zumindest zwei Lichtquellen umfassen. Die Lichtquellen können Licht in gegenüberliegenden Seiten der Vorrichtung aussenden. Bspw. kann jeweils eine Lichtquelle auf einer Ober- und einer Unterseite, einer Vorder- und einer Rückseite und/oder einer linken und rechten Seite des Verfahrschlittens 47 angebracht sein, wobei jeweils nur die Lichtquelle(n) der Seite genutzt werden, die dem aufzunehmenden Objektbereich entsprechend der gewählten Orientierung und damit des Betriebszustands der Strahlumlenkeinrichtung 18 gegenüberliegt und in dessen Richtung Licht aussendet. Die oben erwähnten Vorder-, Rück-, Ober- und Unterseite sowie die Bezeichnungen links oder rechts sollen lediglich der Verdeutlichung dienen und nicht einschränkend verstanden werden, da sie mit jeder Orientierung im Raum wechselseitig vertauschbar sind. Das bedeutet bspw., dass Lichtquellen 54i auf Vorder- und Rückseite des Verfahrschlittens 47b angeordnet sein können und je nach Stellung der Strahlumlenkeinrichtung 18b entsprechende Lichtquellen genutzt werden können. Die anderen, gegenüberliegenden Lichtquellen können ungenutzt bleiben.

Beispielsweise sind die Beleuchtungseinrichtungen 54a und 54b zwischen der Strahlumlenkeinrichtung 18a und dem Bildsensor 12a der Multiaperturabbildungsvorrichtung 11a angeordnet. Die Strahlumlenkeinrichtung 18 kann ausgebildet sein, um eine von der Beleuchtungseinrichtung 54a und/oder 54b ausgesendete Beleuchtungsstrahlung, etwa ein Blitzlicht, umzulenken. Die Beleuchtungseinrichtungen 54a-b können in dem ersten Betriebszustand und in dem zweiten Betriebszustand der Vorrichtung 70 innerhalb des Gehäusevolumens angeordnet sein. Die Beleuchtungsstrahlung kann zumindest teilweise Teil der Strahlengänge 17a-d sein. Wie es bspw. für die Multiaperturabbildungsvorrichtung 11b dargestellt ist, kann eine Beleuchtungseinrichtung 54c und/oder 54d lateral neben der Strahlumlenkeinrichtung an dem Verfahrschlitten 47b angeordnet sein. Die Beleuchtungseinrichtungen 54c und 54d können mit der translatorischen Bewegung 42b in das Gehäuse 22 oder aus dem Gehäuse 22 bewegt werden. Obwohl die Beleuchtungseinrichtung im Zusammenhang mit der Vorrichtung 70 beschrieben sind, können auch andere hierin beschriebene Vorrichtungen oder Multiaperturabbildungsvorrichtungen eine Beleuchtungseinrichtung aufweisen.

Die Beleuchtungseinrichtungen 54c und 54d können mit dem Verfahrschlitten 47a mechanisch verbunden sein und damit im ersten Betriebszustand innerhalb des Volumens 24 angeordnet und mithin für einen Nutzer nicht sichtbar angeordnet sein. Die Beleuchtungseinrichtungen 54a und 54b können alternativ und/oder zusätzlich stationär in dem Gehäuse 22 angeordnet sein. Eine Bewegung des Verfahrschlittens 47b kann eine Bewegung der Beleuchtungseinrichtungen 54c und 54d bewirken.

Zusammen mit der Strahlumlenkeinrichtung 18a bzw. 18b können auch Optiken 16a-d oder 16e-f und ggf. der Bildsensor 12a bzw. 12b durch die Bewegung des Verfahrschlittens 47a bzw. 47b aus dem Gehäusevolumen bewegt werden.

In anderen Worten können auf den bewegten Teilen LEDs für die Realisierung einer zusätzlichen Beleuchtung (Blitzlicht) angebracht sein. Die LEDs können dabei so angebracht sein, dass sie in die mittlere Richtung der Kanäle strahlen bzw. können die Strahlumlenkeinrichtungen weitere Bereiche vorhalten, die zur Umlenkung der Strahlung genutzt wird.

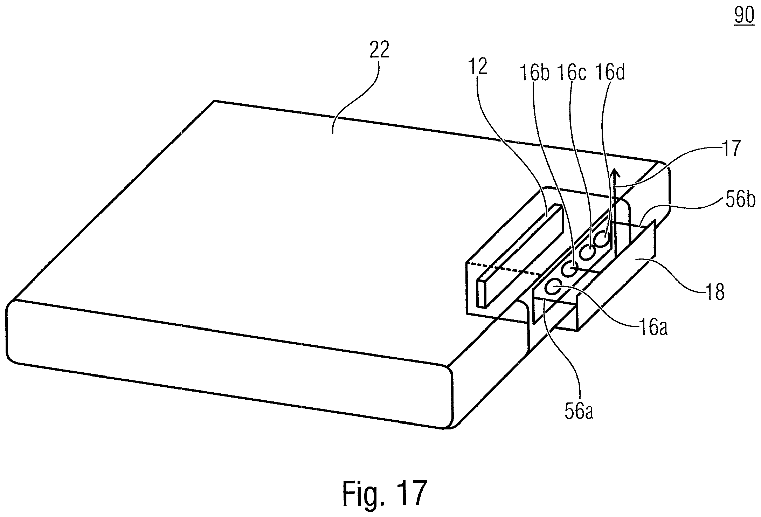

Fig. 17 zeigt eine schematische perspektivische Ansicht einer Vorrichtung 90 gemäß einem Ausführungsbeispiel, die den zweiten Betriebszustand aufweist. Die Strahlumlenkeinrichtung 18 kann mittels Befestigungselementen 56a und 56b mit der Multiaperturabbildungsvorrichtung verbunden sein. Die Befestigungselemente 56a und 56b können Teil eines Verfahrschlittens sein.

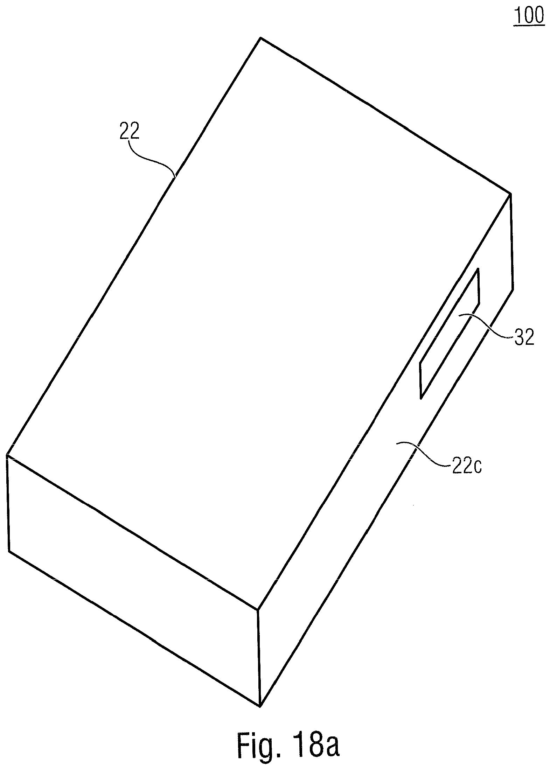

Fig. 18a zeigt eine schematische perspektivische Ansicht einer Vorrichtung 100 gemäß einem Ausführungsbeispiel in dem ersten Betriebszustand. Die Abdeckung 32 kann mit einer Gehäusehauptseite und/oder eine Gehäusenebenseite, bspw. die Gehäusenebenseite 22c eine Ebene bilden. Zwischen der Abdeckung 32 und der Gehäuseseite 22c kann kein Spalt oder lediglich eine kleiner Spalt, etwa kleiner oder gleich 1 mm, kleiner oder gleich 0,5 mm oder kleiner oder gleich 0,1 mm angeordnet sein, so dass ein Übergang zwischen der Abdeckung 32 und der Gehäuseseite 22c nicht oder kaum wahrnehmbar ist. Vereinfacht ausgedrückt kann die Abdeckung 32 nicht sichtbar sein.

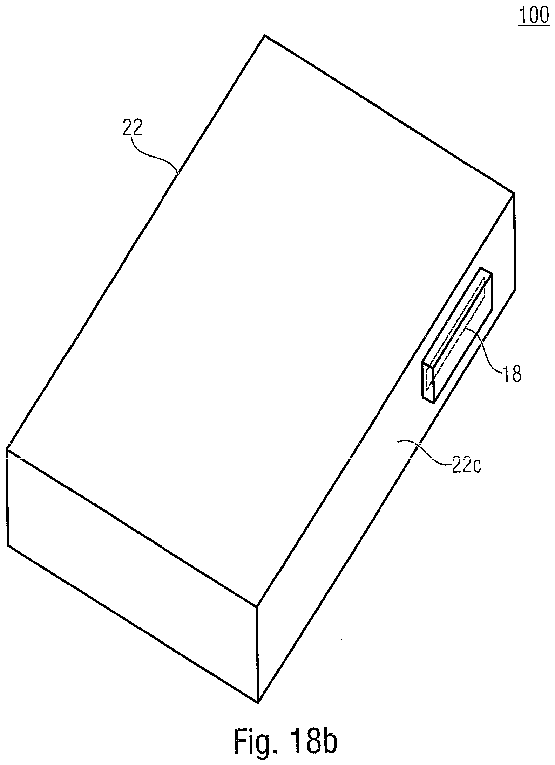

Fig. 18b zeigt eine schematische Ansicht der Vorrichtung 100 in dem zweiten Betriebszustand. Die Strahlumlenkeinrichtung 18 weist die zweite Position außerhalb des Gehäusevolumens auf. Von außen betrachtet kann die ausgefahrene Multiaperturabbildungsvorrichtung vom ruhendem Gehäuserahmen allseitig umschlossen sein und/oder ein Erscheinungsbild wie eine Taste aufweisen. Bspw. kann die Vorrichtung 100 ausgebildet sein, um bei einem mechanischen Druck auf die Abdeckung 32 gem. Fig. 18a eine mechanische Verriegelung zu lösen, so dass die Strahlumlenkeinrichtung aus dem Gehäuse 22 fahrbar ist, etwa basierend auf einer Federkraft. Der mechanische Druck kann bspw. durch einen Aktor und/oder durch einen Benutzer erzeugt werden, etwa durch einen Fingerdruck. Von der zweiten Position kann die Strahlumlenkeinrichtung mittels des Aktors oder mittels des mechanischen Drucks wieder in die erste Position bewegbar sein und dort eine Verriegelung betätigen. Der Aktor kann bspw. der Aktor 33 oder 33' sein. In anderen Worten kann die Bewegung auch manuell erfolgen, so dass der Nutzer die Teile bzw. das Gesamtsystem mit eigener Kraft ein- oder ausfährt bzw. ein- oder ausklappt. Die Bewegung kann insbesondere eine Kombination aus manueller Betätigung und Wirkung von Federkraft sein. So klappt bzw. schiebt der Nutzer manuell Teile bzw. das Gesamtsystem zum Ausschalten der Kamera ins Gehäuse des Gerätes, wie z.B. eines Smartphones ein, spannt dabei eine Feder und ein Verriegelungsmechanismus hält diese Stellung bei. Beim Einschalten der Kamera, z.B. mittels geeigneter Software am Smartphone, wird der schaltbare Verriegelungsmechanismus durch einen geeigneten steuerbaren Mechanismus, wie ein Elektrorelais, gelöst und die Federkraft der Feder bewirkt das Ausfahren bzw. Ausklappen von den Teilen der Kamera bzw. des Gesamtsystems. Des Weiteren kann die Abdeckung, die einen Teil des Gehäuses bildet, der ausfahrbare und/oder kippbare Teil und/oder ein weiterer hieran ansetzender Mechanismus so ausgeformt sein, dass ein (Finger-)Druck auf diese Abdeckung die Arretierung löst, die Teile oder auch das Gesamtsystem herausfahren bzw. -klappen und ggf. die Bildaufnahmesoftware auf dem Gerät startet. Die mitbewegte Abdeckung, die an den Seitenflächen einen Teil des Gehäuses bilden kann, kann vom ruhenden Gehäuse von außen sichtbar allseitig umschlossen sein oder die Seitenflächen über die gesamte Höhe (=Dickenrichtung des Gehäuse) unterbrechen.

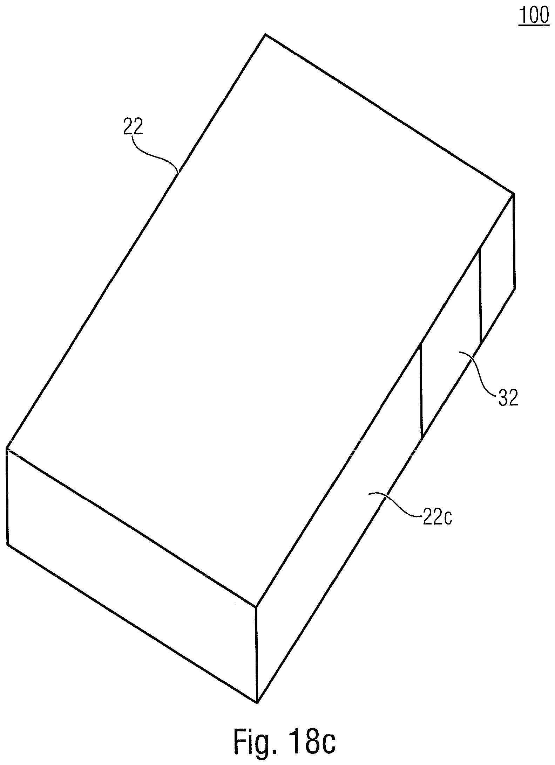

Fig. 18c zeigt eine schematische Darstellung einer Alternative zu Fig. 18a, bei der die Abdeckung 32 so gebildet ist, dass zwischen Hauptseiten des Gehäuses 22 in der Nebenseite 22c ein durchgehender Spalt gebildet ist. Dies ermöglicht, dass lediglich zwei anstelle von vier in Fig. 18a dargestellten Spalten in dem Gehäuse 22 wahrnehmbar sind. Die ausfahrbare oder ausklappbare Abdeckung 32 und/oder weitere Abdeckungen können als Teil(e) des Gehäuses 22 an einer oder mehreren Randseiten des flachen Gehäuses gebildet sein.

Nachfolgend wird Bezug genommen auf einige mögliche Ausführungsformen der Multiaperturabbildungsvorrichtung, wie sie gemäß Ausführungsbeispielen einsetzbar ist.

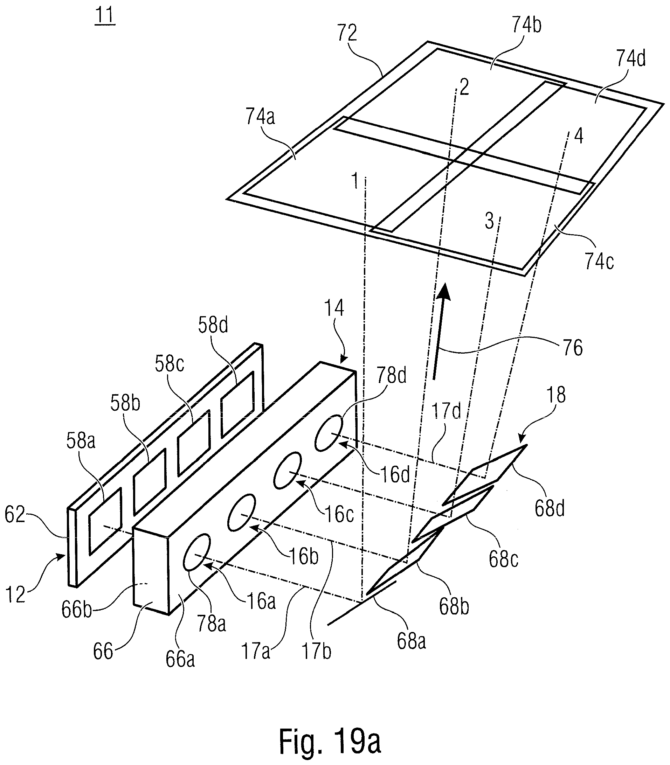

Fig. 19a-c zeigen eine Multiaperturabbildungsvorrichtung 11 gemäß einem Ausführungsbeispiel der vorliegenden Anmeldung. Die Multiaperturabbildungsvorrichtung 11 von Fig. 19a-c umfasst ein einzeiliges Array 14 von nebeneinander angeordneten optischen Kanälen 16a-d. Jeder optische Kanal 16a-d umfasst eine Optik 64a-d zur Abbildung eines jeweiligen Teilgesichtsfeldes 74a-d eines Gesamtgesichtsfeldes 72 der Vorrichtung 11 auf einen jeweils zugeordneten Bildsensorbereich 58a-d eines Bildsensors 12. Die Bildsensorbereiche 58a-d können beispielsweise jeweils aus einem Chip gebildet sein, der ein entsprechendes Pixelarray umfasst, wobei die Chips wie in den Fig. 19a-c angedeutet, auf einem gemeinsamen Substrat bzw. einer gemeinsamen Platine 62 montiert sein können. Alternativ wäre es natürlich auch möglich, dass die Bildsensorbereiche 58a-d jeweils aus einem Teil eines gemeinsamen Pixelarrays, das sich kontinuierlich über die Bildsensorbereiche 58a-d erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 58a-d ausgelesen. Verschiedene Mischungen dieser Alternativen sind natürlich ebenfalls möglich, wie z.B. das Vorhandensein eines Chips für zwei oder mehr Kanäle und eines weiteren Chips für wiederum andere Kanäle oder dergleichen. In dem Fall mehrerer Chips des Bildsensors 12 können diese beispielsweise auf einer oder mehreren Platinen montiert sein, wie z.B. alle gemeinsam oder gruppenweise oder dergleichen.

Bei dem Ausführungsbeispiel von Fig. 19a-c sind vier optischen Kanäle 16a-d einzeilig nebeneinander in Zeilenerstreckungsrichtung des Arrays 14 angeordnet, aber die Zahl vier ist lediglich exemplarisch und könnte auch jede andere Zahl größer Eins annehmen. Darüber hinaus kann das Array 14 auch weitere Zeilen aufweisen, die sich entlang der Zeilenerstreckungsrichtung erstrecken.

Optische Achsen bzw. die Strahlengänge 17a-d der optischen Kanäle 16a-d verlaufen zwischen den Bildsensorbereichen 58a-d und den Optiken 64a-d parallel zueinander. Dazu sind die Bildsensorbereiche 58a-d beispielsweise in einer gemeinsamen Ebene angeordnet und ebenso die optischen Zentren der Optiken 64a-d. Beide Ebenen sind parallel zueinander, d.h. parallel zu der gemeinsamen Ebene der Bildsensorbereiche 58a-d. Zudem fallen bei einer Projektion senkrecht auf die Ebene der Bildsensorbereiche 58a-d optische Zentren der Optiken 64a-d mit Zentren der Bildsensorbereiche 58a-d zusammen. In anderen Worten ausgedrückt sind in diesen parallelen Ebenen die Optiken 64a-d einerseits und die Bildsensorbereiche 58a-d mit gleichem Wiederholabstand in Zeilenerstreckungsrichtung angeordnet.

Ein bildseitiger Abstand zwischen Bildsensorbereichen 58a-d und den zugehörigen Optiken 64a-d ist so eingestellt, dass die Abbildungen auf die Bildsensorbereiche 58a-d auf einen gewünschten Objektabstand eingestellt sind. Der Abstand liegt beispielsweise in einem Bereich gleich oder größer der Brennweite der Optiken 64a-d oder zum Beispiel in einem Bereich zwischen einem Einfachen und einem Zweifachen der Brennweite der Optiken 64a-d, beides inklusive. Der bildseitige Abstand entlang der optischen Achse 17a-d zwischen Bildsensorbereich 58a-d und Optik 64a-d kann auch einstellbar sein, wie z.B. manuell durch einen Benutzer oder automatisch über eine Autofokussteuerung.

Ohne zusätzliche Maßnahmen überlappten sich die Teilgesichtsfelder 74a-d der optischen Kanäle 16a-d im Wesentlichen vollständig aufgrund der Parallelität der Strahlengänge bzw. optischen Achsen 17a-d. Zur Abdeckung eines größeren Gesamtgesichtsfeldes 72 und damit sich die Teilgesichtsfelder 74a-d lediglich räumlich teilweise überlappen, ist die Strahlumlenkrichtung 18 vorgesehen. Die Strahlumlenkeinrichtung 18 lenkt die Strahlengänge 17a-d bzw. optischen Achsen mit einer kanalindividuellen Abweichung in eine Gesamtgesichtsfeldrichtung 76 um. Die Gesamtgesichtsfeldrichtung 76 verläuft beispielsweise parallel zu einer Ebene, die senkrecht zur Zeilenerstreckungsrichtung des Arrays 14 und parallel zu dem Verlauf der optischen Achsen 17a-d vor bzw. ohne Strahlumlenkung ist. Beispielsweise geht die Gesamtgesichtsfeldrichtung 76 aus den optischen Achsen 17a-d durch Drehung um die Zeilenerstreckungsrichtung um einen Winkel hervor, der > 0° und < 180° ist und beispielsweise zwischen 80 und 100° liegt und beispielsweise 90° betragen kann. Das Gesamtgesichtsfeld der Vorrichtung 11, das der Gesamtabdeckung der Teilgesichtsfelder 74a-d entspricht, liegt also nicht in Richtung einer Verlängerung der Hintereinanderschaltung des Bildsensors 12 und des Arrays 14 in Richtung der optischen Achsen 17a-d, sondern durch die Strahlumlenkung befindet sich das Gesamtgesichtsfeld seitlich zu Bildsensor 12 und Array 14 in einer Richtung, in der die Bauhöhe der Vorrichtung 11 gemessen wird, d.h. die laterale Richtung senkrecht zur Zeilenerstreckungsrichtung. Zusätzlich aber lenkt die Strahlumlenkeinrichtung 18 jeden Strahlengang bzw. den Strahlengang jedes optischen Kanals 16a-d mit einer kanalindividuellen Abweichung von der soeben erwähnten zu der Richtung 76 führenden Umlenkung ab. Dazu umfasst die Strahlumlenkeinrichtung 18 für jeden Kanal 16a-d eine reflektierende Facette 68a-d. Diese sind gegenseitig leicht geneigt. Die gegenseitige Verkippung der Facetten 68a-d ist derart gewählt, dass bei Strahlumlenkung durch die Strahlumlenkeinrichtung 18 die Teilgesichtsfelder 74a-d mit einer leichten Divergenz versehen werden, derart, dass sich die Teilgesichtsfelder 74a-d lediglich teilweise überlappen. Dabei kann, wie es exemplarisch in Fig. 19a angedeutet ist, die individuelle Umlenkung auch derart gestaltet sein, dass die Teilgesichtsfelder 74a-d das Gesamtgesichtsfeld 72 zweidimensional abdecken, d.h. im Gesamtgesichtsfeld 72 zweidimensional verteilt angeordnet sind. Wird bspw. benachbart zu der in Fig. 4b beschriebenen Multiaperturabbildungsvorrichtung 4000 eine als Array von Facetten gebildete Strahlumlenkeinrichtung 18 angeordnet, so können der Strahlengang 17a hin zu einem ersten Teilbereich des Objektbereichs und der Strahlengang 17b hin zu einem zweiten Teilbereich des Objektbereichs von derselben Facette umgelenkt werden. Alternativ oder zusätzlich können auch mehr als zwei Strahlengänge von derselben Facette umgelenkt werden, wobei die Strahlengänge einem gemeinsamen oder verschiedenen optischen Kanälen zugeordnet sein können. Das bedeutet, es können beliebig viele Kanäle dieselbe Facette nutzen. Alternativ können die Strahlengänge 17a und 17b auch von verschiedenen Facetten umgelenkt werden.

Es sei darauf hingewiesen, dass viele der bisher beschriebenen Details zur Vorrichtung 11 lediglich exemplarisch gewählt wurden. Das betraf beispielsweise schon die zuvor erwähnte Anzahl von optischen Kanälen. Die Strahlumlenkeinrichtung 18 kann ebenfalls anders gebildet sein als dies bisher beschrieben wurde. Beispielsweise wirkt die Strahlumlenkeinrichtung 18 nicht notwendigerweise reflektiv. Sie kann also auch anders ausgeführt sein als in Form eines Facettenspiegels, wie z.B. in Form transparenter Prismenkeile. In diesem Fall könnte beispielsweise die mittlere Strahlumlenkung 0° betragen, d.h. die Richtung 76 könnte beispielsweise parallel zu den Strahlengängen 17a-d noch vor oder ohne Strahlumlenkung sein bzw. in anderen Worten ausgedrückt könnte die Vorrichtung 11 trotz Strahlumlenkeinrichtung 18 weiterhin "geradeaus schauen". Die kanalindividuellen Umlenken durch die Strahlumlenkeinrichtung 18 würden wieder dazu führen, dass sich die Teilgesichtsfelder 74a-d lediglich geringfügig gegenseitig überlappen, wie z.B. paarweise mit einem Überlapp < 10 % bezogen auf die Raumwinkelbereiche der Teilgesichtsfelder 74a-d.

Auch könnten die Strahlengänge bzw. optischen Achsen von der beschrieben Parallelität abweichen und dennoch könnte die Parallelität der Strahlengänge der optischen Kanäle aber immer noch so ausgeprägt sein, dass sich die Teilgesichtsfelder, die durch die einzelnen Kanäle 16a-N abgedeckt bzw. auf die jeweiligen Bildsensorbereiche 58a-d abgebildet werden, ohne weitere Maßnahmen, wie nämlich die Strahlumlenkung, größtenteils überlappen würden, so dass, um ein größeres Gesamtgesichtsfeld durch die Multiaperturabbildungsvorrichtung 11 abzudecken, die Strahlumlenkeinrichtung 18 die Strahlengänge so mit einer zusätzlichen Divergenz versieht, dass sich die Teilgesichtsfelder von N optischen Kanälen 16a-N weniger gegenseitig überlappen. Die Strahlumlenkeinrichtung 18 sorgt beispielsweise dafür, dass das Gesamtgesichtsfeld einen Öffnungswinkel aufweist, der größer ist als 1,5-mal dem Öffnungswinkel der einzelnen Teilgesichtsfelder der optischen Kanäle 16a-N. Mit einer Art Vorab-Divergenz der Strahlengänge 17a-d wäre es auch möglich, dass sich beispielsweise nicht alle Facettenneigungen unterscheiden, sondern dass manche Gruppen von Kanälen beispielsweise die Facetten mit gleicher Neigung besitzen. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch lateralen Versatz zwischen optischen Zentren der Optiken und Bildsensorbereichen der Kanäle oder Prismenstrukturen oder dezentrierten Linsenausschnitten erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz in der anderen Transversalebene, d.h. sie sind alle parallel zur Zeilenerstreckungsrichtung und gegeneinander nur noch unterschiedlich zur vorerwähnten gemeinsamen Ebene der optischen Achsen geneigt, wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden.

Unter Weglassung der Strahlumlenkeinrichtung oder Ausbildung der Strahlumlenkeinrichtung als planer Spiegel oder dergleichen könnte auch die gesamte Divergenz durch den lateralen Versatz zwischen optischen Zentren der Optiken einerseits und Zentren der Bildsensorbereiche andererseits oder durch Prismenstrukturen oder dezentrierte Linsenausschnitte bewerkstelligt werden.

Die erwähnte möglicher Weise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angeordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angeordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz versehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein rein In-Ebene-Versatz in Zeilenerstreckungsrichtung ändert die Bauhöhe nicht, aber es resultieren ggf. weniger Facetten und/oder die Facetten weisen nur eine Kippung in einer Winkelorientierung auf, was den Aufbau vereinfacht.

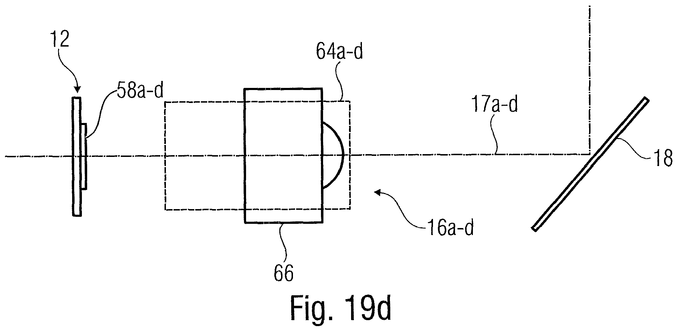

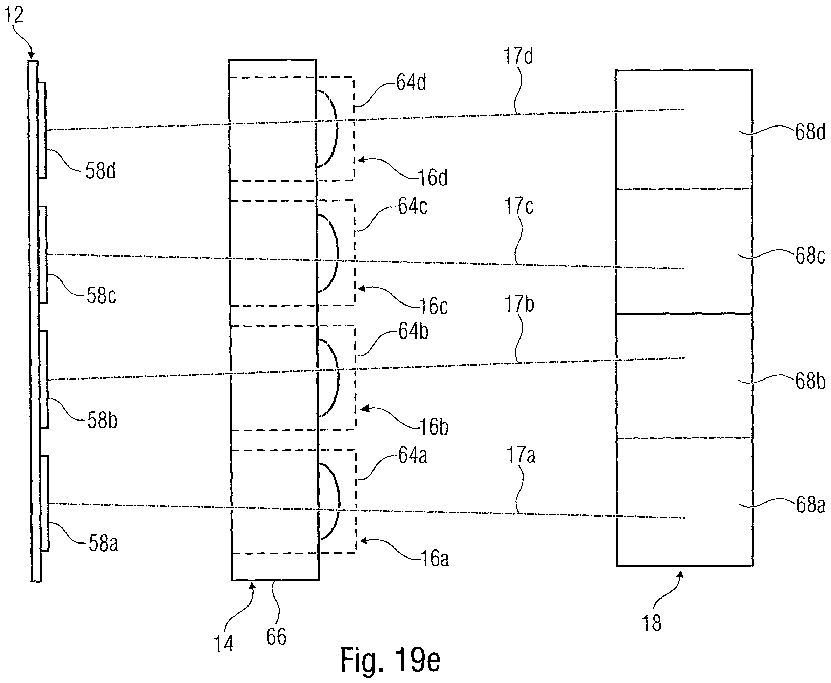

Das ist in Fig. 19d und 19e exemplarischen für den Fall der auf einem gemeinsamen Träger gehaltenen Optiken veranschaulicht, bei denen die benachbarten Kanäle 16a und 16b einerseits und die benachbarten Kanäle 16c und 16d andererseits in der gemeinsamen Ebene verlaufende, jeweils gegeneinander schielende, also mit einer Vorab-Divergenz versehene, optische Achsen 17a und 17b bzw. 17c und 17d aufweisen. Die Facetten 68a und 68b können durch eine Facette gebildet werden und die Facetten 68c und 68d können durch eine andere Facette gebildet werden, wie es durch gestrichelte Linien zwischen den jeweiligen Paaren von Facetten gezeigt ist, und die einzigen zwei Facetten sind lediglich in einer Richtung geneigt und beide parallel zur Zeilenerstreckungsrichtung. Ebenfalls ist es möglich dass einzelne Facetten lediglich eine Verkippung in einer Raumrichtung aufweisen.

Ferner könnte es vorgesehen sein, dass manche optische Kanäle dem gleichen Teilgesichtsfeld zugeordnet sind, wie z.B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafterweise lägen Pixelbilder des Bildsensors eines Kanals einer Gruppe in Zwischenpositionen zwischen Bildern der Pixel des Bildsensors eines anderen Kanals dieser Gruppe.

Denkbar wäre beispielsweise auch ohne Superresolutionszwecken, sondern lediglich zu Stereoskopiezwecken eine Ausführung, bei denen eine Gruppe von unmittelbar benachbarten Kanälen in Zeilenerstreckungsrichtung mit ihren Teilgesichtsfeldern das Gesamtgesichtsfeld vollständig abdecken, und dass eine weitere Gruppe einander unmittelbar benachbarter Kanäle das Gesamtgesichtsfeld ihrerseits vollständig abdecken, und die Strahlengänge beider Kanalgruppen das Substrat bzw. einen Träger 66 durchlaufen. Das bedeutet, dass die Multiaperturabbildungsvorrichtung eine erste Vielzahl von optischen Kanälen aufweisen kann, die ausgebildet sind, um ein Gesamtgesichtsfeld, ggf. komplett, zu erfassen. Eine zweite Vielzahl von optischen Kanälen der Multiaperturabbildungsvorrichtung kann ausgebildet sein, um das Gesamtgesichtsfeld ebenfalls und ggf. komplett zu erfassen. Das Gesamtgesichtsfeld kann so zumindest stereoskopisch durch die erste Vielzahl von optischen Kanälen und durch die zweite Vielzahl von optischen Kanälen erfasst werden. Die erste Vielzahl von optischen Kanälen und die zweite Vielzahl von optischen Kanälen können auf einen gemeinsamen Bildsensor treffen, ein gemeinsames Array (Arrayoptik) nutzen und/oder von einer gemeinsamen Strahlumlenkeinrichtung umgelenkt werden. Im Gegensatz zu einem Array aus Einzelkameras wird eine zusammenhängende Array-Kamera gebildet, die gemeinsam als eine Vorrichtung steuerbar ist, bspw. in Bezug auf einen Fokus und/oder eine Bildstabilisierung, was vorteilhaft ist, da alle Kanäle gleichzeitig und unter Nutzung derselben Aktoren beeinflusst werden. Zusätzlich ergeben sich aus dem monolithischen Aufbau Vorteile hinsichtlich der mechanischen Stabilität der Gesamtanordnung insbesondere bei Temperaturänderungen. Dies ist vorteilhaft für Zusammensetzung des Gesamtbilds aus den Teilbilder der einzelnen Kanäle sowie bei der Gewinnung dreidimensionaler Objektdaten bei Nutzung in Stereo-, Tripple-, Quattro- usw. Systemen bei mehrfacher Abtastung des Gesamtgesichtsfelds durch unterschiedliche Vielzahlen von Kanälen 16.

Die nachfolgende Erörterung beschäftigt sich mit den Optiken 64a-d, deren Linsenebenen ebenfalls parallel zu der gemeinsamen Ebene der Bildsensorbereiche 58a-d liegt. Wie es nachfolgend beschrieben wird, sind Linsen der Optiken 64a-d der optischen Kanäle 16a-d an einer Hauptseite 66a des Substrats 66 über einen oder mehrere Linsenhalter befestigt und über das Substrat 66 mechanisch miteinander verbunden. Insbesondere verlaufen die Strahlengänge 17a-d der Mehrzahl von optischen Kanälen 16a-d durch das Substrat 66. Das Substrat 66 ist also zumindest bereichsweise aus transparentem Material gebildet und ist plattenförmig oder besitzt beispielsweise die Form eines Parallelepipeds oder eines anderen konvexen Körpers mit einer planaren Hauptseite 66a und einer gegenüberliegenden, dazu ebenfalls planaren Hauptseite 66b. Die Hauptseiten sind vorzugsweise senkrecht zu den Strahlengängen 17a-d positioniert. Wie nachfolgend beschrieben, kann es gemäß Ausführungsbeispielen Abweichungen von der reinen Parallelepipedform geben, die auf *eine* mit dem Substrat einstückige Ausformung von Linsen der Optiken zurückzuführen sind.

Bei dem Ausführungsbeispiel der Figuren 19a-c handelt es sich bei dem flachen Trägersubstrat 66 beispielsweise um ein Substrat aus Glas oder Polymer. Beispielsweise kann das Trägersubstrat 66 eine Glasplatte umfassen. Das Material des Substrats 66 kann nach Gesichtspunkten hoher optischer Transparenz und niedrigem Temperaturkoeffizienten oder weiteren mechanischen Eigenschaften wie Härte, Elastizitäts- oder Torsionsmodul ausgewählt sein.

Das Substrat 66 kann als einfaches planes Teil des Strahlenganges ausgebildet sein, ohne dass irgendwelche zusätzlichen Linsen direkt hierauf untergebracht sind. Zusätzlich können *Blenden, wie z.B. Apertur- oder Falschlichtblenden, oder/und Filterschichten,* wie z.B. IR-Blockfilter auf den Substratoberflächen angebracht sein oder aus mehreren Lagen verschiedener Substrate bestehen, auf deren Oberflächen Blenden und Filterschichten angebracht sein können, die sich wiederum kanalweise z.B. in ihrem spektralen Absorption unterscheiden können.

Das Substrat 66 kann aus Material bestehen, dass in unterschiedlichen Bereichen des elektromagnetischen Spektrums, welches vom Bildsensor detektiert werden kann, unterschiedliche Eigenschaften aufweist, insbesondere eine nicht-konstante Absorption.

Bei dem Ausführungsbeispiel von Fig. 19a-c umfasst jede Optik 64a-d drei Linsen. Die Anzahl der Linsen ist allerdings frei wählbar. Die Anzahl könnte 1, 2 oder jede andere beliebige Anzahl sein. Die Linsen können konvex, lediglich eine optisch abbildende Funktionsfläche wie z.B. eine sphärische, eine asphärische, eine Freiformfläche aufweisen, oder zwei, wie z.B. zwei einander gegenüberliegende, um beispielsweise eine konvexe oder eine konkave Linsenform zu ergeben. Auch mehrere optisch wirksame Linsenflächen sind möglich, wie z.B. durch Aufbau einer Linse aus mehreren Materialien.

Eine erste Linse 78a-d jedes optischen Kanals 16a-d oder Optik ist bei dem Ausführungsbeispiel von Fig. 19a-c an der Hauptseite 66a gebildet. Die Linsen 78a-d sind beispielsweise durch Abformung auf der Hauptseite 66a des Substrats 66 hergestellt worden und bestehen beispielsweise aus Polymer, wie z.B. aus UV-aushärtbarem Polymer. Die Abformung geschieht beispielsweise durch ein Abformwerkzeug und die Aushärtung kann beispielsweise über Temperatur und/oder über UV-Bestrahlung geschehen.

Bei dem Ausführungsbeispiel von Fig. 19a-c besitzt jede Optik 64a-d noch eine weitere zweite und dritte Linse 82a-d bzw. 84a-d, Diese Linsen sind exemplarisch über axial verlaufende röhrenförmige Linsenhalter 86a-d gegenseitig im Inneren des jeweiligen Linsenhalters fixiert und über Letzteren an der Hauptseite 66b fixiert, wie z.B. mittels Klebens oder einer anderen Fügetechnik. Öffnungen 88a-d der Linsenhalter 86a-d sind beispielsweise mit kreisförmigem Querschnitt versehen, in dessen zylindrischen Innenseite die Linsen 82a-d bzw. 84a-d befestigt sind. Für jede Optik 64a-d liegen also die Linsen koaxial auf der jeweiligen optischen Achse der Strahlengänge 17a-d. Die Linsenhalter 86a-d können aber auch einen sich über ihre Länge bzw. entlang der jeweiligen optischen Achsen ändernden Querschnitt aufweisen. Hierbei kann der Querschnitt mit geringer werdendem Abstand zum Bildsensor 12 zunehmend rechteckigen oder quadratischen Charakter aufweisen. Die äußere Form der Linsenhalter kann sich somit auch von der Form der Öffnungen unterscheiden. Das Material der Linsenhalter kann lichtabsorbierend sein. Entsprechend der zuvor im Zusammenhang mit den Figuren 19d und 19e beschriebenen schielenden Optiken können die Linsenhalter auch nicht rotationssymmetrisch und/oder nicht koaxial ausgeprägt sein.

Die Befestigung über die vorerwähnten Linsenhalter geschieht beispielsweise so, dass Linsenscheitel der durch dieselben gehaltenen Linsen von dem Substrat 66 beabstandet sind.

Wie es im Vorhergehenden bereits erwähnt wurde, ist es möglich, dass das Substrat 66 beidseitig planar ist und mithin keine Brechkraftwirkung aufweist. Allerdings wäre es auch möglich, dass das Substrat 66 mechanische Strukturen aufweist, wie z.B. Vertiefungen oder Vorsprünge, die eine leichte, form- und/oder kraftschlüssige Ausrichtung anschließender Bauteile ermöglichen, wie z.B. das Anschließen von Einzellinsen oder Gehäuseteilen. Bei dem Ausführungsbeispiel von Fig. 19a-c beispielsweise könnte das Substrat 66 an der Hauptseite 66b befestigungserleichternde oder die Ausrichtung erleichternde Strukturen an den Positionen aufweisen, an welchen das jeweilige Ende der Röhre des Linsenhalters 86a-d der jeweiligen Optik 64a-d befestigt ist. Bei diesen Strukturen kann es sich beispielsweise um eine kreisförmige Vertiefung handeln oder einer Vertiefung mit einer anderen Form, die der Form einer dem Substrat zugewandten Seite des jeweiligen Linsenhalters entspricht, in die die Seite der jeweiligen Linsenhalters 84a-d Eingriff nehmen kann. Es sei noch einmal hervorgehoben, dass auch andere Öffnungsquerschnitte und damit korrespondierend eventuell andere Linsenaperturen als kreisförmige möglich sind.

Das Ausführungsbeispiel von Fig. 19a-c löst sich also von einem klassischen Aufbau von Kameramodulen, die Einzellinsen aufweisen und zur Halterung der Einzellinsen einen diese komplett umschließenden, nicht transparenten Gehäuseträger aufweisen. Vielmehr verwendet obiges Ausführungsbeispiel einen transparenten Körper 66 als Substratträger. Dieser erstreckt sich über mehrere benachbarte optische Kanäle 16a-d, um von deren Abbildungsstrahlengang durchdrungen zu werden. Er stört die Abbildung nicht, aber er erhöht auch nicht die Bauhöhe.

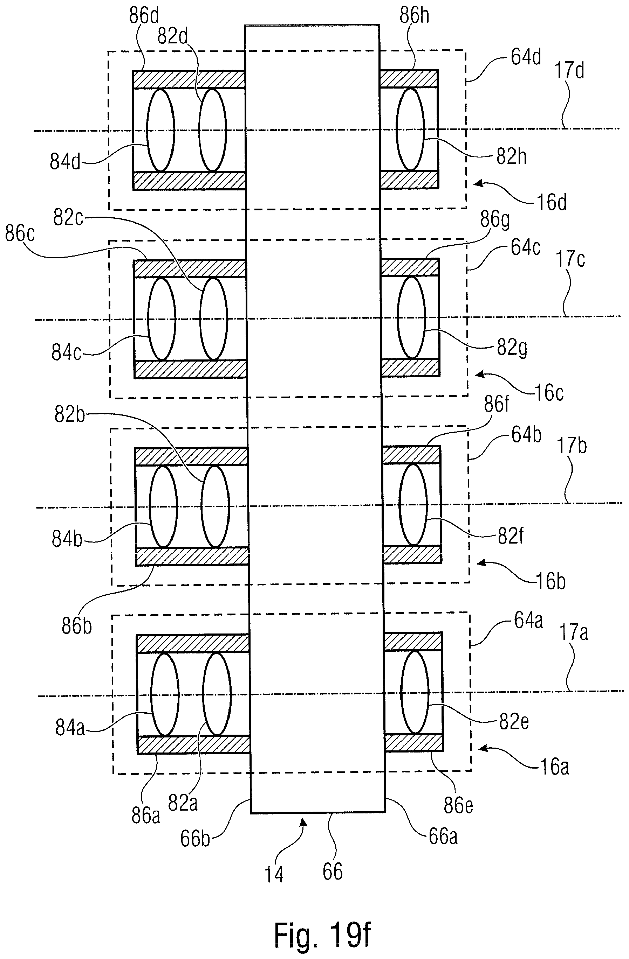

Es wird allerdings auf verschiedene Möglichkeiten hingewiesen, wie das Ausführungsbeispiel von Fig. 19a-c variiert werden könnte. Beispielsweise erstreckt sich das Substrat 66 nicht notwendigerweise über alle Kanäle 16a-d der Multiaperturabbildungsvorrichtung 11. Anders als im Vorhergehenden beschrieben, wäre es möglich, dass jede Optik 64a-d über Linsenträger gehalterte Linsen auf beiden Seiten 66a und 66b aufweist, wie es in Fig. 19f dargestellt ist.

Auch die Existenz lediglich der Linsen 82e-h auf der Hauptseite 66a, d.h. ohne die Linsen 82a-d und/oder 84a-d auf der anderen Seite 66b, wäre denkbar, ebenso wie das Vorsehen der Linsen 82a-d und/oder 84a-d auf der anderen Seite 66a, d.h. der dem Bildsensor 12 abgewandten Seite des Substrats 66 und nicht der davon zugewandten Seite, d.h. 66a. Ebenso ist die Anzahl an Linsen in einem Linsenträger 86a-h frei wählbar. So könnte auch lediglich eine Linse oder es könnten mehr als zwei in einem solchen Träger 86a-h vorhanden sein. Wie in Fig. 19f gezeigt, könnte es sein, dass auf beiden Seiten 66a und 66b Linsen über jeweilige Linsenträger 86a-d bzw. 86e-h an der jeweiligen Seite 66a bzw. 66b montiert sind.

Fig. 12 zeigt exemplarisch, dass die Multiaperturabbildungsvorrichtung 11 von Fig. 19a-c um eines oder mehrere der nachfolgend beschriebenen zusätzlichen Einrichtungen ergänzt werden könnte.

Beispielsweise zeigt Fig. 20, dass eine Einrichtung 92 vorhanden sein könnte, um die Strahlumlenkeinrichtung 18 um die Rotationsachse 44 zu drehen, die parallel zu der Zeilenerstreckungsrichtung des Arrays 14 ist. Die Rotationsachse 44 liegt beispielsweise in der Ebene der Strahlengänge 17a-d oder davon weniger als ein Viertel eines Durchmessers der Optiken 64a-d entfernt. Alternativ wäre es natürlich auch möglich, dass die Rotationsachse weiter entfernt liegt, wie z.B. weniger als ein Optikdurchmesser oder weniger als vier Optikdurchmesser. Die Einrichtung 92 kann beispielsweise vorgesehen sein, um die Strahlumlenkeinrichtung 18 mit kurzer Ansprechzeit in einem lediglich kleinen Winkelbereich, wie z.B. innerhalb einer Spanne von weniger als 1° oder weniger 10° oder weniger als 20° zu drehen, um Verwacklungen der Multiaperturabbildungsvorrichtung 11 durch beispielsweise einen Benutzer während einer Aufnahme auszugleichen. Die Einrichtung 92 würde in diesem Fall beispielsweise von einer Bildstabilisierungssteuerung angesteuert werden.

Alternativ oder zusätzlich könnte die Einrichtung 92 ausgebildet sein, um mit größeren Winkelverstellungen das Gesamtgesichtsfeld, das durch die Gesamtabdeckung der Teilgesichtsfelder 74a-d (Fig. 19a) definiert wird, in seiner Richtung zu verändern. Dabei wäre es ferner möglich, dass durch Rotation der Strahlumlenkeinrichtung 18 auch Ablenkungen erzielt werden, bei denen das Gesamtgesichtsfeld in der entgegengesetzten Richtung relativ zu der Vorrichtung 11 angeordnet ist, indem beispielsweise die Strahlumlenkeinrichtung 18 als ein beidseitig reflektives Spiegelarray ausgebildet ist.

Wiederum alternativ oder zusätzlich kann die Vorrichtung 11 eine Einrichtung 94 aufweisen, um die Optiken 64a-d vermittels des Substrats 66 bzw. das Substrat 66 selbst und damit die Optiken 64a-d translatorisch entlang der Zeilenerstreckungsrichtung zu bewegen. Die Einrichtung 94 könnte beispielsweise ebenfalls durch die vorerwähnte Bildstabilisierungssteuerung angesteuert werden, um durch eine Bewegung 96 entlang der Zeilenerstreckungsrichtung eine Bildstabilisierung quer zu der Bildstabilisierung zu erzielen, die durch die Rotation der Spiegelumlenkvorrichtung 18 verwirklicht wird.

Weiterhin kann zusätzlich oder alternativ die Vorrichtung 11 eine Einrichtung 98 zum Verändern des bildseitigen Abstands zwischen Bildsensor 12 und Optiken 64a-d bzw. zwischen Bildsensor 12 und dem Träger 66 aufweisen, um eine Schärfentiefeneinstellung zu erzielen. Die Einrichtung 98 kann durch eine manuelle Benutzersteuerung oder durch eine Autofokussteuerung bzw. Fokussiereinrichtung der Vorrichtung 11 gesteuert werden.

Die Einrichtung 94 dient also als Aufhängung des Substrats 66 und ist vorzugsweise, wie in Fig. 20 angedeutet seitlich neben dem Substrat 66 entlang der Zeilenerstreckungsrichtung angeordnet, um die Bauhöhe nicht zu erhöhen. Auch für die Einrichtungen 92 und 98 gilt, dass selbige vorzugsweise in der Ebene der optischen Strahlengänge angeordnet sind, um die Bauhöhe nicht zu erhöhen. Die Einrichtung 98 kann auch mit der Strahlumlenkeinrichtung 18 verbunden sein und diese simultan oder nahezu simultan bewegen, so dass bei einer Veränderung des bildseitigen Abstands zwischen Bildsensor 12 und Optiken 64a-d ein Abstand zwischen den Optiken 64a-d und der der Strahlumlenkeinrichtung 18 im Wesentlichen konstant oder konstant bleibt. Die Einrichtungen 92, 94 und/oder 98 können auf Basis pneumatischer, hydraulischer, piezoelektrischer Aktoren, DC-Motoren, Schrittmotoren, thermischer Aktoren, elektrostatischer Aktoren, elektrostriktiver und/oder magnetostriktiver Aktoren oder Antriebe implementiert sein.

Es sei darauf hingewiesen, dass die Optiken 64a-d nicht nur untereinander, wie z.B. über das schon erwähnte transparente Substrat, sondern auch relativ zu der Strahlumlenkeinrichtung in konstanter relativer Lage gehaltert sein können, wie z.B. über einen geeigneten Rahmen, der vorzugsweise die Bauhöhe nicht vergrößert und deshalb vorzugsweise in der Ebene der Komponenten 12, 14 und 18 bzw. in der Ebene der Strahlengänge verläuft. Die Konstanz der relativen Lage könnte sich auf den Abstand zwischen Optiken und Strahlumlenkeinrichtung entlang der optischen Achsen beschränken, so dass die Einrichtung 98 beispielsweise die Optiken 64a-d zusammen mit der Strahlumlenkeinrichtung translatorisch entlang der optischen Achsen bewegt. Der Optiken-zu-Strahlumlenkeinrichtung-Abstand könnte auf einen minimalen Abstand eingestellt werden, so dass der Strahlengang der Kanäle nicht durch die Segmente der Strahlumlenkeinrichtung 18 lateral eingeschränkt wird, was die Bauhöhe verringert, da andernfalls die Segmente 68a-d hinsichtlich der lateralen Ausdehnung für den größten Optiken-zu-Strahlumlenkeinrichtung-Abstand dimensioniert sein müssten, um den Strahlengang nicht einzuschneiden. Zusätzlich könnte die Konstanz der relativen Lage vorerwähnter Rahmen die Optiken und die Strahlumlenkeinrichtung entlang der x-Achse starr zueinander haltern, sodass die Einrichtung 94 die Optiken 64a-d zusammen mit der Strahlumlenkeinrichtung translatorisch entlang der Zeilenerstreckungsrichtung bewegen würde.

Die oben beschriebene Strahlumlenkeinrichtung 18 zum Umlenken des Strahlengangs der optischen Kanäle ermöglicht zusammen mit dem Aktor 92 zur Erzeugung der Rotationsbewegung der Strahlumlenkeinrichtung 18 einer optischen Bildstabilisierungssteuerung der Multiaperturabbildungsvorrichtung 11 eine Bild- bzw. Gesamtblickfeldstabilisierung in zwei Dimensionen, nämlich durch die translatorische Bewegung des Substrats 66 eine Bildstabilisierung entlang einer ersten Bildachse, die im Wesentlichen parallel zur Zeilenerstreckungsrichtung verläuft, und durch die Erzeugung der Rotationsbewegung der Strahlumlenkeinrichtung 18 eine Bildstabilisierung entlang einer zweiten Bildachse, die im Wesentlichen parallel zu den optischen Achsen vor bzw. ohne Strahlumlenkung verläuft, oder - betrachtet man die umgelenkten optischen Achsen - senkrecht zu den optischen Achsen und der Zeilenerstreckungsrichtung. Zusätzlich kann die beschriebene Anordnung eine translatorische Bewegung der im angesprochenen Rahmen fixierten Strahlumlenkeinrichtung und des Arrays 14 senkrecht zur Zeilenerstreckungsrichtung bewirken, wie z.B. durch den beschriebenen Aktor 98, die für die Realisierung einer Fokuseinstellung und damit einer Autofokusfunktion genutzt werden kann.

Alternativ oder zusätzlich zu der Rotationsbewegung zum Erhalten einer Bildstabilisierung entlang der zweiten Bildachse auch eine translatorische Relativbewegung zwischen dem Bildsensor 12 und dem Array 14 implementierbar ist. Diese Relativbewegung kann bspw von der Einrichtung 94 und/oder der Einrichtung 98 bereitgestellt werden.

Es sei zu den obigen Ausführungen der Vollständigkeit halber noch darauf hingewiesen, dass die Vorrichtung bei einer Aufnahme über die Bildsensorbereiche ein Bild einer Szene pro Kanal aufnimmt, die durch die Kanäle auf die Bildsensorbereiche abgebildet worden sind, und dass die Vorrichtung optional über einen Prozessor verfügen kann, der die Bilder zu einem Gesamtbild zusammenfügt oder verschmelzt, das der Szene in dem Gesamtgesichtsfeld entspricht, und/oder zusätzliche Daten bereitstellt, wie zum Beispiel 3D-Bilddaten und Tiefeninformationen der Objektszene zur Erstellung von Tiefenkarten und zur softwaretechnischen Realisierung wie z.B. von Refocusing (Festlegung der Bildschärfebereiche nach der eigentlichen Aufnahme), All-in-Focus-Bildern, Virtual Green Screen (Trennung von Vorder- und Hintergrund) u.a.. Letztere Aufgaben *könnten* ebenfalls *von* jenem Prozessor erledigt werden oder extern. Der Prozessor könnte allerdings auch eine zu der Multiaperturabbildungsvorrichtung externe Komponente darstellen.

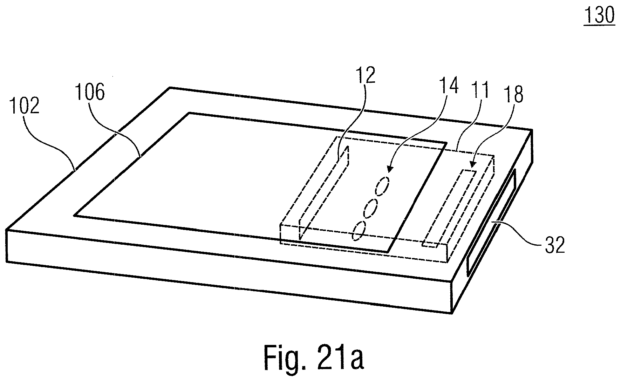

Fig. 21a illustriert, dass Vorrichtungen 11 der vorher beschrieben Alternativen beispielsweise in einem flachen Gehäuse eines tragbaren Geräts 130 eingebaut sein können, wie zum Beispiel eines Mobiltelefons, ein Smartphone oder Mediaplayers oder dergleichen, wobei dann beispielsweise die Ebenen des Bildsensors 12 bzw. der Bildsensorbereiche und die Linsenebenen der Optiken der optischen Kanäle 16 senkrecht zu der flachen Erstreckungsrichtung des flachen Gehäuses bzw. parallel zur Dickenrichtung ausgerichtet sind. Auf diese Weise würde beispielsweise die Strahlumlenkeinrichtung 18 dafür sorgen, dass das Gesamtgesichtsfeld der Multiaperturabbildungsvorrichtung 11 vor einer Vorderseite 102 des flachen Gehäuses liegt, das beispielsweise auch einen Bildschirm aufweist. Alternativ wäre auch eine Umlenkung derart möglich, dass sich das Gesichtsfeld vor einer Rückseite des flachen Gehäuses, die der Vorderseite 102 gegenüberliegt, befindet. Das Gehäuse 22 des Geräts 130 bzw. das Gerät selbst kann flach sein, da durch die illustrierte Lage der Vorrichtung 11 in dem Gehäuse, die Bauhöhe der Vorrichtung 11, die zur Dicke des Gehäuses parallel ist, gering gehalten werden kann. Eine Umschaltbarkeit könnte ebenfalls vorgesehen werden, indem ein Fenster auf der der Seite 102 gegenüberliegenden Seite vorgesehen wird und beispielsweise die Strahlumlenkeinrichtung zwischen zwei Stellungen bewegt wird, indem letztere beispielsweise als vor- und rückseitig spiegelnder Spiegel ausgeführt wird und von der einen in die andere Stellung gedreht wird, oder als Facettenspiegel mit einem Satz von Facetten für die eine Stellung und einem anderen Satz von Facetten für die andere Stellung, wobei die Facettensätze in Zeilenerstreckungsrichtung nebeneinander liegen und durch translatorische Hin- und Her-Bewegung der Strahlumlenkeinrichtung entlang der Zeilenerstreckungsrichtung zwischen den Stellungen umgeschaltet wird. Ein Verbau der Vorrichtung 11 in ein anderes ggf. nicht tragbares Gerät, wie z.B. eine Auto, wäre natürlich ebenfalls möglich.

Mehrere Module 11, deren Teilgesichtsfelder ihrer Kanäle das gleiche Gesichtsfeld vollständig und optional sogar in kongruenter Weise abdecken, können mit einem Basisabstand BA (vgl. Fig. 15) zueinander entlang einer für beide Module gleichen Zeilenerstreckungsrichtung in dem Gerät 130 verbaut sein, wie zum Beispiel zum Zweck der Stereoskopie. Mehr als zwei Module wären ebenfalls denkbar. Die Zeilenerstreckungsrichtungen der Module 11 könnten auch nicht kollinear, sondern lediglich parallel zueinander sein. Es sei jedoch noch einmal erwähnt, dass, wie im vorgehenden erwähnt, auch eine Vorrichtung 11 bzw. ein Modul mit Kanälen so ausgestattet sein könnte, dass dieselben gruppenweise dasselbe Gesamtgesichtsfeld jeweils vollständig abdecken. Die Module können in einer/mehreren Zeile(n)/Reihe(n) oder an beliebiger Stelle der Vorrichtung angeordnet sein. Bei einer Anordnung mehrerer Module können diese gleich oder verschieden gebildet sein. Bspw. kann ein erstes Modul ausgebildet sein, um eine stereoskopische Erfassung des Gesamtgesichtsfeldes auszuführen. Ein zweites Modul kann ausgebildet sein, um eine einfache Erfassung, eine stereoskopische Erfassung oder eine Erfassung höherer Ordnung auszuführen.

Es sei noch erwähnt, das die Strahlumlenkeinrichtung bei alternativen Ausführungsbeispielen verglichen zu den oben beschrieben Ausführungsbespielen auch fehlen könnte. Wenn eine lediglich teilweise gegenseitige Überlappung der Teilgesichtsfelder gewünscht ist, dann könnte dies zum Beispiel über gegenseitige laterale Versätze zwischen dem Zentrum des Bildsensorbereichs und des optischen Zentrums der Optik des entsprechenden Kanals erzielt werden. Die Aktoren gemäß Fig. 20 könnten natürlich dennoch Anwendung finden, wobei im Ersatz für die Einrichtung 92 beispielsweise der Aktor 94 zusätzlich zu einer translatorischen Bewegung der Optiken bzw. des Trägers 66 in der Lage ist.

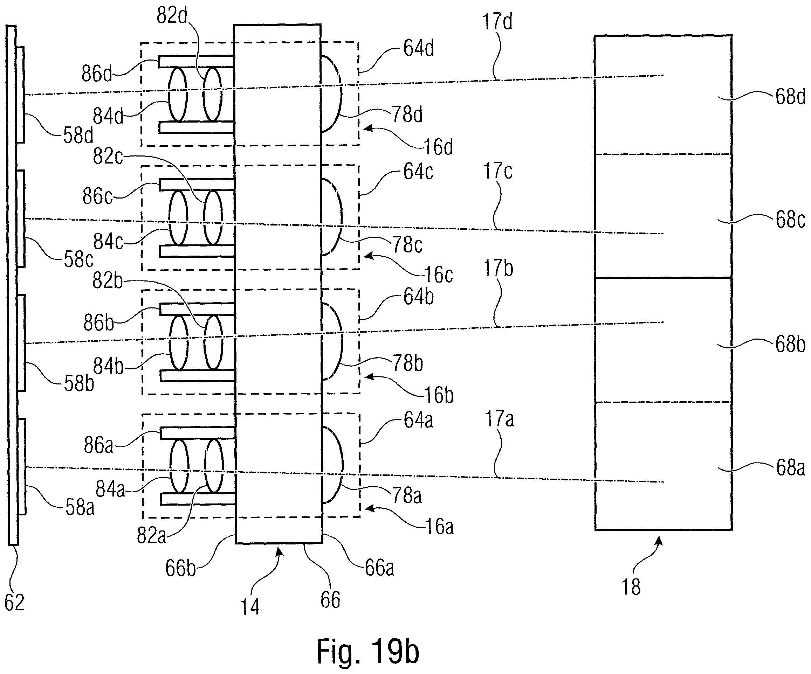

Noch einmal in anderen Worten ausgeführt zeigen obige Ausführungsbeispiele also eine Multiaperturabbildungsvorrichtung mit einzeiligem Array von nebeneinander angeordneten optischen Kanälen, bei der sich irgendwo im Strahlengang der Multiaperturabbildungsvorrichtung ein sich über die Kanäle erstreckendes Substrat aus beispielsweise Glas oder Polymer zur Verbesserung der Stabilität erstreckt. Das Substrat kann zusätzlich bereits auf Vorder- und/oder Rückseite Linsen beinhalten. Die Linsen können aus dem Material des Substrats bestehen (wie z.B. durch Heizprägen entstanden) oder darauf abgeformt sein. Vor und hinter dem Substrat können sich weitere Linsen befinden, die sich nicht auf Substraten befinden und einzeln montiert werden. Es können mehrere Substrate in einem Aufbau, sowohl entlang als auch senkrecht zur Zeilenerstreckungsrichtung vorhanden sein. Es wäre es dabei auch möglich, mehrere Substrate mit Linsen entlang der Strahlengänge hintereinanderzuschalten, d.h. sie anderweitig hintereinander in einer vorbestimmten Lagebeziehung zueinander zu halten, wie z.B. über einen Rahmen, ohne dass ein Aneinanderfügen notwendig wäre. Auf diese Weise stünden für das Vorsehen bzw. Befestigen von Linsen zweimal so viele Hauptseiten zur Verfügung, wie Trägersubstrate verwendet werden, etwa ein Substrat 66, das gemäß obiger Beispiele mit Linsen bestückt sein kann, hier exemplarisch gemäß Fig. 19b, und ein Substrat, das ebenfalls gemäß obiger Beispiele mit Linsen bestückt sein kann, also unter anderem mit Linsen, die über Linsenhalter an den Hauptseiten 66a und/oder 66b befestigt sind, hier aber exemplarisch als einstückig durch beispielsweise Spritzguss oder dergleichen so hergestellt dargestellt ist, dass Linsen an den beiden Seiten 66a und 66b geformt sind, wie wohl natürlich auch abgeformte Linsen anderen Materials als das Material des parallelepipedförmigen Substrats 66 möglich wären sowie Linsen an nur einer der Seiten 66a oder 66b. Beide Substrate sind transparent und werden von den Strahlengängen durchdrungen, und zwar durch die Hauptseiten 66a und 66b hindurch. Obige Ausführungsbeispiele lassen sich also in Form einer Multiaperturabbildungsvorrichtung implementieren, und zwar mit einzeiliger Kanalanordnung, wobei jeder Kanal ein Teilgesichtsfeld eines Gesamtgesichtsfeldes überträgt und sich die Teilgesichtsfelder teilweise überlappen. Ein Aufbau mit mehreren der solchen Multiaperturabbildungsvorrichtungen für Stereo- Trio-, Quattro usw. Aufbauten für die 3D-Bildaufnahme ist möglich. Die Mehrzahl von Modulen kann dabei als eine zusammenhängende Zeile ausgeführt sein. Die zusammenhängende Zeile könnte identische Aktoren und ein gemeinsames Strahlumlenkelement nutzen. Ein oder mehrere eventuell im Strahlengang vorhandene mechanisch verstärkende Substrate können sich über die gesamte Zeile, die einen Stereo-, Trio, Quattro-Aufbau bilden kann, erstrecken. Es können Verfahren der Superresolution genutzt werden, wobei mehrere Kanäle dieselben Teilbildbereiche abbilden. Die optischen Achsen können auch bereits ohne Strahlumlenkeinrichtung divergent verlaufen, so dass weniger Facetten auf der Strahlumlenkeinheit benötigt werden. Die Facetten besitzen dann vorteilhafter Weise nur eine Winkelkomponente. Der Bildsensor kann einteilig sein, nur eine zusammenhängende Pixelmatrix oder mehrere unterbrochene aufweisen. Der Bildsensor kann aus vielen Teilsensoren zusammengesetzt sein, die z.B. auf einer Leiterplatte nebeneinander angeordnet sind. Ein Autofokusantrieb eine Fokussiereinrichtung kann so ausgeführt sein, dass das Strahlumlenkelement synchron mit den Optiken bewegt wird, oder ruhend ist. Bei einer Abwesenheit einer Vorab-Divergenz sehen es Ausführungsbeispiele vor, dass die Strahlengänge zwischen dem Bildsensor 12 und der Strahlumlenkeinrichtung 18 im Wesentlichen oder vollständig parallel verlaufen.

Fig. 21b zeigt einen schematischen Aufbau umfassend eine erste Multiaperturabbildungsvorrichtung 11a und eine zweite Multiaperturabbildungsvorrichtung 11b, wie er bspw. in dem Gerät 130 angeordnet sein kann. Die beiden Multiaperturabbildungsvorrichtungen 11a und 11b können eine gemeinsame Multiaperturabbildungsvorrichtung 11 bilden und einen gemeinsamen Bildsensor 12 und/oder ein gemeinsames Array 14 aufweisen. Die einzeiligen Arrays 14a und 14b bilden bspw. eine gemeinsame Zeile in dem gemeinsamen Array 14. Die Bildsensoren 12a und 12b können den gemeinsamen Bildsensor 12 bilden und bspw. auf einem gemeinsamen Substrat bzw. auf einem gemeinsamen Schaltungsträger wie einer gemeinsamen Platine oder einem gemeinsamen Flexboard montiert sein. Alternativ können die Bildsensoren 12a und 12b auch von einander verschiedene Substrate umfassen. Verschiedene Mischungen dieser Alternativen sind natürlich ebenfalls möglich, wie etwa Multiaperturabbildungsvorrichtungen umfassend einen gemeinsamen Bildsensor, ein gemeinsames Array und/oder eine gemeinsame Strahlumlenkeinrichtung 18 sowie weitere Multiaperturabbildungsvorrichtungen, die separate Komponenten aufweisen. Vorteilhaft an einem gemeinsamen Bildsensor, einem gemeinsamen einzeiligen Array und/oder einer gemeinsamen Strahlumlenkeinrichtung ist, dass eine Bewegung einer jeweiligen Komponente mit einer großen Präzision durch ansteuern einer geringen Menge von Aktoren erhalten werden kann und eine Synchronisierung zwischen Aktoren reduziert oder vermieden werden kann. Ferner kann eine hohe thermische Stabilität erhalten werden. Alternativ oder zusätzlich können auch weitere Multiaperturabbildungsvorrichtungen ein gemeinsames Array, einen gemeinsamen Bildsensor und/oder eine gemeinsame Strahlumlenkeinrichtung aufweisen. Der Aufbau der Multiaperturabbildungsvorrichtung 11 kann bspw. für eine stereoskopische Erfassung eines Gesamt- oder Teilgesichtsfeldes nutzbar sein, wenn optische Kanäle verschiedener Teil-Multiaperturabbildungsvorrichtungen 11a und 11b auf ein gleiches Teilgesichtsfeld gelenkt werden. In vergleichbarer Weise können weitere Teil-Multiaperturabbildungsvorrichtungen in die gemeinsame Multiaperturabbildungsvorrichtungen integriert werden, so dass eine Erfassung höherer Ordnung im Vergleich zu Stereo ermöglicht ist.

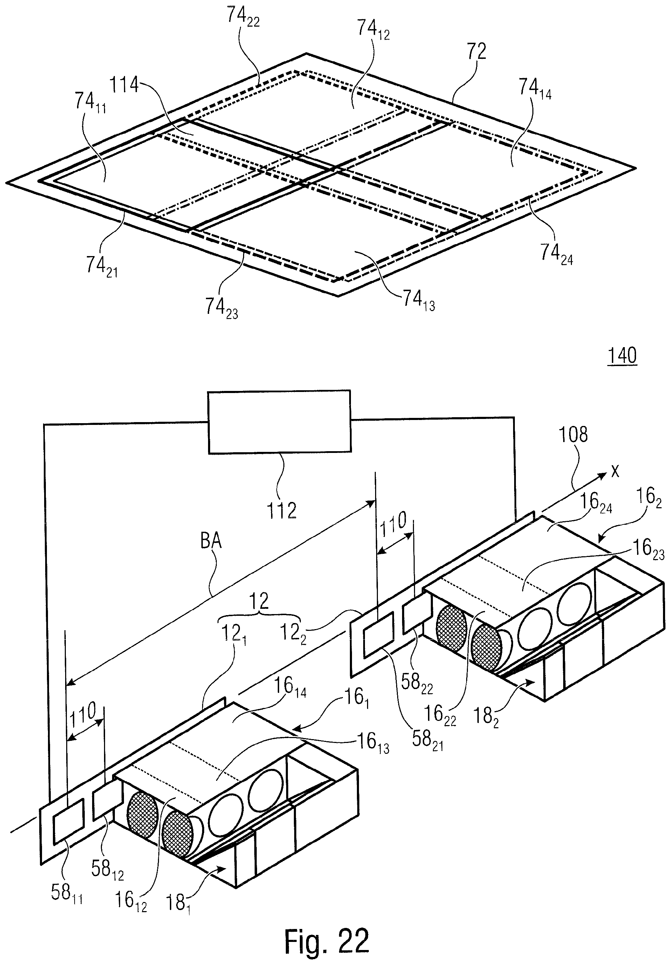

Fig. 22 zeigt eine 3D-Multiaperturabbildungsvorrichtung 140, wie sie gemäß hier beschriebenen Ausführungsbeispielen einsetzbar ist. Sie besitzt einen Bildsensor, der, wie es in Fig. 22 angedeutet ist, in zwei Komponenten $12_1$ bzw. $12_1$ aufgeteilt sein kann, eine Komponente $12_1$ für die "rechten" optischen Kanäle $16_1$ und die andere Komponente $12_2$ für die "linken" Kanäle $16_2$. Die rechten und die linken optischen Kanäle $16_1$ und $16_2$ sind bei dem Beispiel von Fig. 22 identisch aufgebaut, allerdings um den Basisabstand BA lateral versetzt voneinander angeordnet, um möglichst viele Tiefeninformationen bezüglich der im Gesichtsfeld der Vorrichtung 140 befindlichen Szene zu erhalten. Beispielsweise kann es die 3D-Multiaperturabbildungsvorrichtung durch zwei oder mehr Multiaperturabbildungsvorrichtungen 11 gebildet sein. Die Elemente, die mit einem Bezugszeichen versehen sind, das mit einem Index 1 an der ersten Position von links versehen ist, gehören somit zu der ersten Komponente 1 oder einem ersten Modul für die rechten Kanäle, Modul 1, der Vorrichtung 140 und die Elemente, die mit einem Bezugszeichen versehen sind, das mit einem Index 2 an der ersten Position von links versehen ist, gehören somit zu der zweiten Komponente 2 oder einem zweiten Modul für die linken Kanäle, Modul 2, der Vorrichtung 140. Obwohl die Anzahl der Module in Fig. 22 zwei ist, könnte die Vorrichtung auch mehr besitzen, die mit einem jeweiligen Basisabstand zueinander angeordnet sind.

In dem exemplarischen Fall von Fig. 22 umfasst jede Mehrzahl $16_1$ und $16_2$ von optischen Kanälen vier nebeneinander angeordnete optische Kanäle. Die einzelnen "rechten" Kanäle seien durch den zweiten tiefgestellten Index unterschieden. Die Kanäle seien dabei von rechts nach links indexiert. D.h., der optische Kanal $16_{11}$, der in Fig. 22 wegen einer zum Zwecke der Übersichtlichkeit gewählten Teilwegnahme nicht dargestellt ist, ist beispielsweise entlang der Basisabstandsrichtung 108, entlang welcher die linken und die rechten Kanäle voneinander unter dem Basisabstand BA versetzt zueinander angeordnet sind, am äußersten rechten Rand angeordnet, d.h. am weitesten entfernt von der Mehrzahl $16_2$ linker Kanäle, wobei die anderen rechten Kanäle $16_{12}$ - $16_{14}$ entlang der Basisabstandsrichtung 108 folgen. Die Kanäle $16_{11}$ - $16_{14}$ bilden also ein einzeiliges Array von optischen Kanälen, dessen Zeilenerstreckungsrichtung der Basisabstandsrichtung 108 entspricht. Ebenso sind auch die linken Kanäle $16_2$ aufgebaut. Auch sie seien durch den zweiten tiefgestellten Index voneinander unterschieden. Die linken Kanäle $16_{21}$ - $16_{24}$ sind nebeneinander und in der gleichen Richtung aufeinanderfolgend angeordnet wie die rechten Kanäle $16_{11}$ - $16_{14}$, nämlich so, dass der Kanal $16_{21}$ den rechten Kanälen am nächsten ist und der Kanal $16_{24}$ am weitesten entfernt von Letztgenannten.

Jeder der rechten Kanäle $16_{11}$ - $16_{14}$ umfasst eine entsprechende Optik, die, wie es in Fig. 22 angedeutet ist, aus einem Linsensystem bestehen kann. Alternativ könnte jeder Kanal eine Linse aufweisen. Jeder optische Kanal $16_{11}$ - $16_{14}$ nimmt eines von sich überlappenden Teilgesichtsfeldern 74a-d des Gesamtgesichtsfeldes 72 auf, die sich gegenseitig überlappen, *wie es im Zusammenhang mit der Fig.* 19a beschrieben ist. Der Kanal $16_{11}$ bildet beispielsweise das Teilgesichtsfeld $74_{11}$ auf einen Bildsensorbereich $58_{11}$ ab, der optische Kanal $16_{12}$ das Teilgesichtsfeld $74_{12}$ auf einen Bildsensorbereich $58_{12}$, der optische Kanal $16_{13}$ ein zugeordnetes Teilgesichtsfeld $74_{13}$ auf einen entsprechenden in Fig. 22 nicht sichtbaren Bildsensorbereich $58_{13}$ des Bildsensors 12 und der optische Kanal $16_{14}$ ein zugeordnetes Teilgesichtsfeld $74_{14}$ auf einen entsprechenden Bildsensorbereich $58_{14}$, der ebenfalls in Fig. 22 wegen Verdeckung nicht gezeigt ist.

In Fig. 22 sind die Bildsensorbereiche $58_{11}$ - $58_{14}$ des Bildsensors 12 bzw. der Komponente $12_1$ des Bildsensors 12 in einer Ebene parallel zur Basisabstandsrichtung BA bzw. parallel zur Zeilenerstreckungsrichtung 108 angeordnet, und zu dieser Ebene sind auch Linsenebenen der Optiken der optischen Kanäle $16_{11}$ - $16_{14}$ parallel. Zudem sind die Bildsensorbereiche $58_{11}$ - $58_{14}$ untereinander mit einem lateralen Interkanalabstand 110 angeordnet, mit welchem auch die Optiken der optischen Kanäle $16_{11}$ - $16_{14}$ untereinander in dieser

Richtung angeordnet sind, so dass die optischen Achsen und Strahlengänge der optischen Kanäle $16_{11}$ - $16_{14}$ zwischen den Bildsensorbereichen $58_{11}$ - $58_{14}$ und den Optiken $16_{11}$ - $16_{14}$ parallel zueinander verlaufen. Beispielsweise sind Zentren der Bildsensorbereiche $58_{11}$ - $58_{14}$ und optische Zentren der Optiken der optischen Kanäle $16_{11}$ - $16_{14}$ auf der jeweiligen optischen Achse angeordnet, die senkrecht zu der vorerwähnten gemeinsamen Ebene der Bildsensorbereiche $58_{11}$ - $58_{14}$ verlaufen.

Die optischen Achsen bzw. Strahlengänge der optischen Kanäle $16_{11}$ - $16_{14}$ werden durch eine Strahlumlenkeinrichtung $18_1$ umgelenkt und damit mit einer Divergenz versehen, die dazu führt, dass sich die Teilgesichtsfelder $74_{11}$ - $74_{14}$ der optischen Kanäle $16_{11}$ - $16_{14}$ gegenseitig nur teilweise überlappen, wie z.B. so, dass sich paarweise die Teilgesichtsfelder $74_{11}$ - $74_{14}$ höchstens zu 50 % im Raumwinkelsinne überlappen. Die Strahlumlenkeinrichtung $18_1$ kann, wie es in Fig. 22 angedeutet ist, beispielsweise für jeden optischen Kanal $16_{11}$ - $16_{14}$ eine reflektive Facette aufweisen, die unter den Kanälen $16_{11}$ - $16_{14}$ unterschiedlich gegeneinander verkippt sind. Eine mittlere Neigung der reflektiven Facetten gegenüber der Bildsensorebene lenkt das Gesamtgesichtsfeld der rechten Kanäle $16_{11}$ - $16_{14}$ in eine Richtung um, die beispielsweise senkrecht zu der Ebene steht, in welcher die optischen Achsen der Optiken der optischen Kanäle $16_{11}$ - $16_{14}$ vor bzw. ohne Strahlumlenkung durch die Vorrichtung $18_1$ verlaufen, oder weicht von dieser senkrechten Richtung weniger als 10° ab. Alternativ könnte die Strahlumlenkeinrichtung $18_1$ auch Prismen zur Strahlumlenkung der einzelnen optischen Achsen bzw. Strahlengänge der optischen Kanäle $16_{11}$ - $16_{14}$ *verwenden.*

Die Strahlumlenkeinrichtung $18_1$ versieht die Strahlengänge der optischen Kanäle $16_{11}$ - $16_{14}$ mit einer Divergenz derart, dass die eigentlich linear in der Richtung 108 nebeneinander angeordneten Kanäle $16_{11}$ - $16_{14}$ das Gesamtgesichtsfeld 72 zweidimensional abdecken.

Es sei darauf hingewiesen, dass die Strahlengänge bzw. optischen Achsen auch von der beschrieben Parallelität abweichen könnte, dass dennoch die Parallelität der Strahlengänge der optischen Kanäle aber immer noch so ausgeprägt sein könnte, dass sich die Teilgesichtsfelder, die durch die einzelnen Kanäle $16_{11}$ - $16_{14}$ abgedeckt bzw. auf die jeweiligen Bildsensorbereiche $58_{11}$ - $58_{14}$ abgebildet werden, ohne weitere Maßnahmen, wie nämlich die Strahlumlenkung, größtenteils überlappen würden, so dass, um ein größeres Gesamtgesichtsfeld durch die Multiaperturabbildungsvorrichtung 140 abzudecken, die Strahlumlenkeinrichtung 18 die Strahlengänge so mit einer zusätzlichen Divergenz versieht, dass sich die Teilgesichtsfelder der Kanäle $16_{11}$ - $16_{14}$ weniger gegenseitig überlappen. Die Strahlumlenkeinrichtung $18_1$ sorgt beispielsweise dafür, dass das Gesamtgesichtsfeld einen über alle azimutalen Winkel bzw. über alle Transversalrichtungen gemittelten Öffnungswinkel aufweist, der größer ist als 1,5-mal dem entsprechenden mittleren Öffnungswinkel der Teilgesichtsfelder der optischen Kanäle $16_{11}$ - $16_{14}$.

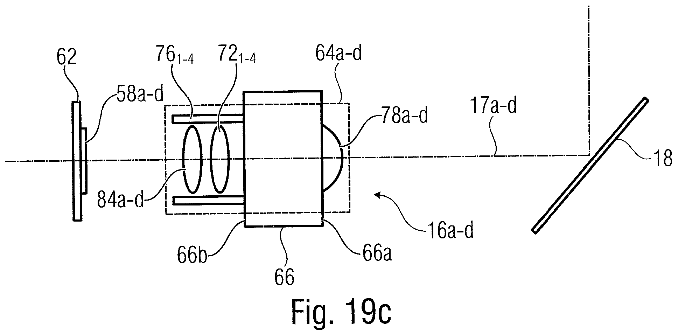

Ebenso wie die rechten Kanäle $16_{11}$ - $16_{14}$ sind nun auch die linken Kanäle $16_{21}$ - $16_{24}$ aufgebaut und relativ zu jeweiligen zugeordneten Bildsensorbereichen $58_{21}$ - $58_{24}$ positioniert, wobei die in der gleichen Ebene wie die optischen Achsen der Kanäle $16_{11}$ - $16_{14}$ parallel zueinander verlaufenden optischen Achsen der optischen Kanäle $16_{21}$ - $16_{24}$ durch eine korrespondierende Strahlumlenkeinrichtung $18_2$ umgelenkt werden, so dass die optischen Kanäle $16_{21}$ - $16_{24}$ das gleiche Gesamtgesichtsfeld 72 in nahezu kongruenter Art und Weise aufnehmen, nämlich in Teilgesichtsfeldern $74_{21}$ - $74_{24}$, in die das Gesamtgesichtsfeld 72 zweidimensional aufgeteilt ist, die sich gegenseitig überlappen, und von denen jedes nahezu vollständig mit dem entsprechenden Teilgesichtsfeld $74_{11}$ - $74_{14}$ eines entsprechenden Kanals der rechten Kanäle $16_{11}$ - $16_{14}$ überlappt. Beispielsweise überlappen die Teilgesichtsfelder $74_{11}$ und das Teilgesichtsfeld $74_{21}$ nahezu vollständig miteinander, die Teilgesichtsfelder $74_{12}$ und $74_{22}$ usw. Die Bildsensorbereiche $58_{11}$ - $58_{24}$ können beispielsweise jeweils aus einem Chip gebildet sein, wie es für den Bildsensor 12 in Fig. 19 beschrieben ist.

Zusätzlich den vorerwähnten Komponenten umfasst die 3D-Multiaperturabbildungsvorrichtung einen Prozessor 112, der die Aufgabe übernimmt, beispielsweise die Bilder, die bei einer Aufnahme durch die 3D-Multiaperturabbildungsvorrichtung 10 durch die rechten optischen Kanäle $16_{11}$ - $16_{14}$ aufgenommen worden sind, zu einem ersten Gesamtbild zu verschmelzen. Das Problem, das dabei zu bewältigen ist, ist das Folgende: Aufgrund der Interkanalabstände 110 zwischen benachbarten Kanälen der rechten Kanäle $16_{11}$ - $16_{14}$ können die Bilder, die bei einer Aufnahme durch die Kanäle $16_{11}$ - $16_{14}$ in den Bildbereichen $58_{11}$ - $58_{14}$ aufgenommen werden, nicht einfach bzw. translatorisch gegenseitig verschoben und aufeinander gelegt werden. In anderen Worten ausgedrückt, lassen sie sich nicht ohne weiteres aneinanderfügen. Disparität nennt man den lateralen Versatz entlang der Richtung B, 108 bzw. 110 in den Bildern der Bildsensorbereiche $58_{11}$ - $58_{14}$ bei Aufnahme einer gleichen Szene, die einander korrespondieren sich aber in unterschiedlichen Bildern befinden. Die Disparität einander korrespondierender Bildinhalte hängt aber wiederum von der Entfernung dieses Bildinhalts in der Szene ab, d.h. der Entfernung des entsprechenden Objekts von der Vorrichtung 140. Der Prozessor 112 könnte nun versuchen, Disparitäten unter den Bildern der Bildsensorbereiche $58_{11}$ - $58_{14}$ selbst auszuwerten, um diese Bilder miteinander zu einem ersten Gesamtbild, nämlich zu einem "rechten Gesamtbild" zu verschmelzen. Nachteilig ist allerdings, dass die Interkanalabstand 110 zwar vorhanden ist, und damit eben erst das Problem hervorruft, dass der Interkanalabstand 110 aber andererseits auch relativ gering ist, so dass die Tiefenauflösung bzw. -abschätzung lediglich ungenau ist. Der Versuch, einander korrespondierende Bildinhalte in einem Überlappbereich zwischen zwei Bildern, wie z.B. in dem Überlappbereich 114 zwischen den Bildern der Bildsensorbereiche $58_{11}$ und $58_{12}$ beispielsweise mittels Korrelation zu ermitteln, ist deshalb schwierig.

Der Prozessor von Fig. 22 verwendet deshalb in dem Überlappbereich 114 zwischen den Teilgesichtsfeldern $74_{11}$ und $74_{12}$ zur Verschmelzung Disparitäten in einem Paar von Bildern, von denen eines durch einen der linken Kanäle $16_{21}$ oder $16_{22}$ aufgenommen ist, dessen abgebildetes zweites Teilgesichtsfeld, nämlich $74_{21}$ bzw. $74_{22}$, mit dem Überlappbereich 114 überlappt. Beispielsweise wertet der Prozess 112 zur Verschmelzung der Bilder der Bildsensorbereiche $58_{11}$ und $58_{12}$ Disparitäten in Bildern aus, von denen eines durch einen der Bildsensorbereiche $58_{21}$ oder $58_{22}$ und ein anderes durch einen der an dem Überlappbereich 114 beteiligten Kanäle aufgenommen ist, d.h. ein Bild, das durch einen der Bildsensorbereiche $58_{11}$ oder $58_{12}$ aufgenommen ist. Ein solches Paar besitzt dann einen Basisabstand *von* Grundbasisabstand BA plus/minus einem oder keinem *eines* Kanalbasisabstands 110. Letzterer Basisabstand ist deutlich größer als ein einzelner Kanalbasisabstand 110, weshalb sich die Disparitäten in dem Überlappbereich 86 für den Prozessor 112 leichter ermitteln lassen. Der Prozessor 112 wertet deshalb für die Verschmelzung der Bilder der rechten Kanäle Disparitäten aus, die sich mit einem Bild der linken Kanäle ergibt und zwar vorzugsweise, aber nicht ausschließlich, zwischen Bildern von einem der rechten Kanäle und einem der linken Kanäle.

Spezifischer ausgedrückt, ist es möglich, dass der Prozessor 112 denjenigen Teil des Teilgesichtsfeldes $74_{11}$, der nicht mit einem der anderen Teilgesichtsfelder der rechten Kanäle überlappt, mehr oder weniger direkt aus dem Bild $58_{11}$ übernimmt und das Gleiche unternimmt für die nicht-überlappenden Bereiche der Teilgesichtsfelder $74_{12}$, $74_{13}$ und $74_{14}$ auf Basis der Bilder der Bildsensorbereiche $58_{12}$ - $58_{14}$, wobei die Bilder der Bildsensorbereiche $58_{11}$ - $58_{14}$ beispielsweise gleichzeitig aufgenommen wurden. Lediglich in den Überlappbereichen benachbarter Teilgesichtsfelder, wie z.B. der Teilgesichtsfelder $74_{11}$ und $74_{12}$, zieht dann der Prozessor 112 Disparitäten aus Bildpaaren heran, deren Überlapp im Gesamtgesichtsfeld 72 im Überlappbereich überlappt, aber von denen in der Mehrzahl aber nicht ausschließlich eines durch einen der rechten Kanäle aufgenommen wurde und das andere durch einen der linken Kanäle, wie z.B. wiederum zur gleichen Zeit.

Gemäß einer alternativen Vorgehensweise wäre es allerdings ebenfalls möglich, dass der Prozessor 112 alle Bilder des rechten Kanals warpt, und zwar gemäß einer Auswertung von Disparitäten zwischen Paaren von Bildern, von denen jeweils eines durch die rechten Kanäle und das andere durch die linken Kanäle aufgenommen wurde. So könnte beispielsweise das Gesamtbild, das durch den Prozessor 112 für die Bilder der rechten Kanäle berechnet wird, virtuell nicht nur im Überlappbereich der Teilgesichtsfelder $74_{11}$ - $74_{14}$ der rechten

Kanäle, sondern auch in dem Nicht-Überlappbereich virtuell auf einen Blick-Punkt "gewarpt" werden, der beispielsweise lateral in der Mitte zwischen den rechten Kanälen $16_{11}$ - $16_{14}$ liegt, und zwar indem auch für diejenigen Bereiche der Teilgesichtsfelder $74_{11}$ - $74_{14}$, die sich nicht gegenseitig überlappen, Disparitäten aus Bildpaaren durch den Prozessor 85 ausgewertet werden, bei denen ein Bild durch einen der rechten Kanäle und ein anderes Bild durch einen der linken Kanäle aufgenommen wurde.

Die 3D-Multiaperturabbildungsvorrichtung 140 von Fig. 22 ist nicht nur in der Lage, ein Gesamtbild aus den Bildern der rechten Kanäle zu erzeugen, sondern die 3D-Multiaperturabbildungsvorrichtung 140 von Fig. 22 ist zumindest auch in einem Betriebsmodus in der Lage, aus einer Aufnahme zusätzlich zu dem Gesamtbild der ersten Kanäle auch ein Gesamtbild der Bilder der linken Kanäle und/oder zusätzlich zu dem Gesamtbild der rechten Kanäle eine Tiefenkarte zu erzeugen.

Gemäß der ersten Alternative ist der Prozessor 112 beispielsweise ausgebildet, um Bilder, die durch die linken optischen Kanäle $16_{21}$ - $16_{24}$ bzw. die Bildsensorbereiche $58_{21}$ - $58_{24}$ aufgenommen sind, zu einem zweiten Gesamtbild zu verschmelzen, nämlich einem Gesamtbild linken Kanals, und dabei in einem Überlappbereich von lateral benachbarten der Teilgesichtsfelder $74_{21}$ - $74_{24}$ der linken optischen Kanäle Disparitäten in einem Paar von Bildern zu verwenden, von denen in der Mehrzahl aber nicht ausschließlich eines durch einen rechten optischen Kanal $16_{11}$ - $16_{14}$ aufgenommen ist und mit dem entsprechenden Überlappbereich des Paars von Teilgesichtsfeldern $74_{21}$ - $74_{24}$ überlappt, und das andere vorzugsweise durch einen der linken optischen Kanäle aufgenommen ist, dessen Teilgesichtsfeld mit dem jeweiligen Überlappbereich überlappt.

Gemäß der ersten Alternative gibt also für eine Aufnahme der Prozessor 112 zwei Gesamtbilder aus, nämlich eines für die rechten optischen Kanäle und das andere für die linken optischen Kanäle. Diese beiden Gesamtbilder könnten beispielsweise einem Benutzer der beiden Augen des Benutzers getrennt zugeführt werden und somit zu einem dreidimensionalen Eindruck der aufgenommenen Szene führen.

Gemäß der anderen vorerwähnten Alternative erzeugt der Prozessor 112 zusätzlich zu dem Gesamtbild zu den rechten Kanälen eine Tiefenkarte, und zwar unter Verwendung von Disparitäten in Paaren von Bildern, die zumindest für jedes der rechten Kanäle $16_{11}$ - $16_{14}$ zumindest ein Paar aufweisen, das ein Bild aufweist, das durch den jeweiligen rechten Kanal aufgenommen ist, und ein weiteres Bild, das durch eines der linken Kanäle aufgenommen ist.

Bei dem Ausführungsbeispiel, bei dem die Tiefenkarte durch den Prozessor 112 erzeugt wird, ist es auch möglich, dass vorerwähnte Warpen für die gesamten Bilder, die durch die rechten Kanäle aufgenommen sind, auf Basis der Tiefenkarte vorzunehmen. Da die Tiefenkarte über das Gesamtgesichtsfeld 72 hinweg Tiefeninformationen aufweist, ist es möglich, die gesamten Bilder, die durch die rechten Kanäle aufgenommen sind, d.h. nicht nur in den Überlappbereichen derselben, sondern auch in den Nicht-Überlapp-bereichen, auf einen virtuellen gemeinsamen Aperturpunkt bzw. ein virtuelles optisches Zentrum zu warpen.

Die beiden Alternativen können auch beide durch den Prozessor 112 abgearbeitet werden: Er könnte zunächst die beiden Gesamtbilder, nämlich eines für die rechten optischen Kanäle und das andere für die linken optischen Kanäle, wie oben beschrieben erzeugen, indem bei der Verschmelzung der Bilder der rechten Kanäle in den Überlappbereichen zwischen den Bildern der rechten Kanäle auch Disparitäten aus Paaren von Bildern verwendet werden, von denen eines zu den Bildern der linken Kanäle gehört, und bei der Verschmelzung der Bilder der linken Kanäle in den Überlappbereichen zwischen den Bildern der linken Kanäle auch Disparitäten aus Paaren von Bildern verwendet werden, von denen eines zu den Bildern der rechten Kanäle gehört, um dann aus den so gewonnen Gesamtbildern, die die Szene in dem Gesamtgesichtsfeld aus unterschiedlichen Perspektiven darstellen, ein Gesamtbild mit zugehöriger Tiefenkarte zu erzeugen, wie z.B. ein Gesamtbild, das zu einer virtuellen Ansicht bzw. bzw. zu einem virtuellen optischen Zentrum zwischen den optischen Zentren der Optiken der rechten und linken optischen Kanäle liegt, möglicher Weise aber nicht ausschließlich mittig dazwischen. Zur Berechnung der Tiefenkarte und zum Warpen eines der beiden Gesamtbilder oder Warpen und Verschmelzen beider Gesamtbilder in die virtuelle Ansicht verwendete der Prozessor 85 dann das rechte und linke Gesamtbild, quasi als Zwischenergebnis aus der vorangegangenen Verschmelzung der linken bzw. rechten Einzelbilder. Der Prozessor wertete hier also Disparitäten in den beiden Zwischenergebnisgesamtbildern aus, um die Tiefenkarte zu erhalten und das Warpen oder Warpen/Verschmelzen derselben durchzuführen.

Es sei erwähnt, dass der Prozessor 112 die Auswertung von Disparitäten in einem Paar von Bildern beispielsweise vermittels Kreuzkorrelation von Bildbereichen durchführt.

Es sei erwähnt, dass bei einer anderen Abdeckung des Gesamtgesichtsfeldes 72 durch die Teilgesichtsfelder der linken Kanäle einerseits und durch die Teilgesichtsfelder der rechten Kanäle andererseits sich ggf. auch mehr als vier Kanäle (unbeachtlich ihrer Zugehörigkeit zu den linken oder rechten Kanälen) einander gegenseitig überlappen, wie es z.B. ja auch an dem gegenseitigen Überlapp zwischen den Überlappbereichen von in Zeilenrichtung oder Spaltenrichtung benachbarten Teilgesichtsfeldern der bisherigen Beispiele der Fall war, wo die Teilgesichtsfelder der rechten Kanäle sowie die Teilgesichtsfelder der linken Kanäle jeweils für sich in Spalten und Zeilen angeordnet waren. Dann gilt für die Anzahl an Disparitätsquellen ganz allgemein, dass sie

$\binom{N}{2}$, wobei N die Anzahl der Kanäle mit sich miteinander überlappenden Teilgesichtsfeldern bezeichne.

Zusätzlich zur vorhergehenden Beschreibung sei noch erwähnt, dass der Prozessor 112 optional u.a. noch eine kanalweise Korrektur perspektivischer Abbildungsstörungen des jeweiligen Kanals vornimmt.

Es sei darauf hingewiesen, dass das Ausführungsbeispiel von Fig. 22 in vielerlei Hinsicht lediglich exemplarisch war. Das betrifft beispielsweise die Anzahl an optischen Kanälen. Beispielsweise beträgt die Anzahl an rechten optischen Kanälen nicht Vier, sondern ist irgendwie größer gleich 2 oder liegt zwischen 2 und 10, beides inklusive, und der Überlappbereich der Teilgesichtsfelder der rechten optischen Kanäle kann, soweit für jedes Teilgesichtsfeld bzw. jeden Kanal, das Paar mit dem größten Überlapp zu dem jeweiligen Teilgesichtsfeld betrachtet wird, flächenmäßig für all diese Paare zwischen 1/2 und 1/1000 einer mittleren Bildgröße der Bilder, die von den Bildbereichen $58_{11}$ - $58_{14}$ aufgenommen werden, liegen, gemessen beispielsweise in der Bildebene, d.h. der Ebene der Bildsensorbereiche. Gleiches gilt beispielsweise für die linken Kanäle. Die Anzahl kann allerdings zwischen den rechten Kanälen und den linken Kanälen unterschiedlich sein. Das heißt, dass die Anzahl der linken optischen Kanäle, $N_L$, und rechten optischen Kanäle, $N_R$, nicht unbedingt gleich sein muss und eine Aufteilung des Gesamtgesichtsfeldes 72 in die Teilgesichtsfelder der linken Kanäle und die Teilgesichtsfelder der rechten Kanäle nicht in etwa gleich zu sein hat, wie dies bei Fig. 22 der Fall war. Hinsichtlich der Teilgesichtsfelder und deren Überlapp kann es sich beispielsweise so verhalten, dass die Teilgesichtsfelder beispielsweise um mindestens 20 Pixel ineinander ragen, soweit eine Bildentfernung bzw. Objektentfernung von 10m betrachtet wird, jedenfalls für alle Paare mit größtem Überlapp, wobei dies für die rechten Kanäle ebenso wie für die linken Kanäle gelten kann.

Anders als im Vorhergehenden erörtert, ist es zudem nicht notwendig, dass die linken optischen Kanäle bzw. die rechten optischen Kanäle einzeilig gebildet sind. Die linken und/oder die rechten Kanäle könnten auch ein zweidimensionales Array von optischen Kanälen bilden. Zudem ist es nicht notwendig, dass die einzeiligen Arrays eine kollineare Zeilenerstreckungsrichtung aufweisen. Die Anordnung von Fig. 22 ist allerdings vorteilhaft, da sie zu einer minimalen Bauhöhe senkrecht zu der Ebene ergibt, in welcher die optischen Achsen der optischen Kanäle, d.h. sowohl der rechten als auch der linken Kanäle, vor bzw. ohne Strahlumlenkung, führt. Hinsichtlich des Bildsensors 12 war bereits erwähnt worden, dass selbiger aus ein, zwei oder mehreren Chips gebildet sein kann. Beispielsweise könnte ein Chip pro Bildsensorbereich $58_{11}$ - $58_{14}$ und $58_{21}$ - $58_{24}$ *vorgese*hen sein, wobei in dem Fall mehrerer Chips selbige auf einem oder mehreren Platinen befestigt sein können, wie z.B. eine Platine für die linken Kanäle bzw. die Bildsensoren der linken Kanäle und eine Platine für die Bildsensoren der rechten Kanäle.

Bei dem Ausführungsbeispiel von Fig. 22 ist es also möglich, benachbarte Kanäle innerhalb der Kanäle der rechten oder linken Kanäle so dicht wie möglich zu platzieren, wobei im optimalen Fall der Kanalabstand 110 dem Linsendurchmesser entspricht. Hieraus ergibt sich ein geringer Kanalabstand und mithin eine geringe Disparität. Die rechten Kanäle einerseits und die linken Kanäle andererseits können aber zueinander mit einem beliebigen Abstand BA angeordnet werden, so dass sich große Disparitäten realisieren lassen. Insgesamt ergibt sich die Möglichkeit einer artefaktreduzierten oder auch -freien Bildfusion und eine Erstellung von Tiefenkarten mit einem passiven optischen Abbildungssystem.

Gegenüber obigen Beispielen wäre es möglich, mehr als nur zwei Gruppen von Kanälen $16_1$ und $16_2$ zu verwenden, sondern mehr. Die Gruppenanzahl könnte mit N bezeichnet werden. Wären dann auch in diesem Fall die Anzahl von Kanälen pro Gruppe gleich sowie die Gesamtgesichtsfeldaufteilung in Teilgesichtsfelder für alle Gruppen gleich, dann ergäbe sich pro Überlappbereich von Teilgesichtsfeldern der Gruppe $16_1$ beispielsweise eine Anzahl von Disparitätsquellen von $\binom{2N}{2}$.

Eine unterschiedliche Gesamtgesichtsfeldaufteilung für die Gruppen von Kanälen ist aber ebenfalls denkbar, wie oben schon erwähnt wurde.

Schließlich wird darauf hingewiesen, dass bei der vorhergehenden Beschreibung lediglich der exemplarische Fall aufgegriffen wurde, dass der Prozessor 112 die Bilder der rechten Kanäle verschmilzt. Selbiges Vorgehen könnte von dem Prozessor 112 wie im Vorhergehenden erwähnt für beide bzw. alle Kanalgruppen durchgeführt werden, oder auch für die linke oder dergleichen.

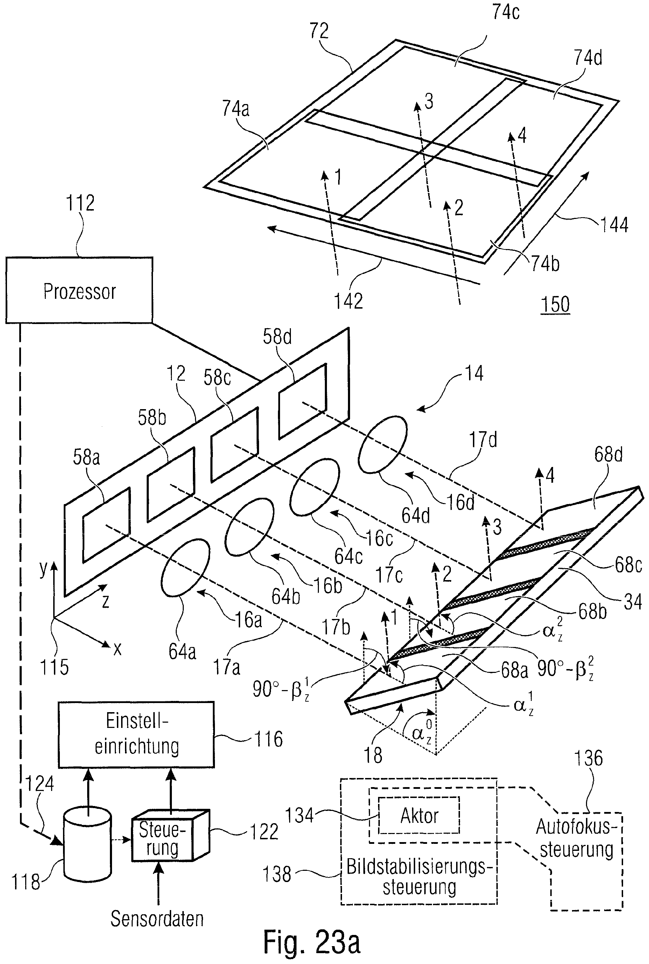

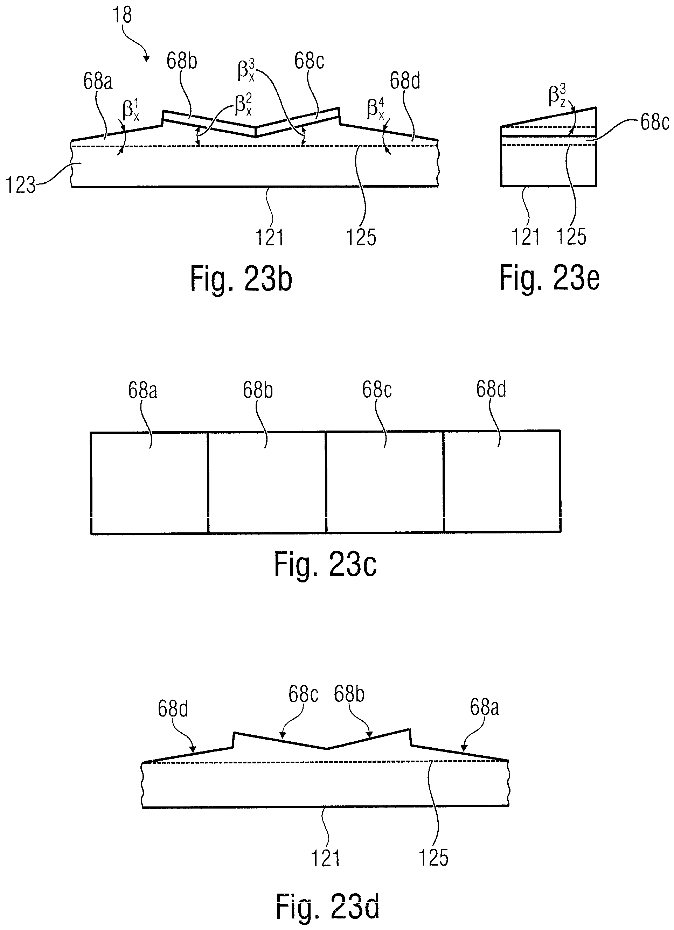

Fig. 23a zeigt ein Ausführungsbeispiel einer Multiaperturabbildungsvorrichtung 150. Bei der Multiaperturabbildungsvorrichtung 150 kann es sich bspw. um die Multiaperturabbildungsvorrichtung 11, 1000, 2000, 4000 oder 8000 handeln. Vorzugsweise sind die Bildsensorbereiche 58a-d in einer gemeinsamen Ebene angeordnet, nämlich der Bildebene der optischen Kanäle 16 bzw. derer Optiken. In Fig. 23a ist diese Ebene exemplarisch parallel zu der Ebene, die durch eine z- und eine y-Achse eines kartesischen Koordinatensystems aufgespannt wird, das in Fig. 23a zur Vereinfachung der nachfolgenden Beschreibung eingezeichnet und mit dem Bezugszeichen 115 versehen ist.

Bei einem linearen Array von optischen Kanälen ist die Größenausdehnung der Multiaperturabbildungsvorrichtung 150, wie sie durch den Bildsensor 12 und die Optiken 64 nach unten hin beschränkt wird, entlang der Zeilenerstreckungsrichtung größer als der Durchmesser eine Linse. Die minimale Ausdehnung der Multiaperturabbildungsvorrichtung 150, wie sie durch die gegenseitige Anordnung von Bildsensor 12 zu Optiken 64 entlang der z-Achse, d.h. entlang der optischen Achsen bzw. Strahlengänge der optischen Kanäle 16a-d, bestimmt wird, ist zwar kleiner als die minimale Ausdehnung entlang der z-Achse, sie ist aber aufgrund der Ausgestaltung der optischen Kanäle 16a-d als einzeiliges Array größer als die Minimalausdehnung der Multiaperturabbildungsvorrichtung in der zu der Zeilenerstreckungsrichtung z senkrechten lateralen Richtung y. Letztere ist durch die laterale Ausdehnung jedes einzelnen optischen Kanals 16a-d, wie z.B. die Ausdehnung der Optiken 64a-d entlang der y-Achse, eventuell inklusive der Halterung 66, gegeben.

Wie es im Vorhergehenden beschrieben wurde, sind bei dem Ausführungsbeispiel von Fig. 23a die optischen Achsen 17a-d vor der bzw. ohne die Umlenkung durch die Strahlumlenkeinrichtung 18 bzw. an beispielsweise den Optiken 64a-d parallel zueinander, wie es in Fig. 23a gezeigt ist, oder aber sie weichen hiervon nur wenig ab. Die damit korrespondierende zentrierte Positionierung von Optiken 64a-d sowie der Bildsensorbereiche 58a-d ist einfach herzustellen und günstig hinsichtlich der Minimierung des Bauraums. Die Parallelität der Strahlengänge der optischen Kanäle bedingt aber auch, dass sich die Teilgesichtsfelder, die durch die einzelnen Kanäle 16a-d abgedeckt bzw. auf die jeweiligen Bildsensorbereiche 58a-d abgebildet werden, ohne weitere Maßnahmen, wie nämlich die Strahlumlenkung, nahezu vollständig überlappen würden. Um ein größeres Gesamtgesichtsfeld durch die Multiaperturabbildungsvorrichtung 150 abzudecken, besteht nun eine weitere Funktion der Strahlumlenkeinrichtung 18 darin, die Strahlengänge so mit einer Divergenz zu versehen, dass sich die Teilgesichtsfelder der Kanäle 16a-d weniger gegenseitig überlappen.

Beispielsweise sei angenommen, dass die optischen Achsen 17a-d der Strahlengänge der optischen Kanäle 16a-d vor bzw. ohne die Strahlumlenkeinrichtung 18 parallel zueinander sind oder gegenüber einer parallelen Ausrichtung entlang der über alle Kanäle gemittelten Ausrichtung um weniger als ein Zehntel eines minimalen Öffnungswinkels der Teilgesichtsfelder der optischen Kanäle 16a-d abweichen. Ohne zusätzliche Maßnahmen überlappten dann die Teilgesichtsfelder größtenteils. Die Strahlumlenkeinrichtung 18 von Fig. 23a umfasst deshalb für jeden optischen Kanal 16a-d eine diesem Kanal eindeutig zugeordnete reflektierende Facette 68a-d, die jeweils optisch planar sind und gegeneinander geneigt sind, nämlich so, dass die Teilgesichtsfelder der optischen Kanäle raumwinkelmäßig weniger überlappen und beispielsweise ein Gesamtgesichtsfeld abdecken, das einen Öffnungswinkel aufweist, der beispielsweise größer ist als 1,5 mal dem Öffnungswinkel der einzelnen Teilgesichtsfelder der optischen Kanäle 16a-d. In dem exemplarischen Fall von Fig. 23a sorgt die gegenseitige Neigung der reflektierenden Facette 68a-d beispielsweise dafür, dass die eigentlich linear entlang der z-Achse nebeneinander angeordneten optischen Kanäle 16a-d das Gesamtgesichtsfeld 72 gemäß einer zweidimensionalen Anordnung der Teilgesichtsfelder 74a-d abdecken.

Betrachtet man bei dem Ausführungsbeispiel von Fig. 23a die angulare Ablenkung der optischen Achsen 17a-d des optischen Kanals 16a-d in der Ebene, die durch die gemittelte Richtung der optischen Achsen vor der Strahlumlenkung und der gemittelten Richtung der optischen Achsen nach der Strahlumlenkung aufgespannt wird, d.h. in der zy-Ebene in dem Beispiel von Fig. 23a, einerseits und in der Ebene, die senkrecht zu der letztgenannten Eben und parallel zur gemittelten Richtung der optischen Achse nach Strahlumlenkung verläuft, andererseits, so entspricht das Beispiel von Fig. 23a dem exemplarischen Fall, dass die mittlere Richtung nach Strahlumlenkung der y-Achse entspricht. Im Mittel werden die optischen Achsen der optischen Kanäle also um 90° in der yz-Ebene um die z-Achse umgelenkt und im Mittel werden die optischen Achsen nicht aus der yz-Ebene herausgekippt.

Es bezeichnet beispielsweise $\beta_x^1$ den Neigungswinkel der Facette 68a gegenüber der xz-Ebene, gemessen in der xy-Ebene, d.h. die Verkippung der Facette 68a um die z-Achse gegenüber der xz-Ebene, in welcher die optischen Achsen 17a-d verlaufen. $\beta_z^1 = 0°$ entspricht einer Ausrichtung der Facette 68a parallel zu der xz-Ebene. Es gilt demzufolge $\alpha_z^1 = 2 \cdot \beta_z^1$. Entsprechend definiere $\beta_x^1$ den Neigungswinkel der Facette 68a gegenüber einer Ebene, die gegenüber der xz-Ebene die Neigung $\beta_z^1$ aufweist und parallel zu der z-Achse verläuft und zwar gemessen entlang der z-Achse. Es gilt demzufolge entsprechend $\alpha_x^1 = 2 \cdot \beta_x^1$. Die gleichen Definitionen sollen für die anderen Kanäle gelten: $\alpha_x^i = 2 \cdot \beta_x^i$, $\alpha_z^i = 2 \cdot \beta_z^i$. Für jeden optischen Kanal kann der Anstellwinkel größer sein, als ein Neigungswinkel der Neigung der diesem Kanal zugeordneten reflektierenden Facette gegenüber dem Trägersubstrat, durch den die optischen Kanäle verlaufen. Hierbei kann das Trägersubstrat parallel zu einer Zeilenerstreckungsrichtung des Arrays 14 positioniert sein und der Anstellwinkel in einer Ebene senkrecht zu der Zeilenerstreckungsrichtung liegen.

Fig. 23b-23e zeigen Seitenansichten einer Strahlumlenkvorrichtung gemäß einem Ausführungsbeispiel für exemplarisch vier optische Kanäle, die linear bzw. einseitig angeordnet sind. Die Strahlumlenkvorrichtung 18 von Fig. 23b-23e könnte als Strahlumlenkvorrichtung von Fig. 19a verwendet werden, wobei dann allerdings die Teilgesichtsfelder nicht wie in Fig. 19a dargestellt im Uhrzeigersinn 3, 4, 2, 1 das Gesamtgesichtsfeld abdecken würden, sondern im Uhrzeigersinn gemäß der Reichenfolge 4, 2, 1, 3. Die Neigungswinkel der Facetten 68a-d sind in Fig. 23b-e eingezeichnet. Sie sind durch hochgestellte Indizes 1-4 voneinander unterschieden bzw. dem jeweiligen Kanal zugeordnet. $\beta_x^1$ ist hier

ebenso wie $\beta_x^4$ $0°$. Die Rückseite des Trägersubstrats, d.h. die Seite, die der mit den Facetten 68a-d versehenen Oberfläche gegenüberliegt, ist in Fig. 23b-23e mit 121 angezeigt. Das den parallelepipedförmigen Anteil des Trägersubstrats 123 bildenden Material befindet sich unterhalb der gestrichelten Linie 125. Es ist ersichtlich, dass das zusätzliche Material, das diesem hinzukommt, wenig Volumen aufweist, so dass eine Abformung erleichtert wird.

Das Trägersubstrat 123 wird mit einem Anstellwinkel $\alpha_x^0$ gegenüber dem Bildsensor 12 geneigt platziert, nämlich um die Achse, um die die mittlere Richtung der optischen Achsen der optischen Kanäle umgelenkt wird, d.h. die z-Achse in Fig. 23a. Dieser Anstellwinkel sorgt dafür, dass die den Bildsensor 12 zugewandte Oberfläche der Strahlumlenkvorrichtung 18 bereits eine "Grobumlenkung" der Strahlengänge der optischen Kanäle bewirkt.

Das bedeutet für die Umlenkwinkel des Umlenkens des Strahlengangs jedes optischen Kanals durch die Strahlumlenkvorrichtung 18, dass dieselben jeweils auf dem Anstellwinkel $\alpha_x^0$ basieren sowie auf der jeweiligen Neigung der dem optischen Kanal zugeordneten reflektierenden Facette bezogen auf das Trägersubstrat 123 selbst. Diese erwähnten Facetten-individuellen Neigungen der Facetten 68a-d können wie soeben beschrieben durch einen Neigungswinkel in der xy-Ebene und einen Neigungswinkel gegenüber der Normalen des Trägersubstrats 123 in der dazu senkrechten Ebene beschrieben werden. Es wird bevorzugt, wenn gilt, dass für jeden Kanal der Anstellwinkel $\alpha_x^0$ größer ist als die Neigung, d.h. $\alpha_x^0 > \max(|\beta_x|, |\beta_z|)$ für alle Kanäle. Es wird noch mehr bevorzugt, wenn besagte Ungleichung bereits für $\alpha_x^0 / 2$ oder sogar für $\alpha_x^0 / 3$ erfüllt ist. In anderen Worten ausgedrückt, wird es bevorzugt, wenn der Anstellwinkel verglichen zu den Neigungswinkeln der Facetten 68a-d groß ist, so dass das zusätzliche Material gegenüber einer rein parallelepipedförmigen Form der Strahlumlenkvorrichtung 18 gering ist. $\alpha_x^0$ kann beispielsweise zwischen 30° und 60° jeweils inklusive liegen.

Die Herstellung der Strahlumlenkvorrichtung 18 von Fig. 23b-23e kann beispielsweise dadurch erfolgen, dass auf das Trägersubstrat 123 das zusätzliche Material durch ein Abformwerkzeug abgeformt wird. Das Trägersubstrat 123 könnte hierbei beispielsweise Glas sein, während das abgeformte zusätzliche Material darauf Polymer ist. Eine weitere Möglichkeit bestünde darin, dass die Strahlumlenkvorrichtung 18 von Fig. 23b-23e einstückig durch Spritzguss oder dergleichen gebildet wird. Das führt dazu, dass die dem Bildsensor zugewandte Oberfläche der Strahlumlenkeinrichtung zumindest an den den optischen Kanälen zugeordneten reflektierenden Facetten verspiegelt ist. Das Trägersubstrat kann drehbar rotatorisch gelagert sein, wie es bspw. im Zusammenhang mit Fig. 12b beschrieben ist.

Manche Aspekte des bisher beschriebenen Aufbaus von Multiaperturabbildungsvorrichtungen betraf quasi eine Wunsch- oder Momentaneinstellung vor bzw. zum Zeitpunkt der Aufnahme eines Gesamtbildes beispielsweise. Die Multiaperturabbildungsvorrichtung 150 von Fig. 23a umfasst beispielsweise einen Prozessor, wie etwa den Prozessor 112, der Bilder, die durch die Bildsensorbereiche 58a-d zu beispielsweise einem gleichen Zeitpunkt aufgenommen worden sind, und zwar mit den vorerwähnten Einstellungen, zu einem Gesamtbild zusammenfügt, das die Szene in dem Gesamtgesichtsfeld 72 repräsentiert. Der Algorithmus, den der Prozessor 112 verwendet, um die Bilder, die durch die optischen Kanäle 16a-d auf die Bildsensorbereiche 58a-d abgebildet und von letzteren aufgenommen worden sind, zusammenzufügen bzw. zu dem Gesamtbild zu verschmelzen, ist beispielsweise so entworfen, dass Annahmen über die Einhaltung bestimmter Parameter der vorbeschriebenen Komponenten der Multiaperturabbildungsvorrichtung 150 eingehalten werden sollten, damit die Qualität des Gesamtbilds eine bestimmte Vorgabe erfüllt oder der Algorithmus überhaupt angewendet werden kann. Beispielsweise geht der Algorithmus von der Einhaltung eines oder mehrerer der folgenden Annahmen aus:

1) Die Optik-zu-Bildsensorbereich-Abstände entlang der x-Achse sind für alle optischen Kanäle 16a-d gleich;

2) Die relative Lage der Teilgesichtsfelder 74a-d und insbesondere der Überlapp zwischen *denselben entspricht einer* vorbestimmten Vorgabe *oder* weicht von letzterer um weniger als eine vorbestimmte Maximalabweichung ab.

Aus unterschiedlichen Gründen kann es nun aber sein, dass eine oder mehrere der soeben genannten Annahmen nicht eingehalten werden oder nicht ausreichend eingehalten werden. Gründe für das Nicht-Einhalten können beispielsweise in der Nicht-Einhaltung von Herstellungsvarianzen bestehen, wie z.B. Ungenauigkeiten der relativen Lagen der Optiken 64a-d zueinander und relativ zu dem Bildsensor 12. Herstellungsungenauigkeiten können auch eine Ungenauigkeit des Einbaus der Spiegelumlenkvorrichtung 18 und ggf. der relativen Lagen der Facetten 68a-d zueinander umfassen, wenn die Strahlumlenkeinrichtung 18 Facetten 68a-d aufweist. Zusätzlich oder alternativ zu den herstellungsbedingten Toleranzabweichungen können Temperaturschwankungen dafür sorgen, dass eine oder mehrere der oben genannten Annahmen nicht zutreffen oder nicht ausreichend eingehalten wird.

Bis zu einem gewissen Maße kann der durch den Prozessor 112 ausgeführte Algorithmus zur Zusammenfügung bzw. Verschmelzung der Bilder der Bildsensorbereiche 58a-d zu dem Gesamtbild ggf. Abweichungen von einer optimalen Ausrichtung und Anordnung der Komponenten ausgleichen, wie z.B. Abweichungen der Positionen der Teilgesichtsfelder 74a-d innerhalb des Gesamtgesichtsfeldes 72 von einer Sollkonstellation relativer Lagen der Teilgesichtsfelder zueinander. Beim Zusammenfügen bzw. Verschmelzen der Bilder könnte der Prozessor 112 beispielsweise in einem gewissen Maße solche Abweichungen ausgleichen. Bei Überschreitung gewisser Abweichungsgrenzen jedoch (Nicht-Einhaltung der Annahme 2) würde beispielsweise der Prozessor 112 nicht in der Lage sein, die Abweichungen auszugleichen.

Eine Herstellung der Multiaperturabbildungsvorrichtung 150 so, dass die soeben erwähnten Annahmen stets eingehalten werden, wie z.B. über einen gewissen Temperaturbereich hinweg, tendiert aber dazu, Herstellungskosten der Multiaperturabbildungsvorrichtung 150 zu erhöhen. Um dies zu vermeiden, umfasst die Multiaperturabbildungsvorrichtung 150 von Fig. 23a eine Einstelleinrichtung 116 zum kanalindividuellen Ändern einer relativen Lage zwischen dem Bildsensorbereich 58i eines jeweiligen optischen Kanals 16i, der Optik 64i des jeweiligen optischen Kanals 16i und der Strahlumlenkeinrichtung 18 bzw. des entsprechenden Segments 68i derselben oder zum kanalindividuellen Ändern einer optischen Eigenschaft 16i oder einer optischen Eigenschaft des die Umlenkung des Strahlengangs des jeweiligen optischen Kanals betreffenden Segments 68i der Strahlumlenkeinrichtung 18. Die Einstelleinrichtung 116 wird durch Vorgabewerte angesteuert bzw. führt die Einstellungsaufgaben gemäß den Vorgabewerten durch. Diese werden durch einen Speicher 118 und/oder eine Steuerung 122 bereitgestellt, die im Folgenden erläutert werden.

Die Vorrichtung 150 besitzt beispielsweise einen Speicher 118 mit eingespeicherten Vorgabewerten zur kanalindividuellen Ansteuerung der Einstelleinrichtung 116. Die Vorgabewerte können herstellerseitig vorgegeben und in den Speicher 118 eingespeichert sein. Zusätzlich kann der Prozessor 112 beispielsweise, wie es in Fig. 23a mit einer gestrichelten Linie 124 angedeutet ist, über Auswertungen von aufgenommenen Bildern der Bildsensorbereiche 58a-d, wie z.B. Bildern, die von dem Prozessor 112 zusammenzufügen bzw. zu einem Gesamtbild zu verschmelzen sind, in der Lage sein, die eingespeicherten Vorgabewerte in dem Speicher 118 zu verbessern bzw. zu aktualisieren. Beispielsweise nimmt der Prozessor 112 eine Szene auf, indem die Multiaperturabbildungsvorrichtung 150 über die Einstelleinrichtung 116 mit aktuellen eingespeicherten Vorgabewerten eingestellt wird, wie es im Nachfolgenden noch näher beschrieben wird. Dazu werden die Vorgabewerte aus dem Speicher 118 gelesen und durch die Einstelleinrichtung 116 zur kanalindividuellen Einstellung verwendet. Der Prozessor 112 gewinnt durch Analyse der so aufgenommenen Bilder der Bildsensorbereiche 58a-d Informationen darüber, wie die eingespeicherten und soeben zur Aufnahme verwendeten Vorgabewerte in dem Speicher 118 modifiziert werden sollten, um bei der nächsten Aufnahme unter Verwendung dieser verbesserten bzw. aktualisierten Vorgabewerte bei der nächsten Aufnahme zu einer genaueren bzw. verbesserten Einhaltung obiger Annahmen zu führen.

Die eingespeicherten Vorgabewerte können einen vollständigen Satz von Einstellwerten aufweisen, d.h. eine Satz von Einstellwerten, um die Vorrichtung 150 komplett einzustellen. Sie sind wie oben beschrieben und unten weiter ausgeführt ausgewählt, um bestimmte kanalindividuelle Abweichungen der optischen Eigenschaften der Kanäle von einer Sollcharakteristik zu verringern oder zu beseitigen

Es kann sein, dass die Vorgabewerte mehrere Sätze von Einstellwerten, wie z.B. einen pro einer Folge von aneinander anschließenden Temperaturintervallen, aufweisen, so dass für eine Bildaufnahme stets der Satz von Einstellwerten verwendet wird, der für eine aktuelle Situation gerade geeignet ist. Dazu kann beispielsweise die Steuerung 122 einen Zugriff bzw. einen Nachschlag in die Tabelle von Zuordnungen zwischen Vorgabewertsätzen und unterschiedlichen vorbestimmten Situationen in dem Speicher 118 ausführen. Die Steuerung 122 erhält für diesen Zugriff Sensordaten, die die aktuelle Situation *widerspie*geln, wie z.B. Daten betreffend Temperatur, Druck, Feuchte, Lage der Vorrichtung 150 im Raum und/oder eine momentane Beschleunigung oder momentane Drehrate der Vorrichtung 150, und bestimmt aus diesen Daten einen aus den mehreren Vorgabewertsätzen in dem Speicher 118, nämlich denjenigen, der der vorbestimmten Situation zugeordnet ist, die der aktuellen Situation, wie sie durch die Sensordaten beschrieben wird, am nächsten kommt. Sensordaten können auch aus den Bildsensordaten der Bildsensorbereiche selbst gewonnen sein. Beispielsweise wird durch die Steuerung 122 ein Satz ausgewählt, in dessen zugehöriges Temperaturintervall die aktuelle Temperatur fällt. Die für eine bestimmte Bildaufnahme durch die Einstelleinrichtung 116 verwendeten Vorgabewerte des ausgewählten Satzes aus dem Speicher 118 können dann wieder aktualisiert werden, wenn die optionale Rückkopplung 124 verwendet wird.

Die eingespeicherten Vorgabenwerte können zum Beispiel derart ausgebildet sein, dass ein Maß für eine Dispersion einer Verteilung eines oder mehrerer Eigenschaften unter den optischen Kanäle durch die Ansteuerung der Einstellvorrichtung mittels der eingespeicherten Vorgabenwerte reduziert wird, nämlich eine transversale Abweichung der Teilgesichtsfelder von einer regelmäßigen Verteilung der Teilgesichtsfelder, Brennweiten der Optiken, oder Schärfentiefentfernungen der optischen Kanäle.

Alternativ könnten die Vorgabewerte in der Steuerung 122 ohne einen Speicher 118 ermittelt werden, nämlich indem beispielsweise in der Steuerung 122 eine Abbildung von den aktuellen Sensordaten auf geeignete Vorgabewerte fest integriert ist. Die Abbildung kann durch einen funktionellen Zusammenhang zwischen Sensordaten und Vorgabewerten beschrieben sein. Der funktionelle Zusammenhang könnte durch Parameter adaptierbar sein. Die Parameter könnten über die Rückkopplung 124 adaptiert werden.

Der Speicher 118 kann beispielsweise ein nichtflüchtiger Speicher sein. Möglicherweise handelt es sich um einen Nurlesespeicher, aber ein wiederbeschreibbarer Speicher ist ebenfalls möglich. Die Steuerung 122 und der Prozessor 112 können in Software, Hardware oder in programmierbarer Hardware implementiert sein. Es kann sich um auf einem gemeinsamen Mikroprozessor ausgeführte Programme handeln. Die Sensoren zur Lieferung der Sensordaten für die Steuerung 122 können zur Vorrichtung 150 gehören, wie z.B. die Bildsensorbereiche, oder aber externe Komponenten sein, wie Komponenten des Geräts, in das die Vorrichtung eingebaut ist, wie es bezüglich nachfolgender Figuren noch erläutert wird.

Nachfolgend werden nun mögliche Ausgestaltungen für die Einstelleinrichtung 116 beschrieben. Die Einstelleinrichtung 116 von Fig. 23a kann dabei auf eine, mehrere oder alle der nachfolgend beschriebenen Ausgestaltungsvarianten zutreffen. Auf spezielle Kombinationen wird ebenfalls nachfolgend eingegangen.

In der gezeigten Variante umfasst die Einstelleinrichtung 116 beispielsweise einen Aktor 126i für jeden Kanal 16i, der die Optik 64i des entsprechenden Kanals 16i in axialer Richtung entlang der optischen Achse 17i bzw. längs des Strahlengangs und/oder transversal bzw. quer dazu entlang der z-Achse und/oder der y-Achse bewegt. Alternativ könnte der Aktor 126i beispielsweise auch den Bildsensor 12 oder einen einzelnen Bildsensorbereich 58i bewegen. Ganz allgemein könnte der Aktor 126i eine relative Bewegung von Bildsensorbereich 58i, Optik 64i und/oder dem entsprechenden Segment 64i der Strahlumlenkeinrichtung 24 bewirken.

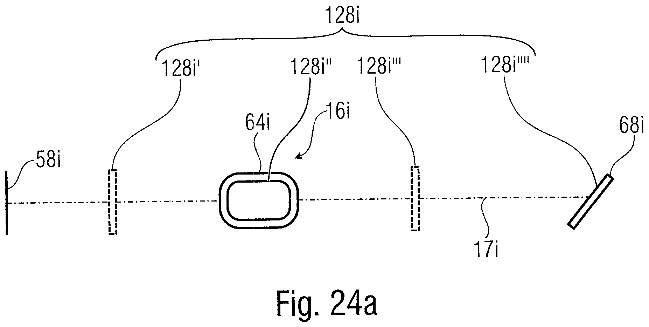

Gemäß einer Variante, auf die sich Fig. 24a bezieht, umfasst die Einstelleinrichtung 116 ein phasenänderndes optisches Element bzw. ein Phasenänderungselement 128i für jeden Kanal 16i, das, wie in Fig. 24a angedeutet, in die jeweilige Optik 64ai integriert sein kann (128i"), in das Segment 68i integriert sein kann (128i""), zwischen Bildsensorbereich 58i und Optik 64i (128i') oder zwischen Optik 64i und Strahlumlenkeinrichtungssegment 68i (128i'") positioniert sein kann, wobei auch Kombinationen der vorerwähnten Möglichkeiten möglich sind. Das phasenändernde optische Element 128i kann beispielsweise eine ortsabhängige Änderung eines Brechungsindex, also eine lokale Verteilung desselben, bewirken, wie z.B. durch Flüssigkeitskristalle. Alternativ oder zusätzlich bewirkt das phasenändernde optische Element 128i eine Änderung der Form einer optisch aktiven Oberfläche, wie z.B. durch Nutzung von Piezos, die auf flexible, feste, transparente Materialien mechanisch einwirken und eine Verformung bewirken oder durch Nutzung des Elektrobenetzungseffekts. Das Phasenänderungselement 128i" könnte beispielsweise den Brechungsindex der Optik 64i ändern. Alternativ könnte das Phasenänderungselement 128i" eine Form einer optischen Linsenfläche der Optik 64i verändern und dadurch die effektive Brechkraft der Optik 64i verändern. Das Phasenänderungselement 128i"" könnte beispielsweise auf einer optisch relevanten Oberfläche der Segmente 68i, wie z.B. auf der reflektiven Facette, ein sinusförmiges Phasengitter erzeugen, um eine virtuelle Verkippung der entsprechenden Oberfläche zu bewirken. Auf ähnliche Weise könnte das Phasenänderungselement 128i' oder Phasenänderungselement 128i" die optische Achse umlenken.

In anderen Worten ausgedrückt, kann die Phasenänderung, die durch das phasenändernde optische Element 128i bewirkt wird, weitgehend rotationssymmetrisch, wie z.B. rotationssymmetrisch um die optische Achse 17i sein, und somit in dem Fall 128i" beispielsweise eine Änderung der Brennweite der Optik 64i bewirken. Die Phasenänderung, die durch das Element 128i bewirkt wird, kann allerdings auch weitgehend linear sein, wie z.B. linear entlang der z-Achse oder linear entlang der y-Achse, um eine Änderung des Ablenkwinkels bzw. eine Ablenkung der optischen Achse 17i in der entsprechenden Richtung zu bewirken.

Die rotationssymmetrische Phasenänderung kann zur Fokussierung verwendet werden, und die lineare Phasenänderung zur Lagekorrektur des Teilgesichtsfeldes des entsprechenden optischen Kanals 16i.

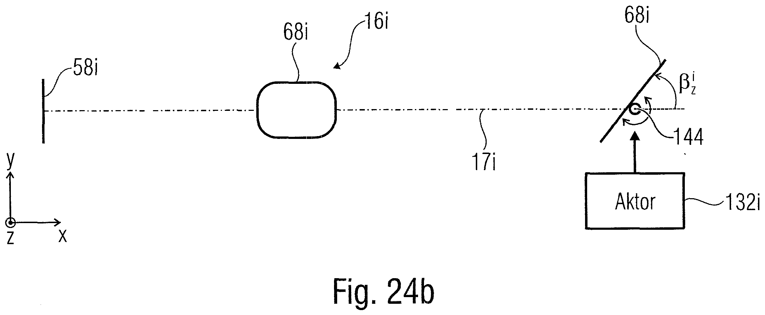

Gemäß einer weiteren Variante, die in Fig. 24b dargestellt ist, umfasst die Einstelleinrichtung 116 für jeden Kanal 16i einen Aktor 132i, der das Segment 68i, wie z.B. die reflektierende Facette des jeweiligen Kanals 16i, in seiner Winkelorientierung bezüglich der optischen Achse 17i ändert, d.h. den Anstellwinkel $\beta_x^i$. Dabei sei erwähnt, dass das Segment 68i nicht auf eine reflektierende Facette beschränkt ist. Jedes Segment 68i könnte auch als Prisma ausgebildet sein, das die Richtung der optischen Achse 17i in der yz-Ebene umlenkt, während das Prisma von dem Strahlengang des optischen Kanals 16i durchlaufen wird.

Zur Realisierung der relativen Bewegungen durch die Aktoren 126i bzw. 132i, d.h. zur Erzeugung der Bewegung der Optik 68i, die beispielsweise translatorisch ausgeführt sein kann, sowie zum Verkippen des Segments 68i durch den Aktor 132i und die z-Achse, kann beispielsweise ein pneumatischer, hydraulischer, piezoelektrischer, thermischer, elektrostatischer oder elektrodynamischer Antrieb oder ein DC- oder Schrittmotor oder wiederum ein Tauchspulenantrieb verwendet werden.

Zurückkehrend zur Fig. 23a ist mit gestrichelten Linien angedeutet, dass die Multiaperturabbildungsvorrichtung 150 optional zusätzlich zu der Einstelleinrichtung 116 einen oder mehrere Aktoren 134 zum Erzeugen einer kanalglobalen, d.h. für alle optischen Kanäle 16a-d gleiche, Relativbewegung zwischen Bildsensor 12, Optikarray 14 und Strahlumlenkeinrichtung 18 umfassen kann. Der eine oder die mehreren zusätzlichen Aktoren 134 kann/können dabei, wie es in Fig. 23a angedeutet ist, Teil einer optional vorhandenen Autofokussteuerung 136 (Fokusiereinrichtung) und/oder einer optional vorhandenen Bildstabilisierungssteuerung der Multiaperturabbildungsvorrichtung sein.

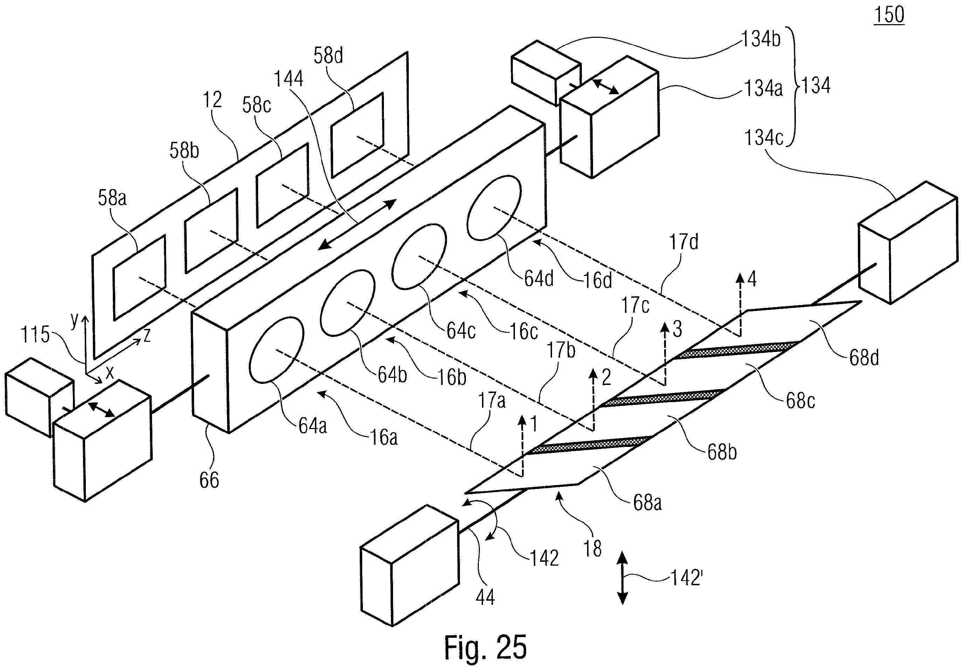

Ein konkretes Beispiel einer um zusätzliche Aktoren ergänzten Vorrichtung 150 von Fig. 23a ist in Fig. 25 gezeigt. Fig. 25 zeigt die Multiaperturabbildungsvorrichtung 150 von Fig. 23a, wobei die Optiken 64a-d der optischen Kanäle 16a-d über den gemeinsamen Träger 66 gegeneinander mechanisch fixiert sind. Über diesen gemeinsamen Halter ist es nun möglich, die Optiken 64a-d einer globalen für alle Kanäle gleichen Bewegung zu unterziehen, wie z.B. durch eine translatorische Bewegung des Trägers 66 in der z-Richtung, d.h. entlang der Zeilenerstreckungsrichtung des Arrays 14. Hierzu ist ein Aktor 134a vorgesehen. Der Aktor 134a erzeugt also eine translatorische Bewegung der Optiken 64a-d, die für alle optischen Kanäle 16a-d gleich ist, indem der Aktor 134a den gemeinsamen Träger 66 der translatorischen Bewegung entlang der x-Achse unterzieht. Hinsichtlich des Typs von Aktor 134a wird auf die Beispiele hingewiesen, auf die Bezug nehmend auf die Fig. 24a und 24b hingewiesen wurde. Ferner umfasst die Vorrichtung 150 einen Aktor 134b zum kanalglobalen, d.h. für alle optischen Kanäle 16a-d gleichen, Ändern des Bildsensor-58i-zu-Optik-64i-Abstands entlang der x-Achse bzw. entlang der optischen Achse 17i. Wie es in Fig. 25 angedeutet ist, unterzieht beispielsweise der Aktor 134b die Optiken 64a-d der translatorischen Bewegung entlang der z-Achse zur Änderung des Abstands von den zugeordneten Bildsensorabschnitten 58a-d nicht über den Träger 66, sondern auch via den Aktor 134a, der somit ebenfalls der translatorischen Bewegung entlang der x-Achse unterzogen wird und quasi als Aufhängung für den Träger 66 dient.

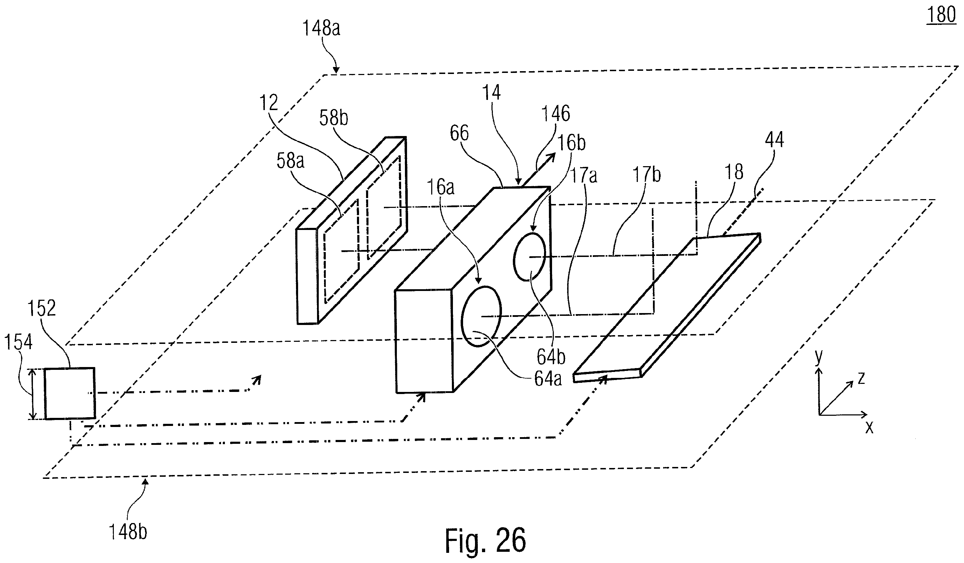

Zusätzlich umfasst die Vorrichtung 150 von Fig. 26 einen Aktor 134c zum Drehen der Strahlumlenkeinrichtung 18 um eine Achse, die parallel zur z-Achse verläuft und in oder nicht weit entfernt von der Ebene liegt, in welcher die optischen Achsen 17a-d verlaufen. Auch bezüglich der Aktoren 134b und 134c wird bezüglich möglicher Implementierungsbeispiele auf die Auflistung von Beispielen verwiesen, die Bezug nehmend auf die Fig. 24a und 24b im Vorhergehenden geliefert wurde. Die Rotationsbewegung bzw. Drehbewegung, die durch den Aktor 134c auf die Strahlumlenkeinrichtung 18 ausgeübt wird, wirkt sich auf die Segmente 68a-d der Strahlumlenkeinrichtung 18 für alle Kanäle 16a-d gleichermaßen aus, d.h. ist kanalglobal.

Über den Aktor 134b ist nun die Autofokussteuerung 136 beispielsweise in der Lage, den Fokus einer Aufnahme durch die Vorrichtung 150 vermittels der Kanäle 16a-d im kanalglobalen Sinne zu steuern. Die Bildstabilisierungssteuerung 138 ist in der Lage, das Gesamtgesichtsfeld 72 vermittels des Aktors 134c in einer ersten Richtung 142 und vermittels des Aktors 134a in einer dazu senkrechten Richtung 144 vor Verwacklungen durch einen Benutzer beispielsweise zu stabilisieren. Die erste Richtung 142 kann durch eine Rotationsbewegung um die Rotationsachse 44 erhalten werden. Wie es durch die erste Richtung 142' angedeutet ist, kann alternativ oder zusätzlich auch eine translatorische Bewegung der Strahlumlenkeinrichtung 18 und/oder des Arrays 14 von dem Aktor 134 erzeugt werden. Die Richtungen 142, 142' und 144 können dabei parallel zu den Bildachsen sein, in einer Ebene der Richtung oder diesen entsprechen. Hierin beschriebene Bildstabilisatoren können ausgebildet sein, um für zwei, eine Vielzahl oder alle Strahlengänge der optischen Kanäle gemeinsam zu wirken. Das bedeutet, auf eine kanalindividuelle Bildstabilisierung kann verzichtet werden, was vorteilhaft ist.

Beispielsweise weist dazu die Vorrichtung 150 von Fig. 23a für jeden Kanal 16a-d einen Aktor, etwa einen Aktor 126i für jeden Kanal 16i auf, um die Bildsensorbereiche 58a-d kanalindividuell einer translatorischen Bewegung entlang der z-Achse und/oder entlang der y-Achse zu unterziehen, um beispielsweise Herstellungsungenauigkeiten oder temperaturbedingte Drifts der Teilgesichtsfelder innerhalb des Gesamtgesichtsfeldes auszugleichen. Die Vorrichtung 150 von Fig. 23a könnte alternativ oder zusätzlich einen Aktor 128i'' aufweisen, um Brennweitenunterschiede der Optiken 64a-d, die herstellungsbedingt unerwünschter Weise aufgetreten sind, auszugleichen. Zusätzlich oder alternativ kann die Vorrichtung 150 von Fig. 23a einen Aktor 128i''' aufweisen, um herstellungsbedingt oder temperaturbedingt entstandene Abweichungen der relativen Neigungen der Segmente 68a-d untereinander so zu kompensieren, dass die relativen Neigungen zu der gewünschten Abdeckung des Gesamtgesichtsfeldes 72 durch die Teilgesichtsfelder 74a-d führen. Zusätzlich oder alternativ kann die Vorrichtung 150 dann schließlich noch Aktoren des Typs 128i' bzw. 128i''' aufweisen.

Noch einmal zusammenfassend kann die Vorrichtung 150 also einen Aktor 134c aufweisen, der ausgebildet ist, um die Strahlumlenkeinrichtung 18 um eine Achse zu drehen, die parallel zu der Zeilenerstreckungsrichtung z des Arrays 14 ist. Die Drehachse liegt beispielsweise in der Ebene der optischen Achsen 17a-d oder davon weniger als ein Viertel eines Durchmessers der Optiken 64a-d entfernt. Alternativ wäre es natürlich auch möglich, dass die Drehachse weiter entfernt liegt, wie z.B. weniger als ein Optikdurchmesser oder weniger als vier Optikdurchmesser. Der Aktor 134c kann beispielsweise vorgesehen sein, um die Strahlumlenkeinrichtung 18 mit kurzer Ansprechzeit in einem lediglich kleinen Winkelbereich, wie z.B. innerhalb einer Spanne von weniger als 5° oder weniger als 10° zu drehen, um Verwacklungen der Multiaperturabbildungsvorrichtung 150 durch beispielsweise einen Benutzer während einer Aufnahme auszugleichen. Der Aktor 134c würde in diesem Fall beispielsweise von der Bildstabilisierungssteuerung 138 angesteuert werden.

Alternativ oder zusätzlich könnte Aktor 134c ausgebildet sein, um mit größeren Winkelverstellungen das Gesamtgesichtsfeld 72, das durch die Gesamtabdeckung der Teilgesichtsfelder 74a-d (Fig. 23a) definiert wird, in seiner Richtung zu verändern. Dabei wäre es ferner möglich, dass durch Rotation der Strahlumlenkeinrichtung 18 auch Ablenkungen erzielt werden, bei denen das Gesamtgesichtsfeld in der entgegengesetzten Richtung relativ zu der Vorrichtung 150 angeordnet ist, indem beispielsweise die Strahlumlenkeinrichtung 18 als ein beidseitig reflektives Spiegelarray ausgebildet ist.

Wiederum alternativ oder zusätzlich kann die Vorrichtung 150 einen Aktor 134a aufweisen, der ausgebildet ist, um die Optiken 64a-d vermittels des Substrats 66 bzw. das Substrat 66 selbst und damit die Optiken 64a-d translatorisch entlang der Zeilenerstreckungsrichtung zu bewegen. Der Aktor 134a könnte beispielsweise ebenfalls durch die vorerwähnte Bildstabilisierungssteuerung angesteuert werden, um durch die Bewegung 96 entlang der Zeilenerstreckungsrichtung eine Bildstabilisierung quer zu der Bildstabilisierung zu erzielen, die durch die Rotation der Spiegelumlenkvorrichtung 18 verwirklicht wird.

Weiterhin kann zusätzlich oder alternativ die Vorrichtung 150 einen Aktor 134b zum Verändern des bildseitigen Abstands zwischen Bildsensor 12 und Optiken 64a-d bzw. zwischen Bildsensor 12 und Körper 66 aufweisen, um eine Schärfentiefeneinstellung zu erzielen, vgl. Fig. 20. Die Einrichtung 98 kann durch eine manuelle Benutzersteuerung oder durch eine Autofokussteuerung der Vorrichtung 150 gesteuert werden.

Der Aktor 134a dient also als Aufhängung des Substrats 66 und ist vorzugsweise, wie in Fig. 23a angedeutet seitlich neben dem Substrat 66 entlang der Zeilenerstreckungsrichtung angeordnet, um die Bauhöhe nicht zu erhöhen. Auch für die Aktoren 134b und 134c gilt, dass selbige vorzugsweise in der Ebene der optischen Strahlengänge angeordnet sind, um die Bauhöhe nicht zu erhöhen.

Es sei darauf hingewiesen, dass die Optiken 64a-d nicht nur untereinander, wie z.B. über das schon erwähnte transparente Substrat, sondern auch relativ zu der Strahlumlenkeinrichtung in konstanter relativer Lage gehaltert sein können, wie z.B. über einen geeigneten Rahmen, der vorzugsweise die Bauhöhe nicht vergrößert und deshalb vorzugsweise in der Ebene der Komponenten 12, 14 und 66 bzw. in der Ebene der Strahlengänge verläuft. Die Konstanz der relativen Lage könnte sich auf den Abstand zwischen Optiken und Strahlumlenkeinrichtung entlang der optischen Achsen beschränken, so dass der Aktor 134b beispielsweise die Optiken 64a-d zusammen mit der Strahlumlenkeinrichtung 18 translatorisch entlang der optischen Achsen bewegt. Der Optiken-zu-Strahlumlenkeinrichtung-Abstand könnte auf einen minimalen Abstand eingestellt sein, so dass der Strahlengang der Kanäle nicht durch die Segmente der Strahlumlenkeinrichtung 18 lateral eingeschränkt wird, was die Bauhöhe verringert, da andernfalls die Segmente 68i hinsichtlich der lateralen Ausdehnung für den größten Optiken-zu-Strahlumlenkeinrichtung-Abstand dimensioniert sein müssten, um den Strahlengang nicht einzuschneiden. Zusätzlich könnte die Konstanz der relativen Lage bedeuten, dass vorerwähnter Rahmen die Optiken und die Strahlumlenkeinrichtung entlang der z-Achse starr zueinander haltert, sodass der Aktor 134a die Optiken 64a-d zusammen mit der Strahlumlenkeinrichtung translatorisch entlang der Zeilenerstreckungsrichtung bewegen würde.

Die oben beschriebene Strahlumlenkeinrichtung 18 zum Umlenken des Strahlengangs der optischen Kanäle ermöglicht zusammen mit dem Aktor 134c zur Erzeugung der Rotationsbewegung der Strahlumlenkeinrichtung 18 und dem Aktor 134a einer optischen Bildstabilisierungssteuerung der Multiaperturabbildungsvorrichtung 150 eine Bild- bzw. Gesamtbildfeldstabilisierung in zwei Dimensionen, nämlich durch die translatorische Bewegung des Substrats 66 eine Bildstabilisierung entlang einer ersten Bildachse, die im Wesentlichen parallel zur Zeilenerstreckungsrichtung verläuft, und durch die Erzeugung der Rotationsbewegung der Strahlumlenkeinrichtung 18 eine Bildstabilisierung entlang einer zweiten Bildachse, die im Wesentlichen parallel zu den optischen Achsen vor bzw. ohne Strahlumlenkung verläuft, oder - betrachtet man die umgelenkten optischen Achsen - senkrecht zu den optischen Achsen und der Zeilenerstreckungsrichtung. Zusätzlich kann die beschriebene Anordnung eine translatorische Bewegung der im angesprochenen Rahmen fixierten Strahlumlenkeinrichtung und des Arrays 14 senkrecht zur Zeilenerstreckungsrichtung bewirken, wie z.B. durch den beschriebenen Aktor 54, die für die Realisierung einer Fokuseinstellung und damit einer Autofokusfunktion genutzt werden kann.

Fig. 26 zeigt eine schematische Ansicht einer Multiaperturabbildungsvorrichtung 180 zur Verdeutlichung einer vorteilhaften Anordnung von Aktoren, etwa zur Bildstabilisierung und/oder zur Einstellung eines Fokus. Bei der Multiaperturabbildungsvorrichtung 180 kann es sich bspw. um die Multiaperturabbildungsvorrichtung 11, 150, 1000, 2000, 4000 oder 8000 handeln. Der Bildsensor 12, das Array 14 und die Strahlumlenkeinrichtung 18 können einen Quader im Raum aufspannen. Der Quader kann auch als virtueller Quader verstanden werden und kann beispielsweise ein minimales Volumen und insbesondere eine minimale senkrechte Ausdehnung entlang einer Richtung parallel zu der y-Richtung bzw. einer Dickenrichtung aufweisen und den Bildsensor 12, das einzeilige Array 14 und die Strahlumlenkeinrichtung 18 umfassen. Das minimale Volumen kann auch so verstanden werden, dass es einen Quader beschreibt, der durch die Anordnung und/oder betriebsgemäße Bewegung des Bildsensors 12, des Arrays 14 und/oder der Strahlumlenkeinrichtung 18 aufgespannt ist. Das Array 14 kann eine Zeilenerstreckungsrichtung 146 aufweisen, entlang derer die optischen Kanäle 16a und 16b nebeneinander, ggf. parallel zueinander, angeordnet sind. Die Zeilenerstreckungsrichtung 146 kann ortsfest im Raum angeordnet sein.

Der virtuelle Quader kann zwei Seiten aufweisen, die gegenüberliegend parallel zueinander, parallel zu der Zeilenerstreckungsrichtung 146 des einzeiligen Arrays 14 sowie parallel zu einem Teil des Strahlengangs 17a und/oder 17b der optischen Kanäle 16a bzw. 16b zwischen dem Bildsensor 12 und der Strahlumlenkeinrichtung 18 ausgerichtet sind. Vereinfacht, jedoch ohne einschränkende Wirkung, können dies beispielsweise eine Oberseite und eine Unterseite des virtuellen Quaders sein. Die zwei Seiten können eine erste Ebene 148a und eine zweite Ebene 148b aufspannen. D.h., die beiden Seiten des Quaders können jeweils Teil der Ebene 148a bzw. 148b sein. Weitere Komponenten der Multiaperturabbildungsvorrichtung können vollständig, zumindest aber teilweise innerhalb des Bereichs zwischen den Ebenen 148a und 148b angeordnet sein, so dass ein Bauraumbedarf der Multiaperturabbildungsvorrichtung 180 entlang einer Richtung parallel zu einer Oberflächennormalen der Ebenen 148a und/oder 148b gering ist, was vorteilhaft ist. Ein Volumen der Multiaperturabbildungsvorrichtung kann einen geringen oder minimalen Bauraum zwischen den Ebenen 148a und 148b aufweisen. Entlang der lateralen Seiten oder Erstreckungsrichtungen der Ebenen 148a und/oder 148b kann ein Bauraum der Multiaperturabbildungsvorrichtung groß oder beliebig groß sein. Das Volumen des virtuellen Quaders ist bspw. von einer Anordnung des Bildsensors 12, des einzeiligen Arrays 14 und der Strahlumlenkeinrichtung 18 beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 148a und 148b zueinander gering oder minimal wird. Gegenüber anderen Anordnungen der Komponenten kann das Volumen und/oder der Abstand anderer Seiten des virtuellen Quaders vergrößert sein.

Die Multiaperturabbildungsvorrichtung 180 umfasst eine Aktoreinrichtung 152 zum Erzeugen einer Relativbewegung zwischen dem Bildsensor 12, dem einzeiligen Array 14 und der Strahlumlenkeinrichtung 18. Die Aktoreinrichtung 152 ist zumindest teilweise zwischen den Ebenen 148a und 148b angeordnet. Die Aktoreinrichtung 152 kann ausgebildet sein, um zumindest eines aus dem Bildsensor 12, dem einzeiligen Array 14 oder der Strahlumlenkeinrichtung 18 rotatorisch um zumindest eine Achse und/oder translatorisch entlang einer oder mehrerer Richtungen oder zu bewegen. Hierfür kann die Aktoreinrichtung 152 zumindest einen Aktor aufweisen, etwa den Aktor 128i, 132i und/oder 134, zum kanalindividuellen Ändern einer relativen Lage zwischen dem Bildsensorbereich 58i eines jeweiligen optischen Kanals 16i, der Optik 64i des jeweiligen optischen Kanals 16i und der Strahlumlenkeinrichtung 18 bzw. des entsprechenden Segments 68i derselben oder zum kanalindividuellen Ändern einer optischen Eigenschaft 16i oder einer optischen Eigenschaft des die Umlenkung des Strahlengangs des jeweiligen optischen Kanals betreffenden Segments 68i der Strahlumlenkeinrichtung 18. Alternativ oder zusätzlich kann die Aktoreinrichtung einen Autofokus und/oder eine optische Bildstabilisierung implementieren, wie es vorangehend beschrieben ist.

Die Aktoreinrichtung 152 kann eine Abmessung oder Ausdehnung 154 parallel zu der Dickenrichtung aufweisen. Ein Anteil von höchstens 50 %, höchstens 30 % oder höchstens 10 % der Abmessung 154 kann ausgehend von einem Bereich zwischen den Ebenen 148a und 148b über die Ebene 148a und/oder 148b hinausragen oder aus dem Bereich herausragen. Das bedeutet, dass die Aktoreinrichtung 152 höchstens unwesentlich über die Ebene 148a und/oder 148b hinausragt. Gemäß Ausführungsbeispielen ragt die Aktoreinrichtung 152 nicht über die Ebenen 148a und 148b hinaus. Vorteilhaft daran ist, dass eine Ausdehnung der Multiaperturabbildungsvorrichtung 180 entlang der Dickenrichtung durch die Aktoreinrichtung 152 nicht vergrößert wird.

Die oben beschriebenen Vorrichtungen 20, 30, 40, 50, 60, 70, 90, 100 und/oder 140 können auch als Abbildungssysteme bezeichnet werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen *Aspekte, die* im *Zusammenhang mit einem oder* als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Multiaperturabbildungsvorrichtung (11; 150; 180; 1000; 2000; 4000; 8000) mit:

   zumindest einem Bildsensor (12); und
   einem Array (14; 14') von nebeneinander angeordneten optischen Kanälen (16a-d; 16N), wobei jeder optische Kanal eine Optik (64a-d) zur Abbildung zumindest eines Teilbereichs (74a-d) eines Objektbereichs (72) auf einen Bildsensorbereich (58a-d) des Bildsensors (12) aufweist, wobei das Array (14; 14') Folgendes aufweist:

ein Gehäuse (1002), umfassend eine dem Bildsensor (12) zugewandte oder abgewandte Wandstruktur (1004; 1004a-b), durch die die optischen Kanäle verlaufen, und eine an der Wandstruktur (1004; 1004a-b) angeordnete Seitenwandstruktur (1006; 1006a-b), wobei die Wandstruktur (1004; 1004a-b) oder die Seitenwandstruktur (1006; 1006a-b) umfassend Glas, Keramik, Glaskeramik oder ein kristallines Material gebildet ist, wobei in dem Gehäuse (1002) die Optiken (64a-d) der optischen Kanäle (16a-d; 16N) angeordnet sind, und wobei die Wandstruktur (1004; 1004a-b) mit Optiken (64a-d) der optischen Kanäle (16a-d; 16N) verbunden ist, zumindest **dadurch gekennzeichnet, dass** die Wandstruktur die Optiken (64a-d) gegeneinander fixiert;

wobei die Optiken (64a-d) bezüglich einer benachbarten Trennwandstruktur (1016a-c) berührungslos angeordnet oder mit einem weichen Material abgestützt sind, und bei der sich die Optiken (64a-d) bei einer thermisch induzierten Verformung entlang einer optischen Länge (1024) des optischen Kanals verformen und entlang einer Richtung (146) senkrecht zu der optischen Länge (1024) des optischen Kanals verformen, wobei jeder optische Kanal (16a-d; 16N) von der Verformung in Richtung (146) senkrecht zu der optischen Länge (1024) eines benachbarten optischen Kanals (16a-d; 16N) gering beeinflusst oder unbeeinflusst ist; oder wobei eine der Optiken (64a-d) eine Mehrzahl seriell angeordneter Optikelemente umfasst, die untereinander mechanisch verbunden sind, so dass die Optik entlang einer Richtung senkrecht zu einem Strahlengang (17a-d) durch die Optiken (64a-d) und entlang einer Zeilenerstreckungsrichtung (146) des Arrays (14; 14') in einem Bereich von zumindest 50 % einer Länge (1024) des optischen Kanals (16a-d; 16N) entlang einer optischen Achse desselben berührungslos gegenüber anderen mechanischen Elementen angeordnet sind.

2. Multiaperturabbildungsvorrichtung (11; 150; 180; 1000; 2000; 4000; 8000) mit:

zumindest einem Bildsensor (12); und
einem Array (14; 14') von nebeneinander angeordneten optischen Kanälen (16a-d; 16N), wobei jeder optische Kanal (16a-d; 16N) eine Optik (64a-d) zur Abbildung zumindest eines Teilbereichs (74a-d) eines Objektbereichs (72) auf einen Bildsensorbereich (58a-d) des Bildsensors (12) aufweist;
wobei das Array (14; 14') ein Gehäuse (1002) aufweist, in dem die Optiken (64a-d) der optischen Kanäle (16a-d; 16N) angeordnet und gegeneinander fixiert sind, wobei das Gehäuse (1002) aus aneinander gefügten plattenförmigen Strukturen (1004; 1004a-b, 1006; 1006a-b) gebildet ist und zumindest eine dem Bildsensor (12) zugewandte oder abgewandte Wandstruktur (1004; 1004a-b) aufweist und zumindest eine Seitenwandstruktur (1006; 1006a-b) aufweist;
zumindest **dadurch gekennzeichnet, dass**
die Optiken (64a-d) bezüglich einer benachbarten Trennwandstruktur (1016a-c) berührungslos angeordnet oder mit einem weichen Material abgestützt sind, und bei der sich die Optiken (64a-d) bei einer thermisch induzierten Verformung entlang einer optischen Länge (1024) des optischen Kanals verformen und entlang einer Richtung (146) senkrecht zu der optischen Länge (1024) des optischen Kanals verformen, wobei jeder optische Kanal (16a-d; 16N) von der Verformung in Richtung (146) senkrecht zu der optischen Länge (1024) eines benachbarten optischen Kanals (16a-d; 16N) gering beeinflusst oder unbeeinflusst ist; oder
eine der Optiken (64a-d) eine Mehrzahl seriell angeordneter Optikelemente umfasst, die untereinander mechanisch verbunden sind, so dass die Optik entlang einer Richtung senkrecht zu einem Strahlengang (17a-d) durch die Optiken (64a-d) und entlang einer Zeilenerstreckungsrichtung (146) des Arrays (14; 14') in einem Bereich von zumindest 50% einer Länge (1024) des optischen Kanals (16a-d; 16N) entlang einer optischen Achse desselben berührungslos gegenüber anderen mechanischen Elementen angeordnet sind.

3. Multiaperturabbildungsvorrichtung gemäß Anspruch 1 oder 2, , bei der sich die Wandstruktur (1004; 1004a-b) über alle optischen Kanäle (16a-d; 16N) erstreckt und für eine Wellenlänge einer von der Multiaperturabbildungsvorrichtung zu erfassenden Strahlung transparent ausgebildet ist, wobei die optischen Kanäle (16a-d; 16N) durch ein Material der Wandstruktur (1004; 1004a-b) hindurch verlaufen.

4. Multiaperturabbildungsvorrichtung gemäß einem der vorangehenden Ansprüche, bei der die Wandstruktur (1004; 1004a-b) einstückig gebildet ist.

5. Multiaperturabbildungsvorrichtung gemäß einem der vorangehenden Ansprüche, bei der die Optiken (64a-d) der optischen Kanäle (16a-d; 16N) mit der Wandstruktur (1004; 1004a-b) mechanisch verbunden sind und bei der die Wandstruktur (1004; 1004a-b) einen transparenten Bereich (1014a-b) aus einem Wandstrukturmaterial aufweist, wobei die optischen Kanäle (16a-d; 16N) durch den transparenten Bereich (1014a-b) hin zu dem Bildsensor (12) oder hin zu dem Objektbereich (72) blicken.

6. Multiaperturabbildungsvorrichtung gemäß einem der vorangehenden Ansprüche, bei der die Wandstruktur (1004b) eine erste dem Bildsensor (12) zugewandte Wandstruktur ist, und bei der das Gehäuse (1002) eine gegenüberliegende zweite Wandstruktur (1004a) aufweist, die über die Seitenwandstruktur (1006; 1006a-b) mit der ersten Wandstruktur (1004b) verbunden ist, und bei der die Seitenwandstruktur (1006; 1006a-b) in einem Bereich, der dem Bildsensor (12) zugewandt angeordnet ist, eine optisch teilweise streuende oder teilweise absorbierende oder teilweise reflektierende Struktur (1018; 1018a-b) aufweist.

7. Multiaperturabbildungsvorrichtung gemäß einem der vorangehenden Ansprüche, bei der das Array (14; 14') Trennwandstrukturen (1016b, 1016c) umfasst, die zwischen den optischen Kanälen (16a-d; 16N) angeordnet sind und aus einem zumindest teilweise opaken Material gebildet sind, so dass eine Falschlichtunterdrückung zwischen den optischen Kanälen (16a-d; 16N) erhalten wird.

8. Multiaperturabbildungsvorrichtung gemäß einem der vorangehenden Ansprüche, bei der in dem Gehäuse (1002) zwischen den optischen Kanälen (16a-d; 16N) Trennwandstrukturen (1016a-c) angeordnet sind, wobei die Optiken (64a-d) bezüglich einer benachbarten Trennwandstruktur (1016a-c) berührungslos angeordnet sind.

9. Multiaperturabbildungsvorrichtung gemäß einem der vorangehenden Ansprüche, bei der die Wandstruktur (1004; 1004a-b) eine erste Wandstruktur (1004a) ist, und bei der ein Abstand zwischen der ersten Wandstruktur (1004) und einer gegenüberliegenden zweiten Wandstruktur (1004b) des Gehäuses (1002) über höchstens zwei Seitenwandstrukturen (1006a-b) definiert ist.

10. Multiaperturabbildungsvorrichtung gemäß einem der vorangehenden Ansprüche, bei der die Optiken (64a-d) eine erste und eine zweite optisch wirksame Hauptseite (1026) und eine erste, zweite, dritte und vierte Nebenseite (1028a-b) aufweisen, die die erste und die zweite Hauptseite (1026) mit einander verbinden, wobei die erste, zweite, dritte und vierte Nebenseite (1028a-b) im Wesentlichen senkrecht zueinander angeordnet sind.

11. Multiaperturabbildungsvorrichtung gemäß einem der vorangehenden Ansprüche mit einer Strahlumlenkeinrichtung (18), die zwischen dem Array (14; 14') und dem Objektbereich (72) angeordnet ist, und ausgebildet ist, um einen Strahlengang (17a-d) der optischen Kanäle (16a-d; 16N) umzulenken;

12. Multiaperturabbildungsvorrichtung gemäß einem der vorangehenden Ansprüche, bei der der Bildsensor (12) und die optischen Kanäle (16a-d; 16N) ein erstes Teilmodul in dem Gehäuse (1002) bilden, das ausgebildet ist, um den Objektereich (72) zu erfassen, wobei die Multiaperturabbildungsvorrichtung zumindest ein zweites Teilmodul umfasst ist, das ausgebildet ist, um den Objektereich (72) zu erfassen, und wobei das erste Teilmodul und das zumindest zweite Teilmodul in dem Gehäuse (1002) angeordnet sind und sich die Wandstruktur (1004; 1004a-b) über die optischen Kanäle (16a-d; 16N) des ersten Teilmoduls und des zweiten Teilmoduls erstreckt.

13. Abbildungssystem (20; 30; 40; 50; 60; 70; 90; 100; 140) mit::

   zumindest einer ersten und einer zweiten Multiaperturabbildungsvorrichtung gemäß einem der Ansprüche 1 bis 12, wobei die erste Multiaperturabbildungsvorrichtung und die zweite Multiaperturabbildungsvorrichtung so angeordnet sind, dass der Objektbereich zumindest stereoskopisch durch die erste Multiaperturabbildungsvorrichtung und die zweite Multiaperturabbildungsvorrichtung erfasst wird.

14. Verfahren zum Herstellen einer Multiaperturabbildungsvorrichtung (11; 150; 180; 1000; 2000; 4000; 8000) mit folgenden Schritten:

   Bereitstellen zumindest eines Bildsensors (12); und
   Anordnen von Optiken (64a-d) von optischen Kanälen (16a-d; 16N), so dass diese ein Array (14; 14') von nebeneinander angeordneten optischen Kanälen (16a-d; 16N) bilden, und so dass jeder optische Kanal (16a-d; 16N) eine Optik (64a-d) zur Abbildung zumindest eines Teilbereichs (74a-d) eines Objektbereichs (72) auf einen Bildsensorbereich (58a-d) des Bildsensors (12) aufweist, wobei das Bilden des Arrays (14; 14') folgenden Schritt umfasst:
   Anordnen der Optiken (64a-d) der optischen Kanäle (16a-d; 16N) in einem Gehäuse, so dass eine Wandstruktur (1004; 1004a-b) des Gehäuses (1002), durch die die optischen Kanäle verlaufen, dem Bildsensor (12) zugewandt oder abgewandt ist und eine an der Wandstruktur (1004; 1004a-b) angeordnete Seitenwandstruktur (1006; 1006a-b) an der Wandstruktur (1004; 1004a-b) angeordnet ist, wobei die Wandstruktur (1004; 1004a-b) oder die Seitenwandstruktur (1006; 1006a-b) umfassend Glas, Keramik, Glaskeramik oder ein kristallines Material gebildet ist, wobei die Optiken (64a-d) so angeordnet werden, dass die Wandstruktur (1004; 1004a-b) mit den Optiken (64a-d) der optischen Kanäle (16a-d; 16N) verbunden ist;

zumindest **dadurch gekennzeichnet, dass** das Anordnen so erfolgt, dass die Wandstruktur die Optiken (64a-d) gegeneinander fixiert; wobei das Anordnen der Optiken so erfolgt, dass die Optiken (64a-d) bezüglich einer benachbarten Trennwandstruktur (1016a-c) berührungslos angeordnet oder mit einem weichen Material abgestützt sind, so dass die Optiken (64a-d) bei einer thermisch induzierten Verformung entlang einer optischen Länge (1024) des optischen Kanals und entlang einer Richtung (146) senkrecht zu der optischen Länge (1024) des optischen Kanals jeder optische Kanal (16a-d; 16N) von der Verformung in Richtung (146) senkrecht zu der optischen Länge (1024) eines benachbarten optischen Kanals (16a-d; 16N) gering beeinflusst oder unbeeinflusst ist; oder

bei dem das Anordnen der Optiken so erfolgt, dass eine der Optiken (64a-d) eine Mehrzahl seriell angeordneter Optikelemente umfasst, die untereinander mechanisch verbunden sind, so dass die Optik entlang einer Richtung senkrecht zu einem Strahlengang (17a-d) durch die Optiken (64a-d) und entlang einer Zeilenerstreckungsrichtung (146) des Arrays (14; 14') in einem Bereich von zumindest 50 % einer Länge (1024) des optischen Kanals (16a-d; 16N) entlang einer optischen Achse desselben berührungslos gegenüber anderen mechanischen Elementen angeordnet sind.

15. Verfahren zum Herstellen einer Multiaperturabbildungsvorrichtung (11; 150; 180; 1000; 2000; 4000; 8000) mit folgenden Schritten:

Bereitstellen zumindest eines Bildsensors (12); und

Anordnen von Optiken (64a-d) von optischen Kanälen (16a-d; 16N), so dass diese ein Array (14; 14') von nebeneinander angeordneten optischen Kanälen (16a-d; 16N) bilden, und so dass jeder optische Kanal (16a-d; 16N) eine Optik (64a-d) zur Abbildung zumindest eines Teilbereichs (74a-d) eines Objektbereichs (72) auf einen Bildsensorbereich (58a-d) des Bildsensors (12) aufweist;

Bilden eines Gehäuses (1002) aus aneinander gefügten plattenförmigen Strukturen (1004; 1004a-b, 1006; 1006a-b), so dass das Gehäuse (1002) zumindest eine dem Bildsensor (12) zugewandte oder abgewandte Wandstruktur (1004; 1004a-b) aufweist und zumindest eine Seitenwandstruktur (1006; 1006a-b) aufweist;

und

Anordnen der Optiken (64a-d) der optischen Kanäle (16a-d; 16N) des Arrays (14; 14') in dem Gehäuse (1002), so dass die Optiken (64a-d) gegeneinander fixiert sind;

zumindest **dadurch gekennzeichnet, dass** das Anordnen der Optiken (64a-d) so ausgeführt wird, dass die Optiken (64a-d) bezüglich einer benachbarten Trennwandstruktur (1016a-c) berührungslos angeordnet oder mit einem weichen Material abgestützt sind, und dass die Optiken (64a-d) bei einer thermisch induzierten Verformung entlang einer optischen Länge (1024) des optischen Kanals und entlang einer Richtung (146) senkrecht zu der optischen Länge (1024) des optischen Kanals jeder optische Kanal (16a-d; 16N) von der Verformung in Richtung (146) senkrecht zu der optischen Länge (1024) eines benachbarten optischen Kanals (16a-d; 16N) gering beeinflusst oder unbeeinflusst ist; oder

dass das Anordnen der Optiken so erfolgt, dass eine der Optiken (64a-d) eine Mehrzahl seriell angeordneter Optikelemente umfasst, die untereinander mechanisch verbunden sind, so dass die Optik entlang einer Richtung senkrecht zu einem Strahlengang (17a-d) durch die Optiken (64a-d) und entlang einer Zeilenerstreckungsrichtung (146) des Arrays (14; 14') in einem Bereich von zumindest 50 % einer Länge (1024) des optischen Kanals (16a-d; 16N) entlang einer optischen Achse desselben berührungslos gegenüber anderen mechanischen Elementen angeordnet sind.

**Claims**

1. Multi-aperture imaging device (11; 150; 180; 1000; 2000; 4000; 8000) comprising:

at least one image sensor (12); and an array (14; 14') of juxtaposed optical channels (16a-d; 16N), wherein each optical channel comprises optics (64a-d) for projecting at least one partial area (74a-d) of an object area (72) on an image sensor area (58a-d) of the image sensor (12), the array (14; 14') comprising: a housing (1002) including a wall structure (1004; 1004a-b) facing or facing away from the image sensor (12), through which the optical channels pass, and a sidewall structure (1006; 1006a-b) arranged on the wall structure (1004; 1004a-b), wherein the wall structure (1004; 1004a-b) or the sidewall structure (1006; 1006a-b) is formed including glass, ceramic, glass ceramic or a crystalline material, wherein the optics (64a-d) of the optical channels (16a-d; 16N) are arranged in the housing (1002), and wherein the wall structure (1004; 1004a-b) is connected to optics (64a-d) of the optical channels (16a-d; 16N) and fixes the optics (64a-d) with respect to one another,

characterized at least in that the wall structure fixes the optics (64a-d) with respect to one another,

wherein the optics (64a-d) are arranged in a contact-less manner to an adjacent partition wall structure or laterally supported by a soft material; and wherein the optics (64a-d) deform during a thermally induced deformation along an optical length (1024) of the optical channel and along a direction (146) perpendicular to the optical length (1024) of the optical channel, wherein each optical channel (16a-d; 16N) is affected to a small degree or is not affected by the deformation in the direction (146) perpendicular to the optical length (1024) of an adjacent optical channel (16a-d; 16N); or

wherein one of the optics (64a-d) includes a plurality of serially arranged optics elements which are mechanically connected to one another, such that the optics are arranged along a direction perpendicular to an optical path (17a-d) through the optics (64a-d) and along a line-extension direction (146) of the array (14; 14') in an area of at least 50 % of a length (1024) of the optical channel (16a-d; 16N) along an optical axis of the same in a contactless manner with respect to other mechanical elements.

2. Multi-aperture imaging device (11; 150; 180; 1000; 2000; 4000; 8000) comprising:

at least one image sensor (12); and an array (14; 14') of juxtaposed optical channels (16a-d; 16N), wherein each optical channel (16a-d; 16N) comprises optics (64a-d) for projecting at least one partial area (74a-d) of an object area (72) on an image sensor area (58a-d) of the image sensor (12);

wherein the array (14; 14') comprises a housing (1002) in which the optics (64a-d) of the optical channels (16a-d; 16N) are arranged and fixed with respect to one another, wherein the housing (1002) is formed of juxtaposed plate-shaped structures (1004; 1004a-b, 1006; 1006a-b) and comprises at least one wall structure (1004; 1004a-b) facing or facing away from the image sensor (12) and comprises at least one sidewall structure (1006; 1006a-b);

characterized at least in that

the optics (64a-d) are arranged in a contact-less manner to an adjacent partition wall structure or laterally supported by a soft material, and wherein the optics (64a-d) deform during a thermally induced deformation along an optical length (1024) of the optical channel and along a direction (146) perpendicular to the optical length (1024) of the optical channel, wherein each optical channel (16a-d; 16N) is affected to a small degree or is not affected by the deformation in the direction (146) perpendicular to the optical length (1024) of an adjacent optical channel (16a-d; 16N); or

one of the optics (64a-d) includes a plurality of serially arranged optics elements which are mechanically connected to one another, such that the optics are arranged along a direction perpendicular to an optical path (17a-d) through the optics (64a-d) and along a line-extension direction (146) of the array (14; 14') in an area of at least 50 % of a length (1024) of the optical channel (16a-d; 16N) along an optical axis of the same in a contactless manner with respect to other mechanical elements.

3. Multi-aperture imaging device according to claim 1 or 2, wherein the wall structure (1004; 1004a-b) extends across all optical channels (16a-d; 16N) and is formed transparent for a wavelength of radiation to be captured by the multi-aperture imaging device, and wherein the optical channels (16a-d; 16N) pass through a material of the wall structure (1004; 1004a-b).

4. Multi-aperture imaging device according to any of the preceding claims, wherein the wall structure (1004; 1004a-b) is integrally formed.

5. Multi-aperture imaging device according to any of the preceding claims, wherein the optics (64a-d) of the optical channels (16a-d; 16N) are mechanically connected to the wall structure (1004; 1004a-b) and wherein the wall structure (1004; 1004a-b) comprises a transparent area (1014a-b) of a wall structure material, wherein the optical channels (16a-d; 16N) look through the transparent area (1014a-b) towards the image sensor (12) or towards the object area (72).

6. Multi-aperture imaging device according to any of the preceding claims, wherein the wall structure (1004b) is a first wall structure facing the image sensor (12) and wherein the housing (1002) comprises an opposing second wall structure (1004a) that is connected to the first wall structure (1004b) via the sidewall structure (1006; 1006a-b) and wherein the sidewall structure (1006; 1006a-b) comprises an optically partly scattering or partly absorbing or partly reflecting structure (1018; 1018a-b) in an area arranged facing the image sensor (12).

7. Multi-aperture imaging device according to any of the preceding claims, wherein the array (14; 14') comprises partition wall structures (1016b, 1016c) that are arranged between the optical channels (16a-d; 16N) and formed of an at least partly opaque material such that stray light suppression between the optical channels (16a-d; 16N) is obtained.

8. Multi-aperture imaging device according to any of the preceding claims, wherein partition wall structures (1016a-c) are arranged in the housing (1002) between the optical channels (16a-d; 16N), wherein the optics (64a-d) are arranged in a contactless manner with respect to an adjacent partition wall structure (1016a-c).

9. Multi-aperture imaging device according to any of the preceding claims, wherein the wall structure (1004; 1004a-b) is a first wall structure (1004a) and wherein the distance between the first wall structure (1004) and an opposing second wall structure (1004b) of the housing (1002) is defined across two sidewall structures (1006a-b) at most.

10. Multi-aperture imaging device according to any of the preceding claims, wherein the optics (64a-d) comprise a first and second optically effective main side (1026) and a first, second, third and fourth secondary side (1028a-b) that connect the first and second main side (1026), wherein the first, second, third and fourth secondary side (1028a-b) are arranged essentially perpendicular to one another.

11. Multi-aperture imaging device according to any of the preceding claims comprising a beam-deflecting means (18) that is arranged between the array (14; 14') and the object area (72) and that is configured to deflect an optical path (17a-d) of the optical channels (16a-d; 16N).

12. Multi-aperture imaging device according to any of the preceding claims, wherein the image sensor (12) and the optical channels (16a-d; 16N) form a first partial module in the housing (1002) that is configured to capture the object area (72), wherein the multi-aperture imaging device includes at least a second partial module that is configured to capture the object area (72), and wherein the first partial module and the at least second partial module are arranged in the housing (1002) and the wall structure (1004; 1004a-b) extends across the optical channels (16a-d; 16N) of the first partial module and the second partial module.

13. Imaging system (20; 30; 40; 50; 60; 70; 90; 100; 140) comprising:
    at least a first and a second multi-aperture imaging device according to any of claims 1 to 12, wherein the first multi-aperture imaging device and the second multi-aperture imaging device are arranged such that the object is captured at least stereoscopically by the first multi-aperture imaging device and the second multi-aperture imaging device.

14. Method for producing a multi-aperture imaging device (11; 150; 180; 1000; 2000; 4000; 8000), comprising:

    providing at least one image sensor (12); and arranging optics (64a-d) of optical channels (16a-d; 16N), such that the same form an array (14; 14') of juxtaposed optical channels (16a-d; 16N), and such that each optical channel (16a-d; 16N) comprises optics (64a-d) for projecting at least one partial area (74a-d) of an object area (72) on an image sensor area (58a-d) of the image sensor (12), wherein forming the array (14; 14') comprises:
    arranging the optics (64a-d) of the optical channels (16a-d; 16N) in a housing, such that a wall structure (1004; 1004a-b) of the housing (1002) through which the optical channels pass is facing or facing away from the image sensor (12) and a sidewall structure (1006; 1006a-b) arranged on the wall structure (1004; 1004a-b) is arranged on the wall structure (1004; 1004a-b), wherein the wall structure (1004; 1004a-b) or the sidewall structure (1006; 1006a-b) is formed including glass, ceramic, glass ceramic or a crystalline material, wherein the optics (64a-d) are arranged such that the wall structure (1004; 1004a-b) is connected to the optics (64a-d) of the optical channels (16a-d; 16N);
    characterized at least in that said arranging is effected such that the wall structure fixes the optics (64a-d) with respect to one another;
    wherein said arranging of the optics is performed such that the optics (64a-d) are arranged in a contactless manner with respect to an adjacent partition wall structure (1016a-c) or are supported by a soft material such that the optics (64a-d) deform during a thermally induced deformation along an optical length (1024) of the optical channel and along a direction (146) perpendicular to the optical length (1024) of the optical channel, wherein each optical channel (16a-d; 16N) is affected to a small degree or is not affected by the deformation in the direction (146) perpendicular to the optical length (1024) of an adjacent optical channel (16a-d; 16N); or
    wherein said arranging of the optics is performed such that one of the optics (64a-d) includes a plurality of serially arranged optics elements which are mechanically connected to one another, such that the optics are arranged along a direction perpendicular to an optical path (17a-d) through the optics (64a-d) and along a line-extension direction (146) of the array (14; 14') in an area of at least 50 % of a length (1024) of the optical channel (16a-d; 16N) along an optical axis of the same in a contactless manner with respect to other mechanical elements.

15. Method for producing a multi-aperture imaging device (11; 150; 180; 1000; 2000; 4000; 8000), comprising:

providing at least one image sensor (12); and arranging optics (64a-d) of optical channels (16a-d; 16N), such that the same form an array (14; 14') of juxtaposed optical channels (16a-d; 16N), and such that each optical channel (16a-d; 16N) comprises optics (64a-d) for projecting at least one partial area (74a-d) of an object area (72) on an image sensor area (58a-d) of the image sensor (12);

forming a housing (1002) of joined plate-shaped structures (1004; 1004a-b, 1006; 1006a-b) such that the housing (1002) comprises at least one wall structure (1004; 1004a-b) facing or facing away from the image sensor (12) and comprises at least one sidewall structure (1006; 1006a-b); and

arranging the optics (64a-d) of the optical channels (16a-d; 16N) of the array (14; 14') in the housing (1002), such that the optics (64a-d) are fixed with respect to one another;

characterized at least in that

said arranging of the optics (64a-d) is performed such that the optics (64a-d) are arranged in a contactless manner with respect to an adjacent partition wall structure (1016a-c) or are supported by a soft material such that the optics (64a-d) deform during a thermally induced deformation along an optical length (1024) of the optical channel and along a direction (146) perpendicular to the optical length (1024) of the optical channel, wherein each optical channel (16a-d; 16N) is affected to a small degree or is not affected by the deformation in the direction (146) perpendicular to the optical length (1024) of an adjacent optical channel (16a-d; 16N); or

said arranging of the optics is performed such that one of the optics (64a-d) includes a plurality of serially arranged optics elements which are mechanically connected to one another, such that the optics are arranged along a direction perpendicular to an optical path (17a-d) through the optics (64a-d) and along a line-extension direction (146) of the array (14; 14') in an area of at least 50 % of a length (1024) of the optical channel (16a-d; 16N) along an optical axis of the same in a contactless manner with respect to other mechanical elements.

## Revendications

1. Dispositif d'imagerie à plusieurs ouvertures (11; 150; 180; 1000; 2000; 4000; 8000) avec:

au moins un capteur d'image (12); et un réseau (14; 14') de canaux optiques (16a à d; 16N) disposés l'un à côté de l'autre, chaque canal optique présentant une optique (64a à d) destinée à reproduire au moins une zone partielle (74a à d) d'une zone d'objet (72) sur une zone (58a à d) du capteur d'image (12), où le réseau (14; 14') présente ce qui suit:

un boîtier (1002) comportant une structure de paroi (1004; 1004a-b) orientée vers ou opposée au capteur d'image (12) à travers laquelle s'étendent les canaux optiques, et une structure de paroi latérale (1006; 1006a-b) disposée sur la structure de paroi (1004; 1004a-b), où la structure de paroi (1004; 1004a-b) ou la structure de paroi latérale (1006; 1006a-b) est réalisée en verre, en céramique, en vitrocéramique ou en un matériau cristallin, où dans le boîtier (1002) sont disposées les optiques (64a à d) des canaux optiques (16a à d; 16N), et où la structure de paroi (1004; 1004a à b) est connectée aux optiques (64a à d) des canaux optiques (16a à d; 16N),

caractérisé au moins par le fait que la structure de paroi fixe les optiques (64a à d) l'une contre l'autre;

dans lequel les optiques (64a à d) sont disposées sans contact par rapport à une structure de paroi de séparation adjacente (1016a à c) ou sont supportées par un matériau souple, et dans lequel les optiques (64a à d) se déforment en cas de déformation induite de manière thermique sur une longueur optique (1024) du canal optique et se déforment dans une direction (146) perpendiculaire à la longueur optique (1024) du canal optique, dans lequel chaque canal optique (16a à d; 16N) est légèrement influencé ou non influencé par la déformation dans la direction (146) perpendiculaire à la longueur optique (1024) d'un canal optique adjacent (16a à d; 16N); ou

dans lequel l'une des optiques (64a à d) comporte une pluralité d'éléments optiques disposés en série qui sont connectés mécaniquement l'un à l'autre de sorte que l'optique soit disposée dans une direction perpendiculaire à un trajet de faisceau (17a à d) à travers les optiques (64a à d) et dans une direction d'extension de rangées (146) du réseau (14; 14') dans une zone d'au moins 50% d'une longueur (1024) du canal optique (16a à d; 16N) le long d'un axe optique de ce dernier sans contact avec d'autres éléments mécaniques.

**2.** Dispositif d'imagerie à ouvertures multiples (11; 150; 180; 1000; 2000; 4000; 8000) avec:

au moins un capteur d'image (12); et
un réseau (14; 14') de canaux optiques (16a à d; 16N) disposés l'un à côté de l'autre, où chaque canal optique (16a à d; 16N) présente une optique (64a à d) destinée à reproduire au moins une zone partielle (74a à d) d'une zone d'objet (72) sur une zone (58a à d) du capteur d'image (12);
dans lequel le réseau (14; 14') présente un boîtier (1002) dans lequel sont disposées et fixées l'une contre l'autre les optiques (64a à d) des canaux optiques (16a à d; 16N), dans lequel le boîtier (1002) est formé à partir de structures en forme de plaque (1004; 1004a-b, 1006; 1006a-b) assemblées l'une à l'autre et présente au moins une structure de paroi (1004; 1004a-b) orientée vers ou opposée au capteur d'image (12) et présente au moins une structure de paroi latérale (1006; 1006a-b);
caractérisé au moins par le fait que
les optiques (64a à d) sont disposées sans contact par rapport à une structure de paroi de séparation adjacente (1016a à c) ou sont supportées par un matériau souple, et où les optiques (64a à d) se déforment en cas de déformation induite de manière thermique sur une longueur optique (1024) du canal optique et se déforment dans une direction (146) perpendiculaire à la longueur optique (1024) du canal optique, où chaque canal optique (16a à d; 16N) est légèrement influencé ou non influencé par la déformation dans la direction (146) perpendiculaire à la longueur optique (1024) d'un canal optique adjacent (16a à d; 16N); ou
l'une des optiques (64a à d) comporte une pluralité d'éléments optiques disposés en série qui sont connectés mécaniquement l'un à l'autre de sorte que l'optique soit disposée dans une direction perpendiculaire à un trajet de faisceau (17a à d) à travers les optiques (64a à d) et dans une direction d'extension de rangées (146) du réseau (14; 14') dans une zone d'au moins 50% d'une longueur (1024) du canal optique (16a à d; 16N) le long d'un axe optique de ce dernier sans contact avec d'autres éléments mécaniques.

**3.** Dispositif d'imagerie à ouvertures multiples selon la revendication 1 ou 2, dans lequel la structure de paroi (1004; 1004a-b) s'étend sur tous les canaux optiques (16a à d; 16N) et est réalisée transparente pour une longueur d'onde d'un rayonnement à détecter par le dispositif d'imagerie à ouvertures multiples, dans lequel les canaux optiques (16a à d; 16N) s'étendent à travers un matériau de la structure de paroi (1004; 1004a-b).

**4.** Dispositif d'imagerie à ouvertures multiples selon l'une des revendications précédentes, dans lequel la structure de paroi (1004; 1004a-b) est formée d'une seule pièce.

**5.** Dispositif d'imagerie à ouvertures multiples selon l'une des revendications précédentes, dans lequel les optiques (64a à d) des canaux optiques (16a à d; 16N) sont connectées mécaniquement à la structure de paroi (1004; 1004a-b) et dans lequel la structure de paroi (1004; 1004a-b) présente une zone transparente (1014a-b) réalisée en un matériau de structure de paroi, dans lequel les canaux optiques (16a à d; 16N) regardant à travers la région transparente (1014a-b) vers le capteur d'image (12) ou vers la zone d'objet (72).

**6.** Dispositif d'imagerie à ouvertures multiples selon l'une des revendications précédentes, dans lequel la structure de paroi (1004b) est une première structure de paroi orientée vers le capteur d'image (12), et dans lequel le boîtier (1002) présente une deuxième structure de paroi opposée (1004a) qui est connectée à la première structure de paroi (1004b) par l'intermédiaire de la structure de paroi latérale (1006; 1006a-b), et dans lequel la structure de paroi latérale (1006; 1006a-b) présente, dans une zone qui est disposée orientée vers le capteur d'image (12), une structure optiquement partiellement diffusante ou partiellement absorbante ou partiellement réfléchissante (1018; 1018a-b).

**7.** Dispositif d'imagerie à ouvertures multiples selon l'une des revendications précédentes, dans lequel le réseau (14; 14') comporte des structures de paroi de séparation (1016b, 1016c) qui sont disposées entre les canaux optiques (16a à d; 16N) et sont réalisées en un matériau au moins partiellement opaque, de sorte que soit obtenue une suppression de lumière parasite entre les canaux optiques (16a à d; 16N).

**8.** Dispositif d'imagerie à ouvertures multiples selon l'une des revendications précédentes, dans lequel des structures de paroi de séparation (1016a à c) sont disposées dans le boîtier (1002) entre les canaux optiques (16a à d; 16N), dans lequel les optiques (64a à d) sont disposées sans contact par rapport à une structure de séparation (1016a à c) adjacente.

**9.** Dispositif d'imagerie à ouvertures multiples selon l'une des revendications précédentes, dans lequel la structure de paroi (1004; 1004a-b) est une première structure de paroi (1004a), et dans lequel une distance entre la première structure de paroi (1004) et une deuxième structure de paroi opposée (1004b) du boîtier (1002) est définie par tout au plus deux structures de paroi latérale (1006a-b).

10. Dispositif d'imagerie à ouvertures multiples selon l'une des revendications précédentes, dans lequel les optiques (64a à d) présentent une première et une deuxième face principale optiquement actives (1026) et une première, une deuxième, une troisième et une quatrième face auxiliaire (1028a-b) qui connectent la première et la deuxième face principale (1026) l'une à l'autre, dans lequel la première, la deuxième, la troisième et la quatrième face auxiliaire (1028a-b) sont disposées sensiblement perpendiculaires l'une à l'autre.

11. Dispositif d'imagerie à ouvertures multiples selon l'une des revendications précédentes, avec un dispositif de déviation de faisceau (18) qui est disposé entre le réseau (14; 14') et la zone d'objet (72) et est conçu pour dévier un trajet de faisceau (17a à d) des canaux optiques (16a à d; 16N).

12. Dispositif d'imagerie à ouvertures multiples selon l'une des revendications précédentes, dans lequel le capteur d'image (12) et les canaux optiques (16a à d; 16N) forment un premier module partiel dans le boîtier (1002) qui est conçu pour détecter la zone d'objet (72), dans lequel le dispositif d'imagerie à ouvertures multiples comporte au moins un deuxième module partiel qui est conçu pour détecter la zone d'objet (72), et dans lequel le premier module partiel et l'au moins un deuxième module partiel sont disposés dans le boîtier (1002) et la structure de paroi (1004; 1004a-b) s'étend sur les canaux optiques (16a à d; 16N) du premier module partiel et du deuxième module partiel.

13. Système d'imagerie (20; 30; 40; 50; 60; 70; 90; 100; 140) avec:
au moins un premier et un deuxième dispositif d'imagerie à ouvertures multiples selon l'une des revendications 1 à 12, où le premier dispositif d'imagerie à ouvertures multiples et le deuxième dispositif d'imagerie à ouvertures multiples sont disposés de sorte que la zone d'objet soit détectée au moins de manière stéréoscopique par le premier dispositif d'imagerie à ouvertures multiples et le deuxième dispositif d'imagerie à ouvertures multiples.

14. Procédé de fabrication d'un dispositif d'imagerie à ouvertures multiples (11; 150; 180; 1000; 2000; 4000; 8000) aux étapes suivantes consistant à:

mettre à disposition au moins un capteur d'image (12); et
disposer des optiques (64a à d) de canaux optiques (16a à d; 16N) de sorte qu'elles forment un réseau (14; 14') de canaux optiques (16a à d; 16N) disposés adjacents l'un à l'autre et de sorte que chaque canal optique (16a à d; 16N) comporte une optique (64a à d) destinée à reproduire au moins une zone partielle (74a à d) d'une zone d'objet (72) sur une zone (58a à d) du capteur d'image (12), où la formation du réseau (14; 14') comporte l'étape suivante consistant à:
disposer les optiques (64a à d) des canaux optiques (16a à d; 16N) dans un boîtier, de sorte qu'une structure de paroi (1004; 1004a-b) du boîtier (1002) à travers laquelle s'étendent les canaux optiques soit orientée vers ou opposée au capteur d'image (12) et qu'une structure de paroi latérale (1006; 1006a-b) disposée sur la structure de paroi (1004; 1004a-b) soit disposée sur la structure de paroi (1004; 1004a-b), où la structure de paroi (1004; 1004a-b) ou la structure de paroi latérale (1006; 1006a-b) est réalisée en verre, en céramique, en vitrocéramique ou en un matériau cristallin, où les optiques (64a à d) sont disposées de sorte que la structure de paroi (1004; 1004a-b) soit connectée aux optiques (64a à d) des canaux optiques (16a à d; 16N);
au moins **caractérisé par le fait que** la disposition a lieu de sorte que la structure de paroi fixe les optiques (64a à d) l'une contre l'autre;
dans lequel la disposition des optiques a lieu de sorte que les optiques (64a à d) soient disposées sans contact par rapport à une structure de paroi de séparation adjacente (1016a à c) ou soient supportées par un matériau souple, de sorte que les optiques (64a à d) se déforment en cas de déformation induite de manière thermique sur une longueur optique (1024) du canal optique et dans une direction (146) perpendiculaire à la longueur optique (1024) du canal optique, où chaque canal optique (16a à d; 16N) est légèrement influencé ou non influencé par la déformation dans la direction (146) perpendiculaire à la longueur optique (1024) d'un canal optique adjacent (16a à d; 16N); ou
dans lequel la disposition des optiques a lieu de sorte que l'une des optiques (64a à d) comporte une pluralité d'éléments optiques disposés en série qui sont connectés mécaniquement l'un à l'autre de sorte que l'optique soit disposée dans une direction perpendiculaire à un trajet de faisceau (17a à d) à travers les optiques (64a à d) et dans une direction d'extension de rangées (146) du réseau (14; 14') dans une zone d'au moins 50% d'une longueur (1024) du canal optique (16a à d; 16N) le long d'un axe optique de ce dernier sans contact avec d'autres éléments mécaniques.

15. Procédé de fabrication d'un dispositif d'imagerie à ouvertures multiples (11; 150; 180; 1000; 2000; 4000; 8000) aux étapes suivantes consistant à:

mettre à disposition au moins un capteur d'image (12); et

disposer les optiques (64a à d) des canaux optiques (16a à d; 16N) de sorte qu'ils forment un réseau (14; 14') de canaux optiques (16a à d; 16N) disposés l'un à côté de l'autre, et de sorte que chaque canal optique (16a à d; 16N) présente une optique (64a à d) destinée à reproduire au moins une zone partielle (74a à d) d'une zone d'objet (72) sur une zone (58a à d) du capteur d'image (12);

former un boîtier (1002) à partir de structures en forme de plaque (1004; 1004a-b, 1006; 1006a-b) assemblées l'une à l'autre de sorte que le boîtier (1002) présente au moins une structure de paroi (1004; 1004a-b)

orientée vers ou opposée au capteur d'image (12) et présente au moins une structure de paroi latérale (1006; 1006a-b); et

disposer les optiques (64a à d) des canaux optiques (16a à d; 16N) du réseau (14; 14') dans le boîtier (1002) de sorte que les optiques (64a à d) soient fixées l'une contre l'autre;

caractérisé au moins par le fait que

la disposition des optiques (64a à d) est réalisée de sorte que les optiques (64a à d) soient disposées sans contact par rapport à une structure de paroi de séparation adjacente (1016a à c) ou soient supportées par un matériau souple, et que les optiques (64a à d) se déforment en cas de déformation induite de manière thermique sur une longueur optique (1024) du canal optique et dans une direction (146) perpendiculaire à la longueur optique (1024) du canal optique, où chaque canal optique (16a à d; 16N) est légèrement influencé ou non influencé par la déformation dans la direction (146) perpendiculaire à la longueur optique (1024) d'un canal optique adjacent (16a à d; 16N); ou

la disposition des optiques (64a à d) a lieu de sorte que l'une des optiques (64a à d) comporte une pluralité d'éléments optiques disposés en série qui sont connectés mécaniquement l'un à l'autre de sorte que l'optique soit disposée dans une direction perpendiculaire à un trajet de faisceau (17a à d) à travers les optiques (64a à d) et dans une direction d'extension de rangées (146) du réseau (14; 14') dans une zone d'au moins 50% d'une longueur (1024) du canal optique (16a à d; 16N) le long d'un axe optique de ce dernier sans contact avec d'autres éléments mécaniques.

Fig. 1

EP 3 403 393 B1

2000

Fig. 2

Fig. 3

EP 3 403 393 B1

Fig. 4a

Fig. 4b

EP 3 403 393 B1

1006

Fig. 5a

Fig. 5b

Fig. 5c

Fig. 5d

EP 3 403 393 B1

Fig. 5e

EP 3 403 393 B1

Fig. 6

Fig. 7a

Fig. 7b

EP 3 403 393 B1

Fig. 8

EP 3 403 393 B1

**10**

**26**

**24** **11** **22** **23**

**28**

**25**

**32**

**23**

**12** **14 16** **18**

## Fig. 9a

**10**

**26**

**22** **24**

**18**

**12** **14 16 17**

**28**

## Fig. 9b

Fig. 10a

Fig. 10b

Fig. 10c

Fig. 11a

Fig. 11b

Fig. 11c

Fig. 12a

Fig. 12b

EP 3 403 393 B1

50

22a

35
33' (optional)

47
32

22b    33 (optional)    34

Fig. 13a

22a    16    24

47    42

22b    32

34

Fig. 13b

17    B

47    B>A

12    A

46

y

x

16    64a    64b

Fig. 13c

22a   36a   60

16b

12

16a

32

24

18

42

36b  22b

**Fig. 14a**

y

x

22a   36a   60

16b

12

16a

32

24

42

18

36b  22b

**Fig. 14b**

Fig. 14c

Fig. 14d

Fig. 15

Fig. 16

EP 3 403 393 B1

Fig. 17

EP 3 403 393 B1

Fig. 18a

Fig. 18b

100

22

32

22c

Fig. 18c

Fig. 19a

Fig. 19b

EP 3 403 393 B1

Fig. 19c

Fig. 19d

Fig. 19e

Fig. 19f

**Fig. 20**

EP 3 403 393 B1

130

Fig. 21a

Fig. 21b

EP 3 403 393 B1

Fig. 22

Fig. 23a

Fig. 23b

Fig. 23e

Fig. 23c

Fig. 23d

Fig. 24a

Fig. 24b

Fig. 25

Fig. 26

FIG 27

508a

508b

FIG 28

Fig. 29

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140111650 A1
- JP 2005109622 A
- WO 2014168586 A1
- US 20100328471 A1
- DE 102014213371 B3
- US 2014111650 A1
- US 2015109468 A1
- DE 102013209819 A1

**In der Beschreibung aufgeführte Nicht-Patentliteratur**

- **WIPPERMANN et al.** Novel multi-aperture approach for miniaturized imaging systems. *SPIE - International Society for Optical Engineering, Proceedings,* 15. Marz 2016, vol. 9760